(19)

**Europäisches Patentamt**
**European Patent Office**
**Office européen des brevets**

(11)  **EP 4 656 521 A1**

(12)  # EUROPEAN PATENT APPLICATION

(43) Date of publication:
03.12.2025  Bulletin 2025/49

(21) Application number: 24179448.6

(22) Date of filing: 01.06.2024

(51) International Patent Classification (IPC):
**B64D 25/00** (2006.01)    **B60L 58/12** (2019.01)
**B64D 27/33** (2024.01)    **B64D 31/18** (2024.01)
**B64D 35/022** (2025.01)    **G05D 1/85** (2024.01)
**B64D 45/00** (2006.01)

(52) Cooperative Patent Classification (CPC):
**B64D 31/18; B60L 58/12; B64D 25/00;**
**B64D 27/33; B64D 35/022; G05D 1/852;**
B64D 2045/0085

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Coöperatie Elysian Aircraft Company U.A.**
**3641 SK Mijdrecht (NL)**

(72) Inventors:
• WOLLESWINKEL, Robert Eduard
3054 CK Rotterdam (NL)
• DE VRIES, Reynard
2611 RJ Delft (NL)

(74) Representative: **Wellburn, Daniel et al**
**Kilburn & Strode LLP**
**Lacon London**
**84 Theobalds Road**
**London WC1X 8NL (GB)**

(54)  **RESERVE ENERGY SYSTEM AND OPERATION THEREOF**

(57)  A control system for an aircraft, the aircraft comprising: two or more propulsors; two or more electric motors, each electric motor configured to drive a corresponding propulsor; a primary energy system comprising a rechargeable battery arranged to power the two or more electric motors; and a reserve energy system comprising two or more combustion engines and two or more generators arranged to power the two or more electric motors. The control system is configured to initiate operation of the reserve energy system when a go-around procedure has been initiated only if a state of charge determined at the point of initiation of the go-around procedure is lower than an upper threshold SoC

Figure 6a

Processed by Luminess, 75001 PARIS (FR)

EP 4 656 521 A1

**Description**

**FIELD**

The present disclosure relates to reserve energy systems for electric aircraft, flight control systems for electric aircraft comprising such reserve energy systems, electric aircraft having a reserve energy system and flight control system, methods of operation of reserve energy systems for electric aircraft, methods of operation of flight control systems for electric aircraft comprising such reserve energy systems, and methods of control of electric aircraft having a reserve energy system and flight control system.

**BACKGROUND**

Aircraft are required to carry reserve energy during normal operations to be able to cope with unexpected developments, such as adverse weather, airport closure, congestion, etc. These kinds of developments can result in the need for the aircraft to make use of reserve energy. Over the lifetime of the aircraft, the reserve energy is hardly ever used. Nevertheless, carrying sufficient reserve energy is imperative to meet aircraft safety regulations. The aviation authorities have established rules for the amount of fuel/energy that must be taken on board as reserve for each individual flight. These regulations are complex, however, in most cases the required reserve fuel/energy includes (see also EASA Rules for Air Operations CAT OP MPA 180 and 181):

1. Contingency reserve (5% of the planned trip fuel)
2. Diversion reserve (fuel/energy required for the flight from the decision point close to the runway at the destination airfield to the alternate airfield)
3. Loiter or Holding reserve (fuel/energy to stay for a given time as specified by the certifying authority (e.g., 30 or 45 minutes) in a holding pattern at a given altitude specified by the certifying authority (e.g. 1500 ft) above the alternate airport)

Current fossil fuel aircraft meet these reserve requirements simply by taking extra fuel on board. These aircraft do not possess a separate reserve energy *system.* Theoretically speaking, battery-electric aircraft could also meet reserve requirements through extra energy available in the batteries. However, the relatively low energy densities of even state-of-the-art rechargeable batteries compared with hydrocarbon-based fuels means that carrying reserve energy in rechargeable batteries would be relatively heavy in order to meet the reserve energy requirements. Furthermore, for rechargeable battery-electric aircraft, the maximum range (i.e., without considering any reserves) is typically restricted to short or medium distances (typically up to around 1000 km) and the range to be covered by the reserve energy could be up to 300-400 km or more. The range requirement for reserve energy would therefore be large relative to the range for the planned flight between origin and destination. In other words, if a battery-electric aircraft carried its required reserve energy in batteries, it would inevitably carry a large amount of 'dead weight' on every flight. This would either significantly reduce the maximum nominal range between origin and destination or significantly increase aircraft weight and energy consumption per passenger-kilometer. Thus, reserve energy is essential but could be costly in terms of additional weight and reduced range for rechargeable battery-electric aircraft.

Alternatively, for a battery-electric aircraft, one can consider carrying the required reserve energy in a separate *system,* with a significantly lower weight. Aircraft range and efficiency can be further improved by optimizing such systems and their operation.

**SUMMARY**

This summary is provided to introduce in simplified form a selection of concepts that are further described herein. The summary is not necessarily intended to identify key or essential features of the invention.

The present disclosure seeks to address the above problems and related problems.

There is provided a control system for an aircraft, the aircraft comprising: two or more propulsors; two or more electric motors, each electric motor configured to drive a corresponding propulsor; a primary energy system comprising a rechargeable battery arranged to power the two or more electric motors; and a reserve energy system comprising two or more combustion engines and two or more generators arranged to power the two or more electric motors. The control system is configured to initiate operation of the reserve energy system when a go-around procedure has been initiated only if a state of charge determined at the point of initiation of the go-around procedure is lower than an upper threshold SoC.

There is also provided a method of controlling an aircraft, the aircraft comprising: two or more propulsors; two or more electric motors, each electric motor configured to drive a corresponding propulsor; a primary energy system comprising a rechargeable battery arranged to power the two or more electric motors; and a reserve energy system comprising two or more combustion engines and two or more generators arranged to power the two or more electric motors. The method comprises: determining a state of charge of the rechargeable battery at the point of initiation of a go-around procedure; and initiating operation of the reserve energy system when a go-around procedure has been initiated only if the state of charge determined at the point of initiation of the go-around procedure is lower than an upper threshold SoC.

## BRIEF DESCRIPTION OF THE DRAWINGS

The following description will be better understood when read in conjunction with the appended drawings. It should be understood, however, that the disclosure is not limited to the precise reserve energy systems, the methods of operation thereof, the electric aircraft or the methods of control thereof. The following description is provided to disclose, for each of the above general concepts, at least one specific implementation thereof. In the drawings:

Figure 1 shows a hybrid energy system for an electric aircraft;
Figure 2 shows a pilot interface for an electric aircraft and connection to the hybrid energy system of Figure 1;
Figure 3 shows a user interface in the form of a flight director display/ attitude indicator;
Figure 4 shows a plot illustrating discharge curves for a battery at various life stages;
Figure 5 shows a schematic of a rechargeable battery marked with various levels of state of charge;
Figures 6a and 6b each show a first model procedure for calculating a critical reserve state of charge according to implementations;
Figure 7 shows a first and second flight path for a procedure including go-around, missed approach, diversion to a destination alternate, and loiter and landing at the destination alternate airport;
Figures 8a and 8b each show a plot illustrating power and state of charge vs altitude for a climb to cruise altitude according to implementations; and
Figure 9 provides an overview of concepts of the present disclosure and the relationship therebetween.

## OVERVIEW

In the following passages, a high-level overview of various aspects of the invention is provided including an introduction to concepts that are further described in the Detailed Description section. This Overview is not intended to identify key, required, or essential features of the claimed subject matter, nor is it intended to be used in isolation to determine the scope of the claimed subject matter. Nevertheless, definitions of some terms and concepts provided in the Overview section are to be understood to apply to the same terms used throughout the present disclosure. The subject matter should be understood by reference to appropriate portions of the entire specification of this patent, to any or all drawings, and to each claim. This Overview is not intended to be limiting and various modifications and variants of the described methods, systems and apparatuses are encompassed in addition to those described.

### *Factors affecting rechargeable battery aircraft design*

The ability to quickly and easily replenish depleted energy supplies between flights is crucial to commercial electric aircraft operation. Hence, rechargeable batteries are an attractive energy source. Meanwhile, weight reduction is a crucial factor in increasing electric aircraft range.

It can be highly beneficial to use a different, lighter system for reserves. At the same time, the primary driver for the development of electric aircraft is the reduction of emissions compared with conventional fuel-based aircraft.

Weight reduction and preserving the ease and lowering the cost of replenishing energy supplies for electric aircraft are design considerations that can be diametrically opposed to each other and to other design considerations. It is possible to reduce weight in electric aircraft by increasing the energy density of the electrical energy source, for example using metal-air batteries. However, the use of such batteries makes replenishment of energy supplies complex or expensive at least in part because such batteries are not easily rechargeable and rechargeability of such batteries in situ in the aircraft is a problem that remains to be adequately addressed. Electric aircraft having batteries which are rechargeable in situ in the aircraft allow for continual operation while reducing cost and complexity of replenishment of the energy supplies. However, achievable energy densities for such rechargeable batteries means that, for the same battery capacity, weight is increased as compared with the use of other battery types such as metal-air batteries.

Aircraft regulations for commercial aircraft include the need for reserve energy. Aircraft design and management of energy supplies in the aircraft therefore must account for energy required to reach the intended destination, including any additional energy required for unexpected route changes and headwinds (contingency reserve, most of the time 5% of the calculated trip energy), alternate reserve (the energy required to fly a go-around and fly to a destination alternate) and final reserve, the energy required to fly a holding pattern for a given time as specified by the certifying authority (e.g. at least 30 minutes or even lower). Determining specific reserve energy requirements requires reserve calculations prior to each flight. The specific reserve requirements differ between different aircraft and flight plans. Since situations necessitating the use of reserve energy are rare, reserve energy supplies are typically used only rarely and the inventors have recognised that the need to ease, simplify or reduce the cost of replenishment of the reserve energy supplies is comparatively less important and/or influential than for the primary energy supplies. To put it in other words, the inventors have realised that the figure of merit for reserve energy is weight. It should be as light as possible (while, of course, providing the required performance in case of necessity).

The energy required for reserves can represent a significant fraction of the total energy carried on board an aircraft. For example, for battery-electric large passenger aircraft, which are currently envisioned for trips below 1000 km, the energy required for reserves is comparable to the energy required to cover an additional 300 - 400 km. Carrying this large amount of energy in the form of batteries is extremely inefficient and increases the mass of the aircraft. Therefore, the conventional use of rechargeable batteries as the (only) reserve energy system can be detrimental to aircraft design and/or performance.

### Aircraft having a rechargeable battery system and reserve energy system

It can be beneficial to use a different, lighter system for reserves. This system is referred to as a "reserve energy system". The term "reserve energy system" therefore does not explicitly refer to a device that enhances the nominal mission range (while it may also be used for that purpose, that application is not discussed here). Since the reserve energy system is barely used, it does not matter if it's inefficient - as long as its total weight as a fraction of the Maximum Take Off Weight is minimal, as mentioned above (weight is the figure of merit for a reserve energy system).

The aircraft and methods of control of aircraft in the present disclosure are based on an electric aircraft having a rechargeable-battery-based primary energy system and a combustible-fuel-based reserve energy system. This type of electric aircraft can address the conflicting needs of reducing emissions, saving weight (due to the relatively high energy density of fuel compared with that of rechargeable batteries) and ease of replenishment of the energy supplies *in situ* (which is simple using conventional re-fuelling systems and methods for fuel-based aircraft). The primary energy needs for the planned flight from origin to destination for this type of aircraft can be met by the rechargeable batteries and the corresponding reserve energy needs can be met by the combustible fuel.

Separate energy systems are used to make use of the rechargeable battery energy and the combustible fuel energy. Such systems may be referred to as rechargeable battery (energy) systems and reserve energy systems or RES (which are also referred to in the present disclosure as fuel-based energy systems, by way of definition), respectively.

The proposed reserve energy system as a fuel-based energy system includes at least the following components:

1. Two or more combustion engines
2. Two or more generators
3. Fuel and fuel system

The rechargeable battery system typically provides electrical power from the batteries to the motors directly. The combustion engines provide mechanical power to generators. The generators in turn provide electrical power to the motors. The generators can also be used to recharge the batteries. Although a fuel-based energy system has increased emissions per pax km compared with a battery system, in an aircraft which uses the fuel-based energy system for reserves only (and hence rarely), the increase in emissions compared with an all-electric aircraft are insignificant (or at most relatively low) over the lifetime of operation of the aircraft.

### A comparative example aircraft

In a comparative example aircraft, a rechargeable battery energy system can be used to meet all energy needs during normal flight and a reserve energy system or RES (i.e., a fuel-based energy system) can be used for reserves, i.e. in case of exceptional developments. When the RES is used alone, it must supply at least a minimum power output required for a given climb angle and must be able to maintain this climb angle for the length of time required to reach a required altitude. The required altitude and required climb angle are determined by the most critical flight procedures for which the aircraft is certified, for the parts of the flight during which the RES will be used.

Aircraft safety regulations relating to system redundancies may require for this aircraft that this minimum power must be met in a failed state of the fuel-based energy system in which one of the generators and/or one of the combustion engines is not operational. Since the mass of the fuel-based energy system is proportional to its maximum continuous power output in failed state, the fuel-based energy system must be of a minimum mass to meet the minimum power output required to operate the aircraft using only the fuel-based energy system.

The inventors have recognised that sizing the RES of such an aircraft to provide no more than this minimum power can reduce the mass of the aircraft by minimising the mass of the fuel-based energy system.

Further weight savings are proposed by undersizing the RES to provide even less power than this minimum power. This can be achieved by supplementing the RES power in some portions of the flight path with battery energy, sometimes beyond the normally recommended discharge amount. Intelligent power management can assist with ensuring this system is able to meet the minimum requirements for flight by, for example, allowing the RES to charge the battery during some portions of the flight path.

Alternatively, or in addition, weight saving can be provided by use of flight procedures to direct the aircraft along a flight path which depends on the operational status of the RES. Workload on the aircraft crew can also be lowered by use of these flight procedures.

Alternatively, or in addition, initiation of operation of the RES for certain procedures such as go-around can be restricted to when the battery is discharged below a certain threshold minimum amount, thus saving unnecessary usage of the RES.

Further additional or alternative weight-saving energy systems and methods of operation of these systems and/or an aircraft having these systems are described in the present disclosure.

### Definitions of flight procedures

European Union Aviation Safety Agency (EASA) defines three types of flight procedures (EASA CS 25, AMC 25.1581):

**Normal:** A procedure associated with systems that are functioning in their usual manner.

**Abnormal or Non-normal:** A procedure requiring flight crew action, due to failure of a system or component, to maintain an acceptable level of airworthiness for continued safe flight and landing.

**Emergency:** A procedure requiring immediate flight crew action to protect the aircraft and occupants from serious harm.

The certified Aircraft Flight Manual must contain detailed descriptions of each of the procedures, e.g., normal procedures for engine start, for taxi, for take-off, for go around, etc., abnormal procedures for e.g., loss of one air data computer, loss of avionics screen, etc. and emergency procedures like engine failure after takeoff, oil pressure failure, etc.

With regard to the battery energy and reserve energy system of an aircraft based on the comparative example aircraft described above, the following specific procedures can be distinguished:

- Normal procedures for battery (only) powered flight (including, for example, startup, taxi, take-off, climb, cruise, descent, holding, landing, go-around).
- Normal procedures for RES powered flight, where the RES is fully operational (including, for example, go around, climb, cruise, descent, holding, landing, taxi).
- Abnormal procedures for RES powered flight, where the RES is only partly operational (including, for example, go around, climb, cruise, descent, holding, landing, taxi). As will be described, the methods, aircraft and controls systems of the present disclosure can include the use of battery power in addition to RES power for these procedures.

For the purposes of the present disclosure, it is also convenient to define a go-around (GA) procedure and types thereof. This includes what is referred to in the art as a standard missed-approach procedure. The GA procedure includes a go-around and missed-approach procedure initiated during approach or attempted landing at an original target destination. For convenience, two types of GA procedure are defined herein. The first is a local go-around and missed-approach, which for convenience is labelled an L-GAMA procedure in the present disclosure. The second is a go-around and missed-approach including diversion to a destination alternate, which for convenience we label a GAMADA procedure in the present disclosure. In both an L-GAMA and GAMADA procedure, go-around and missed-approach (GAMA) includes pulling out of the approach or attempted landing and climbing to acceleration altitude. Following the GAMA procedure, the L-GAMA procedure includes circling around and reapproaching the original destination airport, whereas the GAMADA procedure includes a diversion to a destination alternate (DA), which includes climbing to cruise altitude, cruising at the cruise altitude and then descending to the destination alternate, optionally additional loiter up to a maximum time specified by the certifying authorities (e.g. 30 minutes) at the destination alternate at an altitude specified by the certifying authorities (e.g. 1500 ft), and landing and taxi at the destination alternate. The L-GAMA and GAMADA procedures are described in further detail in the detailed description.

Both the L-GAMA and GAMADA procedures can be followed as a normal procedure for battery powered flight, a normal procedure for RES powered flight or an abnormal procedure for RES powered flight.

It may be understood that there are many other normal and abnormal procedures related to energy management (e.g., abnormal procedures for battery powered flight when one of the battery packs is inoperative). However, discussion of procedures in the present disclosure is primarily directed to 'normal procedures for battery powered flight', 'normal procedures for RES powered flight' and 'abnormal procedures for RES powered flight' as defined herein.

Typically, the classification of abnormal vs emergency procedure must be approved by aviation authorities such as EASA. Aviation authorities may consider procedures related to RES failure as emergency procedures. However, in the present disclosure, the categorization of abnormal vs emergency by the aviation authorities is not relevant. 'Abnormal procedures for RES powered flight' within the meaning of the present disclosure will not be considered a 'normal procedure' within the definitions applied by aviation authorities. In the present disclosure, we define use of the RES in partially operational state (i.e., failed state, e.g., one engine or one generator inoperative) as 'Abnormal procedures for RES powered flight', and this is intended to encompass use of the RES in partially operational state whether this will be classified by aviation authorities as an emergency procedure or an abnormal procedure.

### Flight path based on the state of the RES

The inventors have also recognised that improvements to electric aircraft, such as that described under the heading 'a comparative example aircraft' in the present disclosure, can be made by causing operations during procedures for RES powered flight to be based on the operational state of the RES.

An example of this is operating the aircraft during go-around and subsequent diversion to a destination alternate airport as per the GAMADA procedure described herein. For example, following initiation of go-around, the method of control of the aircraft includes adoption of a different flight path for the diversion to a destination alternate when a failed state of the RES is detected.

The flight path for diversion to a destination alternate is typically dictated at least in part by the geography between the original airport destination and the destination alternate. The flight path between the original (target) destination and the destination alternate includes a cruise height and a gradient of climb between the initiation of the go-around procedure and the cruise height. The cruise height can include a normal cruise height for diversion or a reduced or minimum cruise height which can be used during abnormal procedures for RES powered flight in which the fuel-based energy system is operating in failed state. Alternatively, or in addition, the climb gradient can include a normal climb gradient for use during normal procedures for RES powered flight or a reduced or minimum climb gradient which can be used during the abnormal procedures for RES powered flight. The climb gradient is achieved by setting the pitch (or more generally attitude) of the aircraft. That is, the GAMADA procedure can be adapted based on the operational state of the RES.

In an aircraft, the flight path can be controlled (and/or dictated to aircraft crew) by a flight director (a form of user interface). The flight director provides a required attitude of the aircraft to follow a required flight vector to execute a current or next portion of a required flight path. The required attitude can be, for example, displayed or otherwise output (e.g. via audio or other output forms) to the pilot on a user interface, in which case the pilot controls the actual attitude of the aircraft to match the required attitude. Alternatively, in the case of autopilot use, the required attitude is supplied to the autopilot controller and the autopilot controller controls the actual attitude of the aircraft to match the required attitude.

Thus, upon initiation of a go-around procedure, the flight director provides a desired attitude for executing each of the various parts of go around procedure when the time comes for executing those parts.

It can be advantageous to control the flight director to provide an attitude corresponding to a flight path which is based on the operational status of the RES. The present disclosure provides a method of operation of an aircraft in which a different flight path is adopted when the RES is in a failed state (abnormal procedure for RES powered flight) or fully functioning (normal procedure for RES powered flight). Further advantages can be achieved by adopting a precautionary attitude (corresponding to the attitude that would be adopted in failed state) while the operational status of the RES is being determined.

### Initiating the RES only under certain conditions

The inventors have recognised that reduced use of the RES can reduce emissions and lifetime cost of operating the aircraft. Therefore, RES use is limited to when the battery alone is not able to complete a first model procedure including an L-GAMA procedure following a balked landing plus a second balked landing following the L-GAMA procedure plus climb to a first threshold altitude. Operation of the RES will only be initiated if the battery state of charge is not sufficient for this model procedure.

### Powering the aircraft with RES in failed state

The inventors have recognised that the combined supply of power from a RES and a rechargeable-battery energy system (herein also referred to as "rechargeable battery", "battery system", "battery energy system" or, simply, "battery") during abnormal procedures for RES powered flight can allow a reduction in the minimum power output required by the RES in a failed state as described in the present disclosure. Hence the weight of the RES (determined by the power required in abnormal procedures for RES powered flight) can be reduced, thus saving aircraft weight.

The inventors have recognised the significance of the fact that at sea level a RES has much greater output power than at higher altitude and this is also the case when the RES is in failed state. So while maximum power available from the RES at sea level may meet the minimum power requirements for climb dictated by the GA procedure, at higher altitudes the power may be insufficient to maintain the same climb rate (or climb angle or climb gradient). However, the climb rate must also be achieved at higher altitude to complete certain procedures such as the GAMADA procedure. This problem could be addressed by increasing the size (i.e., power and hence mass) of the RES so that it alone can achieve the climb rate in failed state even at higher altitudes. However, the inventors have recognised that the aircraft can have a RES which can be undersized to meet the climb rate at higher altitudes. This is achieved by controlling the distribution of power such that the RES charges the rechargeable batteries from sea-level up to a second threshold altitude, while at altitudes above the second threshold altitude, the rechargeable batteries supplement the power from the RES such that both the batteries and the RES power the electric motors to maintain the required climb rate at higher altitudes up to the cruise altitude.

### Definitions of battery state of charge

In the present disclosure, the term "battery" is used as shorthand for "rechargeable battery". "Battery" or "rechargeable battery" may refer to both singular and plural. Likewise, "batteries" or "rechargeable batteries" may refer to the singular or plural. That is, the term "battery" and the term "batteries" include one battery or two or more batteries; and the term rechargeable battery and the term rechargeable batteries include one rechargeable battery or two or more rechargeable batteries.

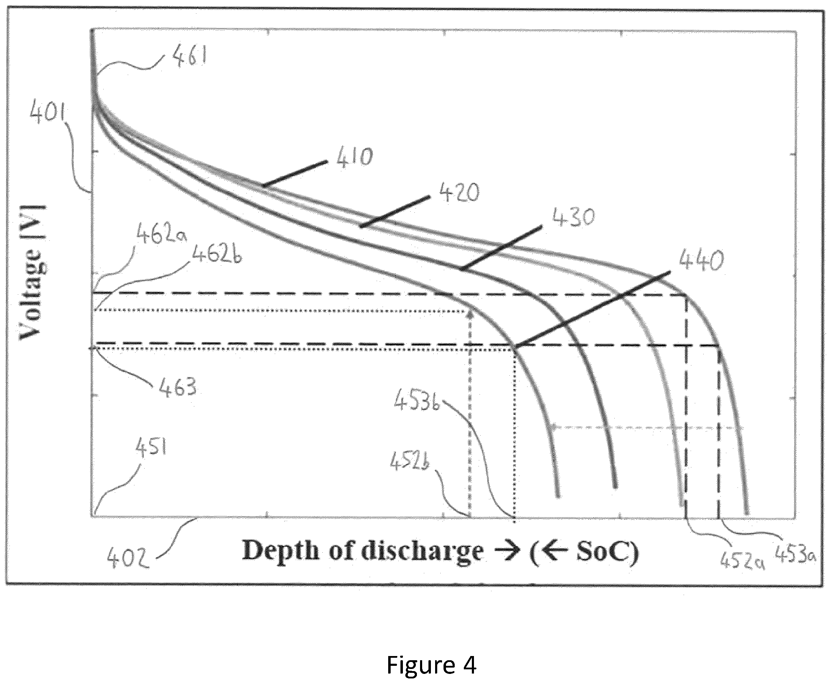

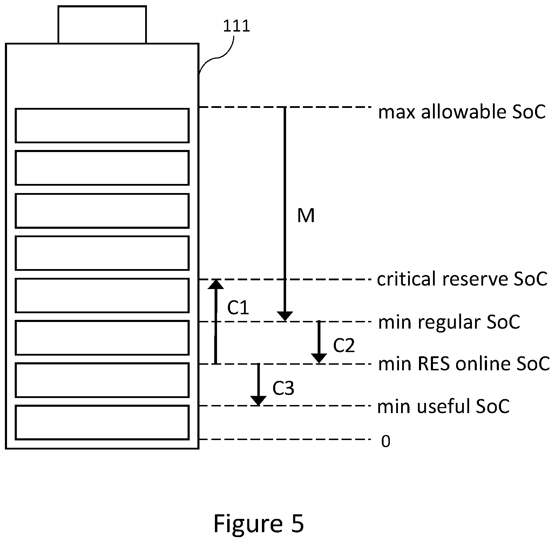

New rechargeable batteries often have a typical relationship between State of Charge (SoC) and voltage output. This relationship is described with reference to Figures 4 and 5 in the Detailed Description section of the present disclosure. Two variables affect the discharge curve of the battery:

1) Discharge current (Power): an increase in current (power) moves the whole voltage output vs state of charge curve downwards. At comparable SoC, the voltage level is lower.
2) Life cycle: older batteries deteriorate and lose their ability to store energy. As a result, an older battery with 100% SoC contains less energy than a similar new battery. The ratio between the energy of an old vs a new battery is defined as the State of Health (SoH).

The level of charge remaining in the battery at any point in time is indicated by the state of charge (SoC), defined as a percentage relative to the maximum capacity of the battery. It is determined by dividing the remaining capacity in the battery by the maximum capacity it can hold under the same health conditions. Several algorithms exist for determining the SoC, with the most common ones being open circuit voltage (OCV) measurement, Coulomb Counting, and model-based methods like Kalman Filters. Each of these approaches has its advantages and drawbacks, which vary based on the application, battery type, computational resources, and desired level of precision.

In the present disclosure, some levels of SoC (e.g. min RES online SoC and critical reserve SoC) are defined according to the energy required to fly a determined profile. Note that the energy extracted from the battery during a given time interval is equal to the change in capacity (i.e. state of charge) times the voltage at which the battery is discharged during that interval. Since the voltage depends on the discharge rate, the reduction in SoC associated with a given segment of flight depends on both the energy required to fly that segment, and on the rate at which that energy is provided (i.e., on the power). In the present disclosure, when we define a "SoC" (or "state of charge") or "capacity required to fly a determined profile", this may be interpreted the SoC or capacity required to provide the energy required to fly that profile, at the discharge rates that correspond to that profile.

It is convenient to define different states of charge (SoC) of the battery as follows.

### Maximum allowable SoC

As described with reference to Figures 4 and 5, the battery is chargeable to a maximum allowable SoC which is the lower of the maximum recommended SoC specified by the battery manufacturer and the SoC at which the battery outputs the maximum voltage level that the electric system powered by the batteries can accept. The maximum allowable SoC is typically set at less than an absolute maximum SoC since charging the battery over the maximum allowable SoC is unsafe or may cause accelerated battery degradation (e.g. by reducing the number of useful cycles available). Unsafe in this respect includes overheating the battery for example to risk or cause thermal runaway.

*Minimum regular SoC*

The battery is normally dischargeable to a minimum regular SoC of the battery, which is the higher of (i) the minimum SoC of the battery recommended by the manufacturer, for example to maintain the battery health and avoid premature aging or degradation of the battery, and (ii) the minimum SoC of remaining in the battery at the point of initiation of a go-around procedure that will allow the aircraft to fly the first part of the go-around procedure on battery power alone. In the former case (manufacturer specified) minimum regular SoC is typically set or specified by the battery manufacturers or otherwise determined by technical specifications of the battery or empirical means or determined by the intended use and reuse of the battery. The minimum regular SoC is typically determined in order to strike a balance between the range and hence energy requirements for flight (or the knock-on effect this has on weight of the battery and hence the aircraft) and the health and/or lifetime of the battery. In the latter case (go-around specified) minimum regular SoC is determined as follows. It is assumed for the purposes of calculating minimum regular SoC that the operation of the RES is initiated when the battery is at the minimum regular state of charge, at the point at which the aircraft initiates a (first) go-around (a go-around for the first time that flight). In this case, the RES will require some time to start and warm up, before it can supply power. During this startup and warmup period, the batteries will provide all power and all energy to the electric motors to arrest the descent and begin the go-around. This will deplete the batteries from the minimum regular SoC at the point of initiation of the batteries to a lower SoC by the time the RES has come online. The amount of energy calculated for this manoeuvre is set by e.g. the aircraft or RES OEM to ensure that under all certified operating conditions for this part of the go-around procedure, the RES will come online at or before the time the battery has been depleted to the minimum RES online SoC, which may be as low as (but not lower than) the minimum useful SoC (as per the definitions below). In both the former and the latter case, the minimum regular SoC may change over time, for example due to degradation of the battery over its lifetime, and this can be recorded, controlled and/or predicted by a battery management system.

*Normal battery capacity*

Normal battery capacity may be defined as the energy or charge difference between the maximum allowable SoC and the minimum recommended SoC, multiplied by SoH. Normal battery capacity may reduce with the total number of cycles of use.

*Minimum useful SoC*

According to implementations, the battery may be discharged to beyond (i.e., to lower than) the minimum regular SoC. In this case, the battery may be discharged to a minimum useful SoC (which may be referred to as a lowest threshold SoC). The minimum useful SoC is defined as the SoC at which the battery can provide at least a threshold power output at the minimum voltage output for which the system is designed.
The minimum useful SoC is lower than the minimum regular SoC. If the battery is discharged to between the minimum useful SoC and the minimum regular SoC, the state of health of the battery may be degraded. The amount of degradation being (significantly) more than the degradation due to one cycle of discharge to or above the minimum regular SoC. That is, if depleting the SoC of the battery to minimum useful SoC, the voltage and power are barely sufficient at the point of greatest depletion. Depleting the battery to the minimum regular SoC and not beyond ensures sufficient voltage and power while also protecting the life of the battery.

*Minimum RES online SoC*

A minimum RES online SoC can exist between the minimum useful SoC and the minimum regular SoC. The lowest possible value for the minimum RES online SoC is the minimum useful SoC. As will be further discussed below, the minimum RES online SoC can be used in calculation of another state of charge (the critical reserve SoC). The minimum RES online SoC is dependent on the specification of the RES and can be specified by the OEM at manufacture of the RES. The minimum RES online SoC can be determined by solving equations taking into account the time taken for the RES to come online after initiation of operation of the RES and the first threshold altitude at which the RES would come online following initiation of the RES at 0ft and climb toward acceleration altitude at the minimum climb gradient (of e.g. 2.7%). The conditions under which the RES must provide this power and voltage output, and for which the aircraft must meet the minimum climb gradient, must cover all conditions for which the aircraft is certified (all aircraft being normally certified for operation within a given operating envelope). In practice this means setting all conditions (including atmospheric/ environmental conditions and flight conditions) so that they are the most critical within this operating envelope.
The min RES online SoC can be determined by taking the min regular SoC (calculated as described above) and subtracting all energy required from the batteries during the time it takes for the RES to come online during the first part of a go-around procedure initiated at balked landing (0 ft above the runway). This first part of the go-around procedure includes climb from 0 ft to (or towards) acceleration altitude at the minimum climb gradient set by the certifying authorities considering airfield requirements for which the aircraft is designed. The min RES online SoC will be the min useful SoC when the minimum regular SoC has been set as per the latter case set out under the 'minimum regular SoC' definition above. However, if minimum regular SoC has been set higher by e.g. the battery manufacturer, then the min RES online SoC will be higher than the min useful SoC. The first threshold altitude is also used in the first model procedure (described later in this disclosure with reference to determining the critical reserve SoC).

The RES is deemed to have come online after a time period measured from initiation of the RES. The RES online time is the time taken for the RES to provide its maximum continuous power. A(n e.g. turbine) engine requires a certain time period after initiation of operation thereof to warm up before it can deliver its maximum continuous power, normally in the order of several minutes. The RES online time is specified by the engine manufacturer and based on actual measurements and/or modelling taking into account the most critical (stringent) atmospheric conditions (e.g. low ambient temperature, low air pressure) at which the RES is to be operated in the first stages of a go-around procedure (e.g. climb between 0 ft and the acceleration altitude). The RES online time is different for different RES systems.

*Critical reserve SoC*

A critical reserve SoC (which may be referred to as a first threshold SoC) is a state of charge defined by a first model procedure which takes into account the power and energy of the battery required for the aircraft to follow a certain flight path on battery power alone. In particular, the critical reserve SoC is the SoC at which the batteries have enough power and energy for a first model procedure including the following manoeuvres (manoeuvres 1-3 constituting an L-GAMA procedure):

> 1. Initial GA or balked landing manoeuvre including climb to circuit altitude, or any altitude prescribed by destination airport procedures
> 2. Flight to Final Approach Fix at destination airport
> 3. Second approach at destination airport
> 4. The first part of a second GA or balked landing at destination airport, including initial climb up to the moment where the RES is online and the SoC is not below the minimum RES online SoC

The flight power and energy requirements for the first model procedure are used to calculate the total depletion of charge from the start to the end of the first model procedure such that the first model procedure ends with the battery having an SoC at least equal to the min RES online SoC. The power and energy requirements for all segments of flight in the first model procedure can be calculated in advance for each individual flight. The first model procedure depends on actual runway in use, weather and applicable procedures and these can change on a daily basis (e.g. through publications of NOTAMs). Thus, the first model procedure can change on a daily basis and/or for each individual procedure. The energy and power calculations assume the most critical conditions (including aircraft, atmospheric, and airport conditions.

Therefore, upon initiation of an initiated (i.e. real-world) procedure, such as a local go around and missed approach (L-GAMA) procedure, a determination that the state of charge of the battery is at or above the critical reserve SoC at the point of initiation of the initiated procedure guarantees that the aircraft can complete it using battery power alone without depleting the battery lower than the minimum RES online SoC. Therefore, when a detected state of charge of the battery is below the critical reserve SoC at the beginning of the initiated procedure, it is determined that the battery alone cannot power the aircraft through the initiated procedure without depleting the battery beyond the min RES online SoC and therefore the RES will be started.

*Residual deep discharge energy*

Residual deep discharge energy is the energy available when minimum RES online SoC is higher than minimum useful SoC. The difference between these SoC levels is an amount of energy that can be used for example during a GAMADA procedure to supplement the power provided by the RES.

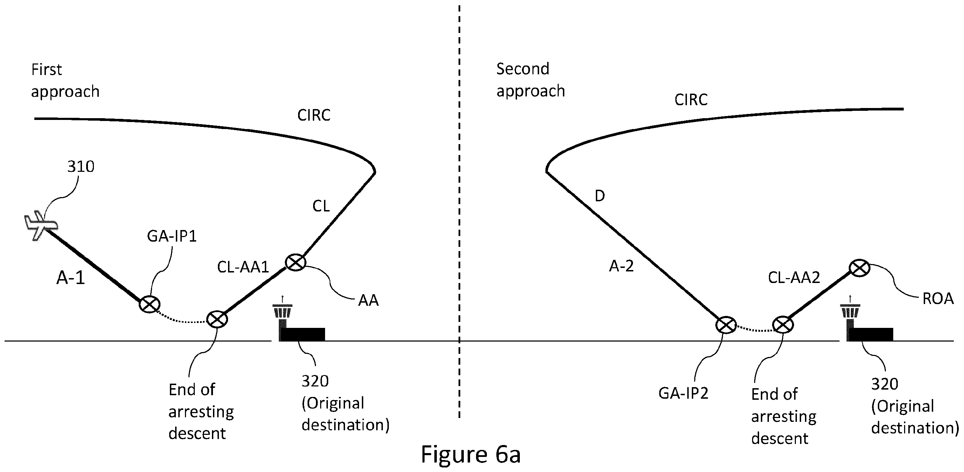

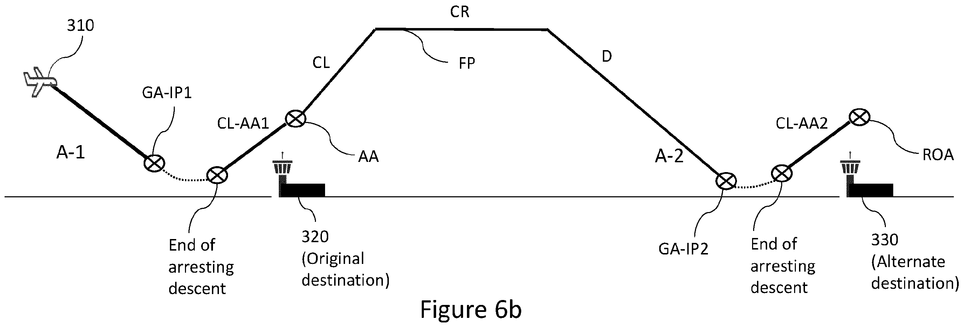

Examples of the first model procedure are described in detail with reference to Figures 6a and 6b. In summary, the first model procedure may a first local go-around and missed-approach procedure at an original destination airport, which ends with initiation of a second go-around and missed-approach procedure at the same airport. That is, the first model procedure begins with initiation of a first go-around procedure, includes completion of the first go-around procedure including a second approach at the original destination airport and ends with the beginning of a second go-around procedure. The first model procedure takes into account the most critical condition including that the first go-around is initiated at the lowest possible altitude (0 ft above runway - i.e. a balked landing) at the original destination airport, and the second go-around is initiated again at the lowest possible altitude and climb is to the first threshold altitude (as described with reference to the min RES online SoC).

Other aspects of the first model procedure are representative of the go-around procedures dictated by the airline operator for the original destination airport. The first model procedure must also take into account environmental and airport conditions such as the weather at the original destination airport and other changes to normal conditions notified by, for example, a NOTAM. The first model procedure (and thus the critical reserve SoC) can be calculated and/or recalculated/updated at any time from before take-off all the way up to and including the point of initiation of a go-around procedure during flight. These calculations are commonplace in aviation, and the skilled person would know how to effect the same.

The battery management system may detect a condition of the battery and may control or define the levels of the various states of charge defined herein based on the condition. For example, the battery management system considers conditions intrinsic to the battery, such as the number of cycles of use or state of health of the battery, optionally together with expected environmental conditions such as the expected operating temperature of the battery according to the flight plan. The detected battery conditions are used to determine or predict the various states of charge for any given battery before and/or during a given flight so that these states can be defined and used by the control systems of the aircraft to perform the various operations and procedures described herein. Again, these calculations are considered to be part of the state of the art, and the skilled person would know how to perform these. Accordingly, they need not be further elaborated herein.

#### Modes of operation of the energy systems when performing the GA procedure

Conventional use of rechargeable batteries is to operate such batteries only to the extent that the state of change (SoC) of the batteries is depleted to the minimum regular SoC. In the present disclosure, when a procedure such as an L-GAMA or GAMADA procedure is initiated, there are several possible courses of action which are taken by the control system. These may be referred to as modes of operation of the aircraft. Four examples of such modes of operation are provided as follows.

#### First mode of operation (Use RES for go-ground procedures regardless) - normal GA procedure for RES powered flights

When a GA procedure is initiated, operation of the RES is initiated regardless of a state of charge of the battery. The flight path followed for the GA procedure is a first or a second flight path depending on the operational state of the RES as described herein. If following the second path (i.e., when the RES is in the failed state) the battery can supplement the RES when above the second threshold altitude as described herein. The first flight path has a steeper climb gradient and/or higher cruise altitude than the second flight path.

#### Second mode of operation (Don't use RES of all when there is enough charge left in the battery to make it) - normal GA procedure for battery powered flight

When the GA procedure is initiated, operation of the RES is initiated based on a state of charge of the battery as determined at the point of initiation of the GA procedure. If the battery is depleted not lower than the critical reserve SoC, operation of the RES is not initiated, and the GA procedure is carried out using battery power only. In this case, the first flight path described herein is followed. If later in the GA procedure the minimum useful SoC is reached due to diversion, or unforeseen circumstances or conditions during the procedure, the RES is activated at that time or before when it is determined that minimum useful SoC will be reached at some point during the GA procedure.

#### Third possible mode of operation (Use RES in fully operational state when battery is below critical reserve SoC) - normal GA procedure for RES powered flight and RES initiated by lower than critical reserve SoC levels

If, at the point of initiation of the GA procedure, the battery has been depleted lower than the critical reserve SoC, operation of the RES is initiated at the point of initiation of the GA procedure. Until the RES is fully online (i.e. reaches its minimum normal operating temperature) the battery alone continues to power the aircraft. It is then determined that the RES is fully operational. The flight path for the GA procedure is therefore the first flight path as described herein. During the procedure, the battery may be discharged as far as the minimum RES online SoC to supplement the power of the RES, but this may not be necessary depending on the power and energy available from the RES alone across the different stages of the procedure. The RES alone may be operated throughout the entire procedure to prevent unnecessary degradation of the battery.

*Fourth possible mode of operation (Use RES in failed state when battery is below critical reserve SoC) -Abnormal-GA procedure for RES powered flight*

If, at the point of initiation of the GA procedure, the battery has been depleted lower than the critical reserve SoC, operation of the RES is initiated. It is then determined that the RES is operating in failed state. The flight path for the GA procedure is therefore the second flight path as described herein. The battery power is combined with the maximum power supplied by the RES in failed state to provide the minimum power output required to complete the GA procedure. Hence the combined mass of the battery energy system and the RES can be reduced while still meeting the minimum power and energy requirements in failed state for the GA procedure.

Use of the RES in the second, third and fourth mode of operation (i.e., avoiding use of the RES in the first mode of operation) can minimise usage of the RES. For example, by initiating operation of the RES only if the battery is below critical reserve SoC following initiation of the reference GA procedure rather than initiating operation every time a possible GA procedure is initiated, the number of times the RES is started is reduced.

In addition to these described modes of operation, there will also be many other normal and abnormal procedures for RES powered flights where the RES can be manually started. For example, when diverting in cruise, a crew can decide to manually start the RES when battery power will not be enough to reach destination.

In an example, in cruise flight it is determined that the destination airport is closed due to bad weather, and that diversion to a destination alternate is required. A new fuel/energy calculation is carried out and it is concluded that the battery energy until min regular SoC is not sufficient. It is then determined that there is a need to start the RES anyway somewhere during the flight and therefore the best thing to do is to start it right away. Cruise flight is a safe portion of the flight and if RES goes into failed state, it has no significant consequences. There is always enough energy to end the trip. Therefore, manual start of the RES upon diversion to the alternative airport during cruise is determined to be the best choice. This is different from initiating operation of the RES following initiation of the GA procedure including diversion, because during cruise there is no need to include a climb phase to divert to the destination alternate.

In general, for manual start of the RES (i.e., in situations other than after initiation of GA, such as in cruise), if battery energy is not enough to complete the journey without depleting below minimum regular SoC, the procedure is to always start the RES manually before it is needed. That is, aircraft crew can start the RES manually when it is clear that the battery will be depleted beyond minimum regular SoC at some point during the flight.

Abnormal procedures for RES powered flights can also be carried out for local GA (L-GAMA) procedures or GAMADA procedures. In the case of a GAMADA procedure, the energy required is higher than the L-GAMA procedure, since the GAMADA procedure requires diversion to a destination alternate and therefore a greater distance. Therefore, a second critical reserve SoC higher than that calculated for the L-GAMA procedure can be calculated for GAMADA procedures. A model procedure similar to the first model procedure can be used to calculate the second critical reserve SoC, including the first part of a second go-around up to the first threshold altitude at the destination alternate airport. For GAMADA procedures, whether or not to initiate operation of the RES can follow a similar operation as for the L-GAMA procedure. That is, the RES can be initiated automatically at the point of initiation of the GAMADA procedure or can be initiated automatically if a logic activated after initiation of the local GA procedure indicates that the state of charge of the battery is below the second critical reserve SoC. The energy available between the minimum RES online SoC and the second critical reserve SoC is enough to allow the aircraft to complete the GAMADA procedure on battery power alone plus climbing from 0 ft (balked landing) to the first threshold altitude after a second GA procedure is initiated (e.g. until the operational state of the RES is determined for a second time).

A description of an example first model procedure for an L-GAMA procedure is provided in the detailed description with reference to Figure 6a. A description of a similar model procedure for a GAMADA procedure is provided in the detailed description with reference to Figure 6b.

### Sizing the RES

A second model procedure is used to calculate a minimum size for the RES while meeting aviation regulations. It is the power, rather than the energy, available from the RES that dominates sizing the RES. The RES energy can be increased at only relatively minor additional weight simply by carrying more fuel. The RES weight scales with RES required power and therefore minimizing the power of the RES minimizes the weight.

As described herein, if the rechargeable battery is below the critical reserve SoC, operation of the RES is initiated automatically when initiating a GA procedure. That is, if GA is initiated and SoC is below critical reserve SoC, operation of the RES is initiated. It will take time (e.g. 30-60 seconds) for the system to come online and up to that moment the batteries alone power the aircraft. If the batteries are close to minimum regular SoC when initiating the first GA procedure, they are likely to end up close to minimum useful SoC or minimum RES online SoC when the RES is eventually operational. If the first GA procedure is initiated when the battery SoC is exactly at the critical reserve SoC and the initiated GA procedure and first part of the second GA mimic the first model procedure exactly, the SoC of the battery will be at exactly min RES online SoC (which can be as low as min useful SoC) at the moment the RES is fully online after the first part of the second GA procedure.

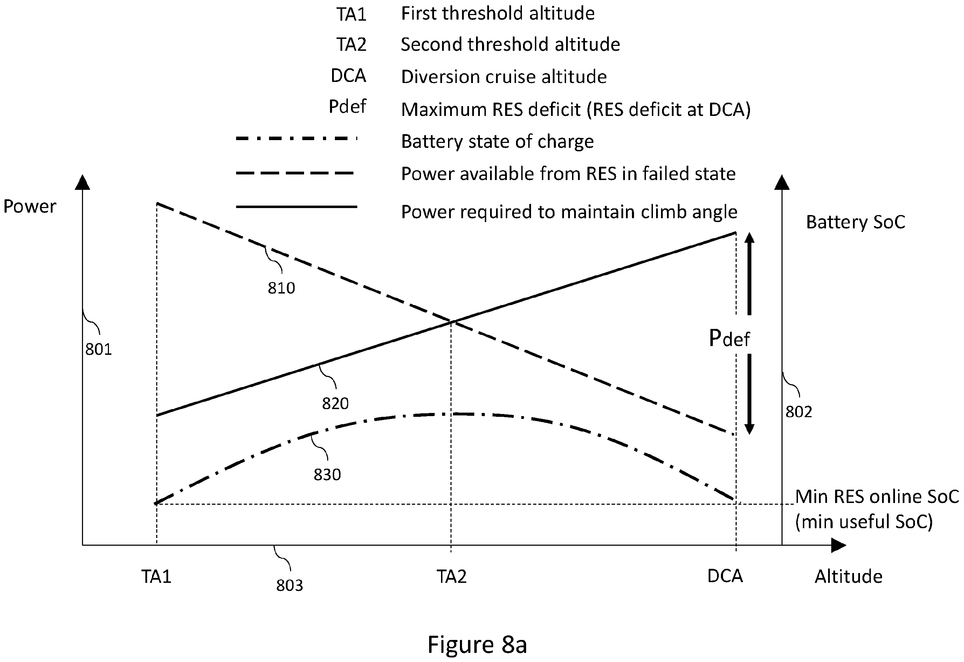

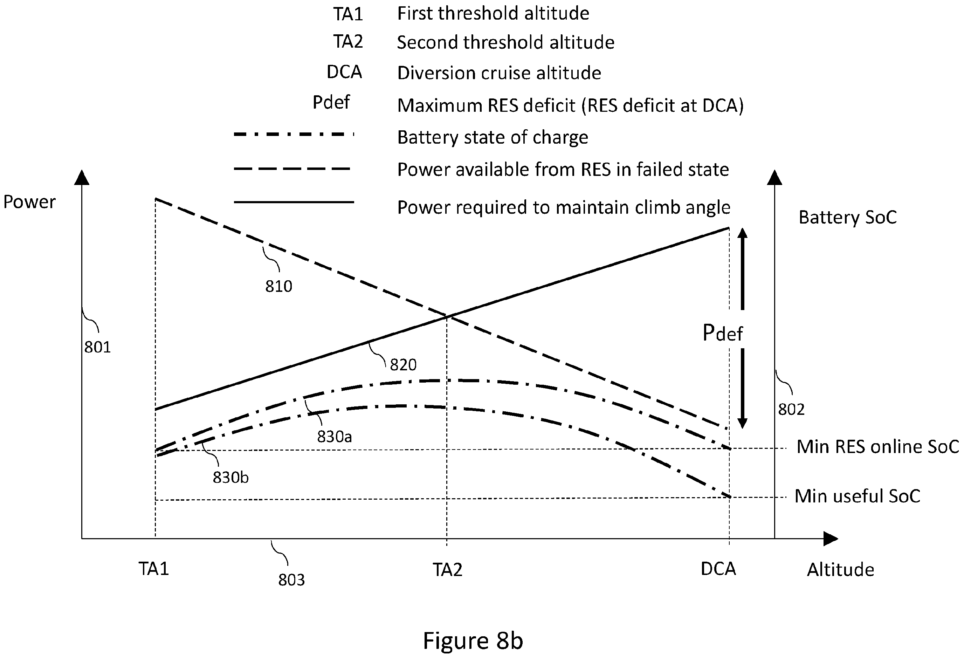

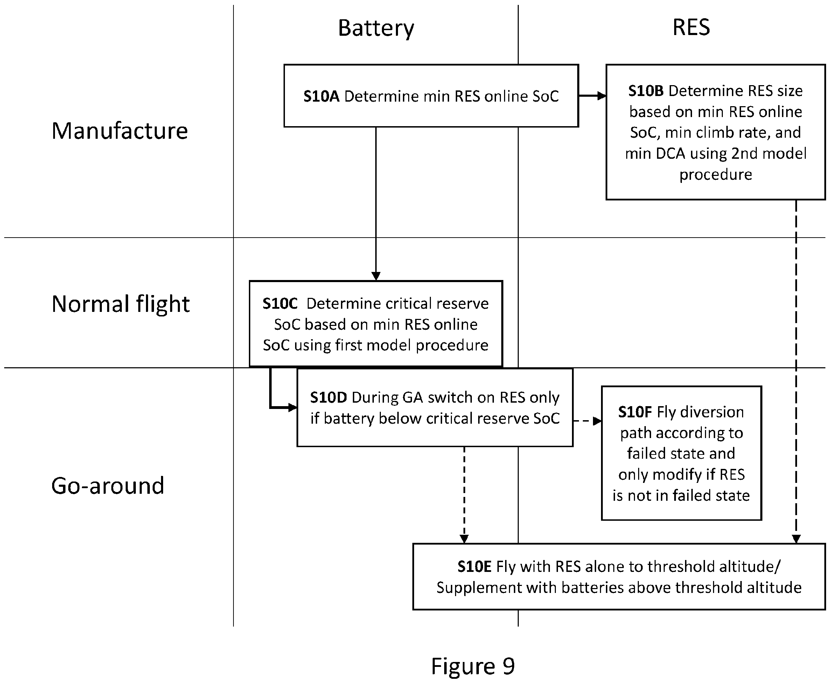

In aircraft according to the present disclosure, the RES may be sized for power so that it provides a maximum continuous power output in failed state that is equal to or less than the power required to complete a second model procedure. In the second model procedure, the aircraft climbs from the first threshold altitude described herein (at which the RES comes online) up to a minimum cruise altitude dictated by a GA procedure such as a GAMADA procedure. The maximum continuous power output of the RES in failed state is sized to achieve a certain minimum climb gradient at a particular second threshold altitude which is equal to or lower than the cruise altitude of the second flight path and higher than the first threshold altitude. As will be described in the detailed description with reference to Figures 8 and 9, this means that below the second threshold altitude, the RES in failed state can provide more than the required power to achieve the climb gradient, in which case it can charge the batteries in addition to powering the aircraft. Above the second threshold altitude, the RES in failed state does not supply enough power to achieve the required climb gradient of the second flight path. Therefore, above the second threshold altitude, the batteries supplement the RES power so that the required climb gradient is achieved all the way up to the required cruise altitude.

That is, in some implementations, supplementary power provided by the rechargeable batteries during climb above a second threshold altitude is considered when determining the power required by the RES to complete the climb at minimum climb gradient to the minimum cruise altitude in failed state. The supplementary power provided by the batteries can deplete the battery to below the minimum regular SoC and to the minimum useful SoC or min RES online SoC and this is considered when sizing the RES for power. The RES size can be optimized (i.e., minimised) by allowing the maximum continuous power output provided by the RES at the cruise altitude to be equal to the power required to maintain a certain minimum climb gradient at the cruise altitude minus the maximum continuous power available from the battery at the cruise altitude when the battery has reached the minimum useful SoC or the min RES online SoC. The aircraft designer can choose between the min useful SoC and min RES online SoC when determining the RES size in this way. Since min useful SoC is always equal to or below min RES online SoC, then the power available at min useful SoC will always be equal to or less than that at min RES online SoC at the cruise altitude. Since the designer may want to maximise the supplementary power provided by the battery to minimise the RES size, then it makes sense to use min RES online SoC as the sizing parameter. However, the trade-off is that this reduces the available battery charge useable while climbing to cruise, so the designer might still want min useful SoC to be used for sizing the RES.

By applying different procedures for normal and abnormal operations, and/or by using battery to a lower SoC than in normal operations, and/or by supplementing the RES power with battery power above the second threshold altitude, the sizing condition for the RES and the rechargeable battery system can be reduced, reducing overall system and hence aircraft weight.

Using fuel-based combustion engines and generators in battery-electric aircraft as (cruise) range extenders, has been proposed in comparable aircraft design studies. However, the inventors have recognised that fuel-based energy system sizing and system performance materially change when the only intended usage of the RES is to cover reserve energy. Operation of the RES is only initiated in limited scenarios and only if the battery SoC is insufficient to complete the flight procedure. In aircraft according to the present disclosure, the fuel-based energy system is sized by the required energy and required power in the most critical situations. In addition, since the RES is flight critical, the fuel-based energy system must meet reliability and redundancy requirements and so the RES is sized for these situations in failed state of the RES. Furthermore, the size of the RES is reduced by reducing the burden imposed by a flight path in situations where the RES is operating in failed state and the RES is sized by smart interplay between the use of the RES and the rechargeable batteries, including by recharging the batteries in some portions of RES powered flight and discharging the battery in other portions.

Thus, implementations described herein seek to minimize the hybrid power system weight, through various combinations and optimisations of batteries, engines, generators, fuel, fuel system and optimized normal and abnormal operations.

## DETAILED DESCRIPTION

Implementations will be described more fully hereinafter with reference to the accompanying drawings, which form a part hereof, and which show, by way of illustration, examples of implementations by which the invention may be practiced. This invention may, however, be embodied in many different forms and should not be construed as limited to the implementations set forth herein. Features, arrangements, methods and procedures defined in the overview section take the same meaning in the following description. The following detailed description is to be understood in the context of the corresponding passages of the Overview section unless stated otherwise. Terms used in the following description take the same meaning(s) as ascribed in the Overview section unless stated otherwise.

*Hybrid energy system*

In general implementations are directed to a control system for an aircraft. The aircraft comprises a hybrid energy system. Implementations also include an aircraft including the control system and method of operation of the aircraft, the control system and the hybrid energy system. The aircraft includes two or more propulsors and two or more electric motors, each electric motor configured to drive a corresponding propulsor. The hybrid energy system includes a primary energy system comprising a rechargeable battery arranged to power the plurality of electric motors; and a reserve energy system comprising two or more combustion engines and two or more generators arranged to power the electric motors.

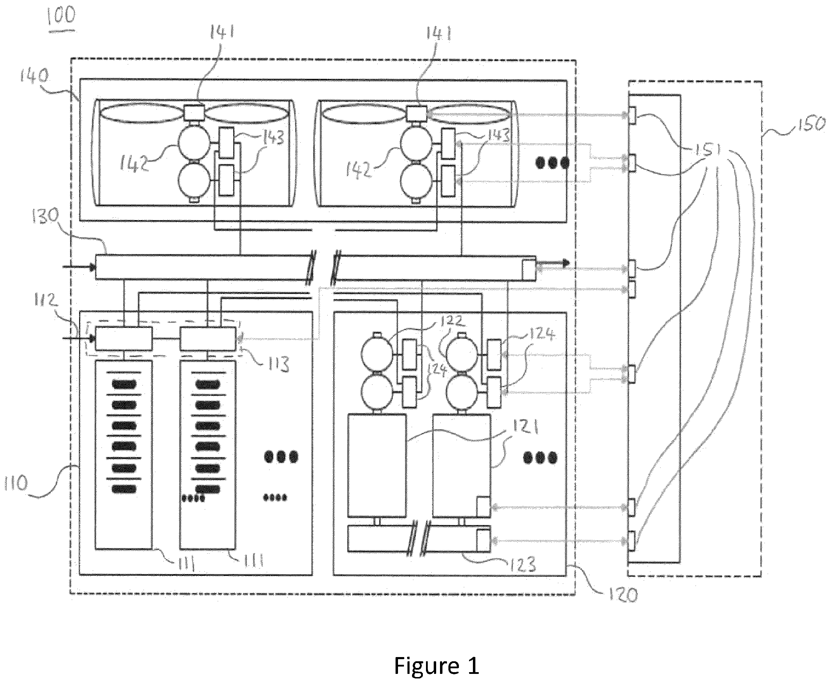

Fig 1 shows an example of such a hybrid energy system 100 for an electric aircraft. The hybrid energy system 100 comprises a rechargeable battery system 110 for supplying chemically generated electrical power, a fuel-based energy system 120 for supplying mechanically generated electrical power, one or more distribution busses 130 for distributing electrical power, an electric propulsion system 140 for propelling the aircraft, and a power system control 150 for controlling the rechargeable battery system 110, the fuel-based energy system 120, the distribution busses 130 and the electric propulsion system 140. The rechargeable battery system 110 and fuel-based energy system 120 supply electrical power to the one or more distribution busses 130 and the distribution busses deliver the supplied electrical power to the electric propulsion system 140. The distribution busses 130 may also supply electrical power from the fuel-based energy system 120 or the electric propulsion system 140 to the rechargeable battery system 110 in order to recharge the batteries. The rechargeable battery system 110 and the fuel-based energy system 120 are examples of the rechargeable battery energy system and reserve energy system (RES), respectively, described in the overview section.

The rechargeable battery system 110 comprises one or more rechargeable batteries 111 for supplying the chemically generated electrical power; a charging interface 112 for allowing charging of the rechargeable batteries from an external power source or from electricity generated by the fuel-based energy source or the electric propulsion system; and a battery management system 113 for managing the charging and discharging of the rechargeable batteries 111. The battery management system 113 is electrically connected to the one or more rechargeable batteries 111 and the one or more distribution busses 130. The rechargeable batteries 111 are electrically connected, optionally via the battery management system 113, to the distribution busses 130 and the charging interface 112. The charging interface 112 may also be directly connected to the distribution busses 130. The rechargeable batteries 111 include battery packs, supercapacitors and/or any other electrical storage medium.

The rechargeable batteries 111 can be recharged in situ in the aircraft via the charging interface 112 or can be removed for recharging. That is, the rechargeable batteries can be described as "plug-in" and are designed to be replenished by ground-based charging stations. This is enabled by the charging interface 112 being arranged to connect to the mains or to a fast charge station for recharging the rechargeable batteries 111 *in-situ* in the aircraft. The rechargeable batteries 111 may have fast swap capabilities, for example using release mechanisms to enable quick replacement of depleted batteries with charged batteries. The rechargeable batteries 111 can be stored in the fuselage of the aircraft, though storage of the rechargeable batteries 111 in the wing can help to reduce the mass of the aircraft.

The rechargeable batteries 111 may include a plurality of individually swappable battery units (or cell modules). This can enable the energy stored by the rechargeable batteries 111 on take-off to be varied according to the payload and range requirements as well as to take account of the state of the batteries themselves. That is, depending on the MTOM (or payload mass), and the state of the loaded battery units, the number of battery units loaded onto the aircraft may be varied to accommodate the range required by the initial flight plan) plus any energy to be kept in reserve. The electric-only range for a given payload mass and state of the battery units can be extended by increasing the number of battery units forming the rechargeable batteries 111. This can be enabled by providing battery units that plug into accommodating structures (e.g. bays) in the aircraft arranged to accommodate them. Each battery unit may contain one or many cells with wiring, sensors and controllers, along with cooling (or temperature management) apparatus, structural support and fire protection features. Ease of installation can be enabled by, for example, plug-and-play connectors to the battery management system 113 and/or by quick release mechanisms to fasten the batteries into the accommodating structures within the aircraft.

Continuing with the description of Figure 1, the fuel-based energy system 120 comprises at least two engines 121 for generating mechanical power, at least two generators 122 for converting the mechanical power to electrical power, a fuel system 123 for supplying fuel to the engines, and converters 24 for converting AC power from the generators to DC power for the electric propulsion system 140 (or the rechargeable battery system 110).

The engines 121 may be conventional internal combustion engines using combustible fuels such as diesel, petrol or jet-A for initiating and sustaining combustion in one or more combustion chambers, or may be hydrogen fuel cells. The engines 121 may be turbocharged.

The fuel system 123 includes a fuel tank, fuel lines, fuel pump, and fuel management system for controlling the delivery of fuel to the engines 121.

The engines 121 are mechanically connected to the generators 122 to provide the mechanical power to run the generators. The generators 122 are connected to the distribution buses 130 via the converters 124. The converters 124 may be AC-DC converters (or rectifiers) or inverters acting as active converters (or rectifiers). The converters 124 may provide precise control of the power delivered to the distribution busses 130.

The engines 121 include at least a first and second engine and the generators 122 include at least a first and second generator connected to the first and second engines, respectively, in normal operation. The provision of more than one engine 121 and more than one generator 122 builds in redundancy to the fuel-based energy system 120 so that failure of one component (e.g. one engine or one generator) does not result in failure of the whole fuel-based energy system. The fuel-based energy system 120 may include a fault management system for isolating individual engines 121 or generators 122 and to ensure that at least one engine remains operatively connected to at least one generator so as to allow power output from the fuel-based energy system 120. For example, if the first generator fails, the fault management system may connect the first motor to the second generator so that both first and second engines can drive the second generator simultaneously or separately (e.g. sequentially). In another example, if the first engine fails, the fault management system may connect the second engine to the first generator so that the second engine drives both the first and second generators. If the fuel-based energy system 120 is operating with at least one component (e.g. at least one engine 121 or at least one generator 122) that is non-operational (i.e. incapable of power output), then the fuel-based energy system is said to be operating in a 'failed state'. If exactly one of engine or one generator is non-operational, then the fuel-based energy system is said to be operating in a 'nominal failed state'. The fuel-based energy system 120 operating in a nominal failed state will have a maximum continuous power output which is lower than the maximum continuous power output of a fully operational fuel-based energy system.

To ensure compliance with aircraft regulations relating to redundancy, the hybrid energy system 100 must have total maximum continuous power output of a threshold minimum value or greater to be able to follow abnormal procedures when the fuel-based energy system is operating in a 'nominal failed state'. According to implementations, the fuel-based energy system 120 is sized so that it's maximum continuous power in a nominal failed state is *below* the minimum threshold for maximum continuous power of the hybrid energy system according to safety regulations. This downsizing of the fuel-based energy system to output below the minimum threshold dictated by the redundancy requirement can provide significant weight savings, which in turn reduces the empty operating mass of the aircraft (increasing range).

The inventors have recognised that the mass of the hybrid energy system 100 can be reduced yet further by providing a battery capacity to achieve the normal depth of discharge of the battery during planned normal flight and no more. Conventional wisdom in aircraft design would dictate that in this scenario, the maximum continuous power output of the RES in failed state must alone meet the minimum threshold defined by the redundancy requirement. Otherwise, the aircraft would be underpowered in an abnormal procedure in which flight beyond the normal flight plan is needed. However, in this case, the inventors have recognised that charge remaining in the rechargeable battery system 110 beyond the normal depth of discharge can be used when the fuel-based energy system 120 is operating in a failed state. Although repeated discharge of the battery beyond the normal depth of discharge may harm the state of health of the battery significantly, the rare use of the battery in this way (i.e. only in abnormal procedures in which the fuel-based energy system is operating in failed state) will have a much less significant effect.

The electric propulsion system 140 includes two or more propulsors 141 for propelling the aircraft, (electric) motors 142 for providing mechanical power to the propulsors 141, and converters 143 for converting the DC power provided via the distribution busses 130 into AC power for precise and controlled delivery to the motors 142. The propulsors 141 are propellors or fans, which may be ducted or open, and are arranged to rotate under the power of the motors 142. The motors 142 may be axial-flux drive motors and may be brushless. The convertors 143 may be inverter-rectifiers.

The power system control (PSC) 150 comprises (or is configured to control) individual module controllers 151 to manage the operation of the modules of the hybrid energy system 100 including the rechargeable battery system 110, the fuel-based energy system 120, the one or more distribution busses 130, and the electric propulsion system 140. These module controllers 151 are interacted with or guided by the PSC 150, transmitting various state and performance data to the PSC either upon request or continuously. Communication between the PSC 150 and module controllers 151 is facilitated through APIs, which establish the protocols for their interaction. The PSC 150 governs the operation of the modules of the hybrid energy system 100 based on pilot commands, or commands generated by an autopilot functioning in semi-automated or fully automated modes. To achieve this, each of the module controllers 151 may include one or more sub-controllers that communicates with PSC through APIs, responding to requests and periodic updates.

Metrics of the hybrid energy system 100 shared with the PSC 150 may include: motor operational status, RPM, and power input and maximum continuous power output for each motor 142; capacity, current state of charge, maximum depth of discharge for normal operation, maximum depth of discharge for abnormal procedures, state of health, current charge/discharge rate (or C-rate), current power output, maximum continuous power output, maximum peak power output, and current number of usages cycles for the rechargeable batteries; engine operational status, RPM, fuel level and flow rate, current power output, maximum continuous power output and maximum peak power output for the engines 121; generator operational status, RPM, power input and output for the generators 122 (including actual power generated by the engines and generators (e.g. turbines) and maximum continuous power that *can* be generated by turbines, given air density (max continuous power decreases with altitude due to decreasing air density)); and power/energy distribution for the distribution busses 130 including a measure of the amount of power or energy distributed between the modules. Control commands received by PSC 150 from the pilot or autopilot may include: motor on-off command, RPM, and torque commands for each motor; power on-off and power output level commands for the battery management system; engine and generator on-off commands and power output commands; and power distribution commands for the distribution busses 130.

***Pilot interface and controllers***

Implementations include a control system for aircraft having the hybrid energy system described herein, the control system comprising a user interface (e.g. a flight director) configured to display an attitude required to execute a given flight path.

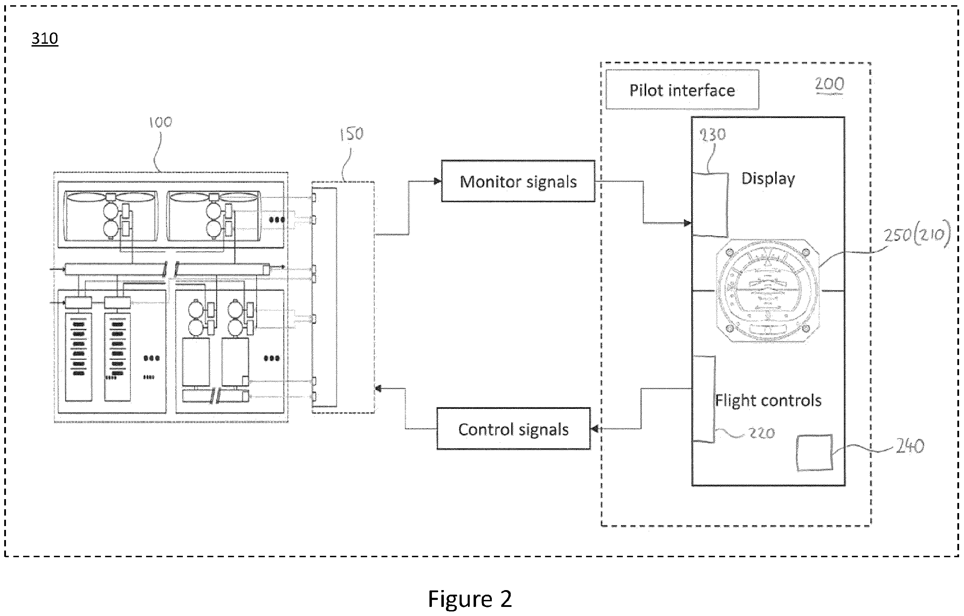

Figure 2 shows a schematic of an aircraft 310 including the hybrid energy system 100 of Figure 1 and an example of the control system in the form of a pilot interface 200 for monitoring and control of the aircraft 310 and its subsystems. The control system may additionally include the PSC 150. The pilot interface 200 may include an autopilot system. The pilot interface 200 receives the metrics of the hybrid energy system 100 shared with the PSC 150 and may display them to a pilot of the aircraft and/or provide them to or share them with an autopilot system. The pilot interface 200 also allows control of the aircraft including by sending control commands for the hybrid energy system 100 to the PSC 150.

The pilot interface 200 includes a user interface and controller (e.g. flight director 210) for calculating and displaying a flight path or an attitude corresponding to a flight path, a flight controller 220 for controlling the aircraft to follow a flight path or to adopt an attitude corresponding to a flight path, a power system status monitor/indicator 230 for monitoring and indicating metrics of the hybrid energy system 100, an initiator 240 for initiating the GA procedure described in the overview section, and an attitude indicator 250 (which may also be referred to as a horizontal situation indicator HSI, primary flight display PFD, multi-function display MFD, or electronic horizontal situation indicator EHSI) for indicating a current attitude of the aircraft.

The control system can include the PSC 150, the flight director 210, the flight controller 220, the power system status monitor/indicator 230 and/or the abnormal procedures indicator.

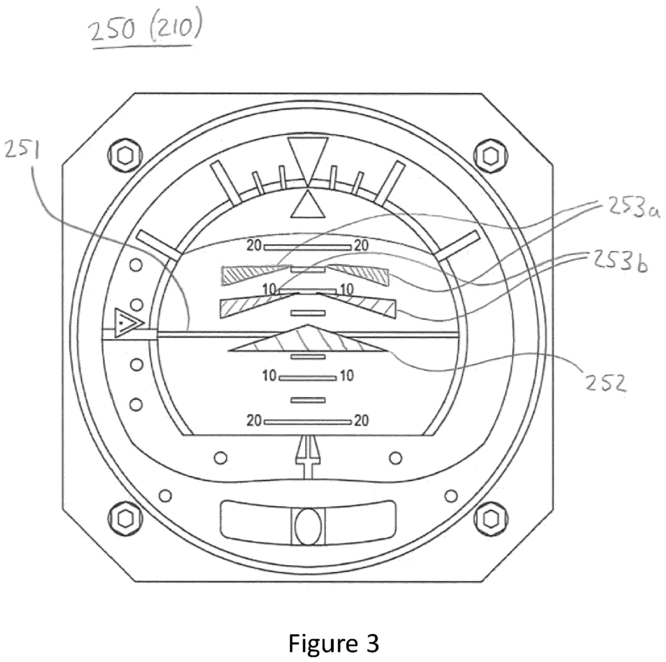

Figure 3 shows the attitude indicator 250 and a display portion of the flight director 210 in more detail. The attitude indicator and at least the display portion of the flight director can be considered to be the same component. Otherwise, the display portion of the flight director 210 can be considered to be overlayed onto or incorporated within the attitude indicator 250. The attitude indicator 250 includes a horizontal bar 251 and an aircraft symbol 252 showing a current attitude of the aircraft relative to the horizon. The display portion of the flight director 210 includes a command bars 253a, 253b.

The flight director 210 typically gathers input from an air data computer ADC, attitude and heading reference computer (AHRS) and a flight control computer FcC. The ADC provides altitude, airspeed, and temperature readings, along with heading data sourced from magnetic instruments such as flux valves. This heading information can be viewed on the attitude indicator 250. Navigation data is sourced from a flight management system FMS, VHF omnidirectional range VOR, Distance Measuring Equipment DME, and RNAV systems.

Based on these inputs, the flight director 210 can calculate a flight path to a destination from a current location and/or a flight path to complete a given manoeuvre such as go around, climb at a particular climb gradient, climb to a particular altitude, cruise at a particular altitude, descend at a particular descent rate, and/or descend to a new altitude. The attitude and/or heading required to follow the flight path or to complete the manoeuvre from the current co-ordinates and altitude of the aircraft is calculated as part of calculating the flight plan. As part of the flight path calculation, the flight director 210 consolidates speed, position, closure rates, drift, track, desired course, and altitude into a command signal including a desired aircraft attitude. Returning the description of Figure 3, the flight director 210 then displays the desired attitude and/or heading on the attitude indicator 250. The current attitude is displayed in the form of the aircraft symbol 252 and the pilot can determine current attitude by comparing the aircraft symbol 252 with the horizontal bar 251. The desired attitude is displayed in the form of the command bars 253a, 253b. The pilot can make a comparison between the aircraft symbol 252 and the command bars 253a, 253b to determine how to control the aircraft to adopt the desired attitude indicated by the command bars 253a, 253b. Once the pilot has controlled the current attitude of the aircraft to adopt the desired attitude, the aircraft symbol will be aligned with the command bars 253a or 253b. Alternatively, the desired attitude and/or heading is supplied to the autopilot for comparison with the current attitude and/or heading readings.

In more general terms, the flight director 210 may display an attitude command signal via one or more indications thereon or share the attitude command signal with the autopilot system. The attitude command signal may include a desired attitude (e.g. pitch and/or roll) for following a desired flight path and the desired attitude may be displayed as an overlay on the attitude indicator 250. The attitude command signal can be presented on the attitude indicator 250 as attitude command indicators (such as bars or arrows) 251, which directly or indirectly indicate the pitch and roll adjustments to the current attitude needed to adopt the desired attitude. To control the aircraft to adopt the attitude required to follow the flight path indicated by the flight director 210, the pilot simply uses the flight controller (e.g.

stick/yoke/rudder) 230 to ensure the attitude indicator showing the actual attitude is aligned with the indicated desired attitude or allows the autopilot to do so. The flight director can work directly with the autopilot (AP), instructing it to position the aircraft correctly (i.e. adopt the correct attitude) to follow a desired flight path. In a fly-by-wire system, this process is carried out electronically/ digitally.

The flight director 210 commands the required pitch/ attitude dictated by the procedures defined herein. In addition, the power system control 150 manages the power transmission from the fuel based energy system 120 to the propulsion system 140 as well as any remaining/residual/left-over power transmission to the rechargeable battery system 110 in such a way as the fuel based energy system 120 can supply the required power for flying the best climb speed Vx (speed at which you have highest climb gradient possible for the power output). As soon as a go-around is initiated - the flight director 210 commands the appropriate pitch attitude, and the power system control 150 commands the fuel based energy system and/or rechargeable battery system to output the appropriate power to the motors for best climb speed at the climb rate dictated by the flight controller 210. In more general terms, for every climb phase of any of the procedures defined in the present disclosure, a control system of the aircraft defines the pitch control required to achieve the climb gradient and also the motor power control which provides the best climb speed Vx which is the climb speed at which the power output of the motors is minimal for the required climb gradient. As set out in the methods and systems described in the present disclosure, the residual power over and above the power required by the motors to achieve the best climb speed at the required climb gradient can be directed from the fuel-based energy system to the rechargeable battery system (if there is surplus power available from the fuel based energy system) or vice versa (if there is a deficit of power from the fuel-based energy system).

### *Battery state of charge*

As described in the overview section, the rechargeable battery of implementations can have various states of charge. Figure 4 shows an example plot of the output voltage vs depth of discharge (or state of charge) for rechargeable batteries. In Figure 4, the vertical axis 401 represents voltage and the horizontal axis 402 represents depth of discharge increasing left to right (or state of charge decreasing left to right). Four plots of discharge curves (voltage vs state of charge) are shown in Figure 4 for illustrative purposes. A first plot 410 shows the discharge curve over the first cycle of use. A second plot 420 shows the discharge curve over the 200th cycle of use. A third plot 430 shows the discharge curve over the 500th cycle of use. A fourth plot 420 shows the discharge curve over the 1000th cycle of use.

These curves are typical for many types of rechargeable batteries including those proposed for use in the aircraft of the present disclosure.

Figure 5 shows a relationship between the various states of charge described in the present disclosure. As shown in Figure 5, the rechargeable battery 111 has, in order of decreasing magnitude, a maximum allowable SoC, a critical reserve SoC (also referred to as an upper threshold SoC), a minimum regular SoC, a minimum RES online SoC (which may be referred to as a lower threshold SoC), a minimum useful SoC (which may be referred to as a lowest threshold SoC), and zero SoC. The critical reserve SoC, minimum regular SoC, minimum RES online SoC, and minimum useful SoC are as defined in the overview section. A discharge amount from the maximum allowable SoC to the minimum regular SoC may be considered a recommended maximum discharge amount M. A discharge amount from the critical reserve SoC to the minimum RES online SoC may be considered a first discharge amount C1. A discharge amount from the minimum regular SoC to the min RES online SoC is shown as a second discharge amount C2, equal to the charge required when using the batteries to power flight between balked landing and the point at which the RES comes online while climbing toward acceleration altitude. A discharge amount from the min RES online SoC to the minimum useful SoC may be considered a third discharge amount C3, equal to the residual deep discharge defined in the Overview, which can be utilised to power flight above the second threshold altitude up to the diversion cruise altitude in diversion.

As shown with respect to the first plot 410 at 100% SoC 451 (i.e. the maximum allowable SoC), the voltage output is at a peak or maximum voltage output level 461. When discharging, the voltage output decreases quickly from this peak. Then from a certain high SoC value (typically above 90%), the voltage level decreases slowly with SoC. When reaching a lower first state of charge 452a (for example, but not limited to, around 15-20%), the voltage declines steeper with each percentage point of SoC reduction. At an even lower second state of charge 453a the voltage decline is even steeper with each percentage point of SoC reduction. In the first plot 410, a first voltage output level 462a of the battery at the first state of charge 452a is higher than a second voltage output level 463 at the second state of charge 453a.

The first state of charge 452a may be representative of the minimum regular SoC described herein. The second state of charge 453a may be representative of the minimum useful SoC.

As the number of cycles of use increases, a state of health of the battery is degraded such that the discharge curve is affected as shown in the second plot 420, third plot 430, and fourth plot 440. Referring to the fourth plot 440, at the minimum regular SoC 452b and a corresponding third voltage output level 462b is lower than the first output voltage level 462a. The minimum useful SoC is determined by the voltage output level however, and so the relationship between minimum useful SoC and the minimum regular SoC for the for the first plot 410 is different from that of the fourth plot 440.

The battery management therefore takes into account the state of health of the battery as well as the state of charge in determining the various states of charge (e.g. critical reserve SoC, minimum RES online SoC and minimum useful SoC) for the purposes of the methods and procedures defined in the present disclosure.

### Aircraft operation based on battery state of charge

The aircraft may be configured so that the RES is started upon initiation of any go-around procedure. However, operationally, starting up the RES can be an expensive procedure even compared with reducing the lifetime of the batteries. Therefore, using the RES less often at the cost of using the battery below the minimum regular SoC can be beneficial.

A state of charge of the rechargeable batteries can determine whether the batteries are used during some stages of flight. In conventional use, the rechargeable batteries are discharged during flight to a maximum regular depth of discharge resulting in the minimum regular SoC described in the overview section. The minimum regular SoC allows the health of the batteries to be maintained to an acceptable level for continual repeated use.

In implementations, the rechargeable batteries can be discharged to below minimum regular SoC to reduce the frequency of starting the RES. Under these circumstances, the rechargeable batteries may be discharged to the minimum RES online SoC during a GA procedure.

As will be described herein, calculating the min RES online SoC is a helpful step for determining both the critical reserve SoC and sizing the RES. The min RES online SoC is used as:

- a fixed variable within a first model procedure to calculate the critical reserve SoC for any given aircraft and flight plan, and/or
- a fixed variable within a second model procedure to calculate or optimise a size (power output) of the RES.

In the first model procedure, a GA procedure can be either a local go-around and missed approach procedure (L-GAMA) or go-around and missed approach plus diversion to a destination alternate, including attempted landing at the destination alternate (GAMADA). The rechargeable batteries alone are used for this purpose when it is determined that the state of charge of the batteries is no lower than the critical reserve SoC at the point of initiation of the GA procedure.

The critical reserve SoC is calculated to take into account the most critical GA procedure, including the most critical conditions for which the aircraft is certified along the GA procedure (such as temperature, air pressure, airspeed and atmospheric conditions). The critical reserve SoC can be calculated as part of the flight plan or during normal flight and can be readjusted during flight to take into account, for example, flight conditions and conditions at the target destination airport including changes notified via e.g. a NOTAM.

A first critical reserve SoC value is calculated for L-GAMA procedures (and optionally a second critical reserve SoC is calculated for GAMADA procedures) so that this information is ready at the point of deciding whether to use the batteries for the GA procedure. In general terms, the critical reserve SoC is calculated as the state of charge of the battery that will allow a certain flight path determined by a first model procedure to be completed. At the end of the flight path, theoretically the battery will be depleted to the min RES online SoC and not beyond. The first model procedure begins from the point of initiation of a first GA procedure to its conclusion plus an extra manoeuvre forming the first part of a second GA procedure.

Figure 6a shows a schematic of a particular example of a first model procedure used for calculation of the critical reserve SoC for a local GA procedure (L-GAMA procedure). Figure 6b shows a schematic of another example of a first model procedure used for calculation of the critical reserve SoC for a GA procedure including diversion to an alternate (GAMADA procedure).

Aircraft crew cannot always be certain that the go-around procedure initiated will be a local go-around and missed approach (L-GAMA) procedure as per the first model procedure described with reference to Figure 6a, or a go-around and missed approach including diversion to a destination alternate (GAMADA) procedure described with reference to Figure 6b. This is usually determined after the go-around procedure has been initiated and the aircraft crew have more information. Therefore, if the first model procedure is an L-GAMA procedure, the actual go-around is determined to be a GAMADA procedure, and the SoC of the battery is at or above the critical reserve SoC at the point of initiation of the go-around procedure, then there often will not be enough charge remaining in the battery to be able to complete the GAMADA procedure even if there is no second go-around initiated at the destination alternate airport. In this case, the RES can be started manually at any point during the GAMADA procedure (before the battery reaches min useful SoC or min RES online SoC) to supplement the battery and power the aircraft safely until landing.

A lower critical reserve SoC will be obtained using the procedure in Figure 6a than the procedure of Figure 6b. If the initiated GA procedure (the GA procedure actually flown) turns out to include an L-GAMA procedure and the critical reserve SoC is calculated as per the first model procedure in Figure 6a, the RES will not need to be used during the GA procedure unless the state of charge of the battery detected upon initiation of the GA procedure is lower than the critical reserve SoC calculated. Likewise, if the initiated GA procedure turns out to include a GAMADA procedure and the critical reserve SoC is calculated as per the first model procedure in Figure 6b, the RES will not need to be used during the GA procedure unless the state of charge of the battery detected upon initiation of the GA procedure is lower than the critical reserve SoC calculated. However, if the initiated GA procedure turns out to include an GAMADA procedure and the critical reserve SoC is calculated as per the first model procedure in Figure 6a, the RES may need to be used during the GA procedure, certainly if the detected SoC on initiation of the first GA procedure is lower than the critical reserve SoC calculated, and possibly also even if the detected SoC is higher. Conversely, if the initiated GA procedure turns out to include an L-GAMA procedure and the critical reserve SoC is calculated as per the first model procedure in Figure 6b, the RES will not need to be used during the GA procedure if the detected SoC on initiation of the first GA procedure is lower than the critical reserve SoC calculated, and possibly not even if the detected SoC is even lower.

Therefore, when the first model procedure is an L-GAMA procedure (leading to a lower critical reserve SoC), the RES may need to be started manually later in the procedure when the initiated go-around procedure turns out to be a GAMADA procedure. If instead the first model procedure is a GAMADA procedure including initiation of second go-around procedure at the destination alternate airport (in the same manner as described above), the frequency of activation of the RES can be limited yet further because the critical reserve SoC calculated will be higher and therefore will cover the actual GA procedure followed on more occasions (on average) throughout the lifetime of the aircraft. That is, the procedure used in Figure 6b would result in use of the RES more often because it assumes that the first model procedure will be longer and therefore the critical reserve SoC would be much higher If the critical reserve SoC is too high, then the RES would almost always be initiated for go-around procedures, especially L-GAMA procedures, and RES usage would increase, leading to higher operational costs.

The first model procedure does not take into account any holding or loiter. If in actual flight the aircraft is ordered to hold or loiter during an L-GAMA or GAMADA procedure, the RES can be switched on manually, for example at a time that does not already include a high workload for the aircraft crew. However, in calculating the critical reserve SoC, holding or loiter is not considered.

In the schematics of Figures 6a and 6b, an aircraft 310 approaches an original destination airport 320 on an approach path [A] having flown during normal procedure on rechargeable battery power alone. The schematics show altitude on the vertical axis and ground distance on the horizontal axis.

The aircraft 310 in each of Figures 6a and 6b includes a hybrid energy system including a rechargeable battery and a reserve energy system (or RES or fuel-based energy system), for example the hybrid energy system 100 described with reference to Figure 1. The aircraft also includes a pilot interface and/or autopilot including control system for controlling the aircraft, such as the pilot interface 200 described with reference to Figure 2, including an attitude indicator/flight director (e.g. controlled by the control system), such as that described with reference to Figure 3.

In general terms, the aircraft 310 depicted in Figures 6a and 6b has control system configured to initiate operation of the reserve energy system when a go-around procedure has been initiated only if a state of charge determined at the point of initiation of the go-around procedure is lower than an upper threshold SoC (which is referred to as the critical reserve SoC). The control system may be configured to determine the upper threshold SoC by determining a first model procedure including a go-around procedure, the model procedure ending with a final climb from zero altitude to a first threshold altitude (e.g. the RES online altitude, which is the altitude at which the RES has reached its minimum normal working temperature) at a minimum climb gradient specified by the certifying authority for climb to acceleration altitude (the minimum climb gradient may be e.g. 1.7%, 2%, 2.3%, 2.5%, 2.7%, 3%, 3.3%, 3.5%, 3.7%, or 4%). The control system is further configured to determine the upper threshold SoC, wherein the upper threshold SoC is the sum of the total state of charge depletion and the lower threshold SoC. The first threshold altitude can be determined based on the time taken for the reserve energy system to reach a threshold operational state following initiation of operation of the reserve energy system.

Figures 6a and 6b depict two different examples of such a first model procedure. The control system determines a total state of charge depletion of the battery from the start to the end of the first model procedure and determines a lower threshold SoC at which the battery power output is sufficient to maintain the minimum climb gradient (of e.g. 2.7%) at the first threshold altitude (e.g. the RES online altitude). The control system then adds the total state of charge depletion to the lower threshold SoC (min RES online SoC) to determine the upper threshold SoC (critical reserve SoC).

In general terms, the first model procedure can include an initial climb from sea level to acceleration altitude at a minimum climb gradient (of e.g. 2.7% followed by (or as included in) a first go-around procedure, followed by the first part of a second go-around procedure including a second climb from zero altitude to the first threshold altitude. The first go-around procedure includes either: a missed approach and reattempt at landing at the original destination (also referred to herein as a local GA or L-GAMA procedure); or a missed approach, followed by a diversion to a destination alternate, followed by an attempted landing at the destination alternate (also referred to herein as a GAMADA procedure).

Referring to the example first model procedure of Figures 6a and 6b in more detail, landing the aircraft 310 at the original destination airport 320 is not possible and a decision to initiate a GA procedure is made. Go-around procedures are initiated at a first go-around initiation point GA-IP1 by, for example, the pilot operating a go-around actuator in the cockpit such as a button on the throttle lever. Since the calculations for critical reserve SoC are based on the most critical situation, the first go-around initiation point GA-IP1 is assumed to be at 0 ft (or sea level). Normally, a GA can be initiated at any altitude during the approach, but the closer the aircraft is to the ground, the more critical it is. Typically the lowest is the so-called decision altitude. This is normally 200 ft, but with certain systems on the ground, on board and certain pilot training, this can be as low as 50 ft. However, even after passing the decision height, pilots may still opt to discontinue the landing and climb away. This is called a 'Balked Landing'. An example is as follows. The aircraft reaches 200ft decision height and all looks fine but as the aircraft descends further, suddenly it becomes apparent that the aircraft can't land and the pilot decides to abort the landing. Reasons for aborting landing can be for example another aircraft taxies on the runway in the landing area or the aircraft hits a flog of seagulls or encounters a large gust. The balked landing procedure is similar to a go around.

Referring to Figures 6a and 6b, for the purposes of the critical reserve SoC calculation, once GA is initiated, the throttle is on full power, flaps are set to approach setting and as soon as the aircraft is in positive climb, the landing gear is retracted. The aircraft then makes a first climb CL-AA1 at e.g. 2.7% at full throttle to acceleration altitude AA. It is assumed for the purposes of the calculation that the flight is to be continued on battery power alone and that when acceleration altitude is reached, the normal (published) missed approach procedure is followed.

In the example of Figure 6a, when the first model procedure includes an L-GAMA procedure, the first go-around procedure begins as described above. The aircraft 310 climbs CL to a higher altitude, circles CIRC and makes a second attempt at landing at the original destination airport 310 including descent D and second approach A-2. A second GA procedure is then initiated at a second go-around initiation point GA-IP2 and the aircraft then completes a second climb CL-AA2 to RES online altitude ROA.

Referring to Figure 6b, when a GAMADA procedure is used in the first model procedure, the first GA procedure is begun as described with reference to Figure 6a, but the aircraft instead follows a missed approach and diversion flight path FP to a destination alternate 330. Flight path FP includes a climb path CL to cruise altitude, a cruise path CR at cruise altitude and a descent D from cruise altitude to the destination alternate 330. The extra manoeuvre included in the calculation of critical reserve SoC includes a second GA initiation point GA-DP2 resulting in another balked landing and second climb CL-AA2 to acceleration altitude AA or RES online altitude.

The first model procedures described with reference to Figures 6a and 6b assume that the battery will have been discharged to min RES online SoC at the RES online altitude ROA. This is then used to calculate the critical reserve SoC by working backwards to the first go-around initiation point GA-IP1.

Therefore, the whole flight path used for the calculation of the critical reserve SoC in Figures 6a and 6b begins at the first GA initiation point and ends at the acceleration altitude after the second GA initiation point GA-IP2. That is, the critical reserve discharge amount C1 between critical reserve SoC and minimum RES online SoC in the first model procedure provides the total energy required from initiation of the first GA procedure, including flying the full missed approach procedure plus enough battery energy on final approach to attempt a second GA where batteries power the GA until either the RES is online or the acceleration altitude has been reached.

The critical reserve SoC must be calculated for every missed approach procedure for every airfield. However this is not a heavy burden on the aircraft operator and aircraft crew. Prior to landing, the missed approach procedure can be loaded in the aircraft FMS and the system can use that to calculated required energy and critical reserve SoC by the method described herein.

The calculations for critical reserve SoC can be carried out using airport information (elevation, climb gradient required) and real atmospheric conditions as known by the flight crew (e.g. retrieved from ATIS). In the absence of up-to-date information, the most critical conditions for which the aircraft is certified are assumed for the critical reserve SoC calculations.

The purpose of calculating the critical reserve SoC is to use it as the basis for deciding whether to initiate operation of the RES when performing a GAMA procedure (either L-GAMA or GAMADA). If at the point of GA initiation, the battery charge is not less than the critical reserve SoC, then the GAMA procedure is carried out using the batteries alone and operation of the RES is not initiated. In contrast, if at the point of GA initiation, the battery charge is less than the critical reserve SoC, the operation of the RES is initiated and, once the RES is operational, the GAMA procedure is carried out using the RES power. Note that the GA procedure actually carried out may not be exactly the same as the GA procedure used for the calculation of the critical reserve SoC. However, since the GA procedure used for the calculation is for the most critical situation, the battery energy will be enough to complete the actual GA procedure followed in practice plus any extra required for initiating a second GA procedure up to the RES online altitude.

The use of the critical reserve SoC at initiation of go-around to determine whether the RES should be started can lead to reduction in the number of times over the lifetime of the aircraft that the RES is started, reducing cost and emissions. In addition, the use of the critical reserve SoC in the decision-making process avoids unnecessary initiation of operation of the RES during the workload-heavy GA procedure, thus a simpler GA can often be followed (when the SoC is at or above critical reserve SoC), reducing the workload on the aircraft crew and increasing safety by removing factors which can increase the probability of accidents.

The mass of the rechargeable battery system 110 can be reduced by designing the aircraft for particular flights such that capacity of the rechargeable battery is equal to that required to complete normal flight (with or without 5% contingency reserves) discharging the battery to the minimum regular SoC. By selecting the critical reserve SoC to be no lower than the minimum regular SoC, battery life is maintained.

### *Aircraft operation based on operational status of the RES*

An integral part of aircraft design is the design of flight procedures for normal, abnormal and emergency operations.

A critical situation occurs when the aircraft, in landing configuration (full flaps, gear down) approaches the Go Around decision altitude with batteries already at their lowest state of charge for normal operations (i.e. minimum regular SoC described in the overview section). For example, at the point of initiation of go-around, the battery may be discharged to lower than the critical reserve SoC. In this situation, the pilots must be able to safely execute the Go Around and divert to the alternate airport, even if in the RES one combustion engine or generator fails.

A RES failure will only become apparent after 20-30 seconds (or even up to or beyond 60 seconds) into the Go Around manoeuvre: the system has started all combustion engines, however, one engine or one generator has not come online. In order to avoid excessive 'startle & surprise' and excessive workload in already a challenging manoeuvre, the applicable procedure can be designed, based on following principles:

- The normal procedure for RES powered flight and the abnormal procedure for RES powered flight are 'as similar as possible'.
- The initial Go Around procedure (when a system failure is not apparent), must be as close as possible to a Go Around procedure as executed on existing (fossil fuel) aircraft, since this is how pilots are typically being trained.
- When the failed state of the RES becomes apparent (one combustion engine or generator not online), this does not require any change in pitch or power setting. Only a change in heading is acceptable (e.g. within 15 degrees heading change) in case an alternative Missed Approach and climb must be flown to ensure obstacle clearance.

According to implementations, control system is configured to: receive an indication of the operational state of the reserve energy system; and control the flight director to display: a first attitude corresponding to a first flight path when the detected operational state of the reserve energy system is a first operational state; and a second attitude corresponding to a second flight path when the detected operational state of the reserve energy system is a second operational state, wherein the second attitude is different from the first attitude, wherein the first operational state is a state in which all engines and generators are operational, and the second operational state is a state in which one of the engines and/or one of the generators is not operational.

For example, the flight director 210 gathers the metrics from the hybrid energy system 100 including the operational status of the engines 121 and generators 122. The initiator 240 may be operated to carry out the GA procedure described in the overview section, which may include climb, cruise, descent, approach, diversion and/or go around procedures. Based on the operational status of the engines 121 and/or generators 122 after initiation of an abnormal procedure, the flight director 210 determines a first flight path or a second flight path. The flight director 210 then displays a first attitude corresponding to the first flight path or a second attitude corresponding to the second flight path on the attitude indicator depending on which path has been determined. The first flight path is determined in normal procedures for battery powered flight or normal procedures for RES powered flight. The second flight path is determined for abnormal procedures for RES powered flight. In the example flight director described with reference to Figure 3, the first attitude can be displayed on the flight director as a first set of command bars 253a and the second attitude can be displayed on the flight director as a second set of command bars 253b. Figure 3 shows both sets of command bars for illustrative purposes to show two different possibilities. However, in practice only one set is shown at a time. The scale and position of the command bars is exaggerated for illustrative purposes.

The first flight path is one which can be maintained only if the fuel-based energy system is fully operational (meaning that it is operational to the extent that all engines and generators are operational and capable of normal maximum continuous power output). The first flight path cannot be maintained in the event of a failed state of the fuel-based energy system. The second flight path is one which can be maintained in the event of a failed state of the fuel-based energy system. As will be described when discussing sizing of the RES, the RES may be able to complete the second flight path without supplementary power from the battery (for the largest RES size) but in some cases a smaller RES size is proposed such that the second flight path can be completed only if power to the propulsors is supplemented from the rechargeable battery system 110. The failed state is defined as a state of operation of the fuel-based energy system in which one of the engines or one of the generators is not operational following an attempt to initiate power generation with all engines and generators. The second flight path includes a lower climb rate, and/or adjusted descent rate, and/or lower altitude, and/or adjusted speed compared with the first flight path.

Between initiation of the operation of the fuel-based energy system 120 and detection of the operational status of the fuel-based energy system, the flight director 210 displays a precautionary attitude on the attitude indicator 250 (e.g. in the form of command bars as shown in Figure 3) or provides the precautionary attitude to the autopilot. The precautionary attitude is the second attitude (e.g. requiring a lower climb rate). In other words, between the initiation of operation and the detection of the operational state of the reserve energy system, the flight director is configured to display an attitude which can be maintained when the electric motors are powered by the reserve energy system alone if the reserve energy system is in the second operational state, optionally wherein the attitude is the second attitude. Thus, the aircraft is controlled to maintain the second (failed RES) flight path until the pilot can confirm the operational status of the RES. Only after confirming that the RES is fully operational does the flight director display an attitude corresponding to the first flight path. This ensures that the workload on the pilot is reduced and any startle and surprise is minimised in the event that the flight director commands the second flight path.

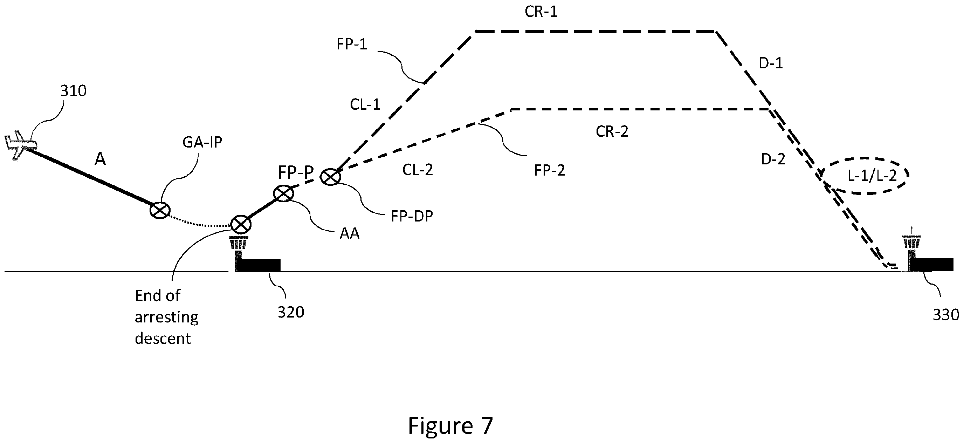

Figure 7 illustrates a bifurcated flight path for a GAMADA procedure - in contrast with the flight path shown Figures 6a and 6b, which are model procedures, the flight path of Figure 7 is one that is to be flown by the aircraft. That is, whereas Figure 6 relates to a theoretical flight path for the most critical situation for the purposes of calculation of the critical reserve SoC, Figure 7 relates to a process to be followed in actual flight. In other words, Figure 7 relates to a method of operating an aircraft in flight. Figures 6a, 6b and 7 are provided for illustrative purposes only and are not to scale.

Figure 7 shows a schematic of an aircraft 310 approaching an original destination airport 320 on an approach path [A] having flown during normal procedure on rechargeable battery power alone. The schematic shows altitude on the vertical axis and ground distance on the horizontal axis.

The aircraft 310 includes any of the hybrid energy systems described herein including a rechargeable battery and a reserve energy system (or RES or fuel-based energy system), for example the hybrid energy system 100 described with reference to Figure 1. The aircraft also includes any of the controllers described herein, including, for example, a pilot interface and/or autopilot for controlling the aircraft, such as the pilot interface 200 described with reference to Figure 2, including an attitude indicator/flight director, such as that described with reference to Figure 3.

Referring to Figure 7, landing the aircraft 310 at the original destination airport 320 is not possible and a decision to initiate go-around is made at go-around initiation point GA-IP. The GA procedure includes diversion to an alternative destination airport 330, for example the GA procedure is a GAMADA procedure as described herein. Go-around is initiated at go-around initiation point GA-IP by, for example, the pilot operating a go-around actuator in the cockpit such as a button on the throttle lever.

The go-around initiation may trigger the operation of the fuel-based energy system depending on the state of charge of the rechargeable batteries 111. For example, go-around initiation may trigger the operation of the fuel-based energy system 120 only if the state of charge of the rechargeable batteries 111 is below the critical reserve SoC at the point of go-around initiation. For GAMADA procedures, the critical reserve SoC is calculated according to the method described with reference to Figure 6b. However, the procedure described with reference to Figure 7 is not limited to those in which the critical reserve SoC is calculated according to Figure 6b. The critical reserve SoC adopted for the procedure described with reference to Figure 7 could also be calculated according to the procedure described with reference to Figure 6a. In any case, Figure 7 assumes that the RES is activated at the go-around initiation point GA-IP and this can optionally be due to the state of charge of the battery being below the critical reserve SoC, whether that is calculated according to Figure 6a or Figure 6b.

Before initiation of operation of the reserve energy system, the control system is arranged to cause the rechargeable battery alone to power the electric motors. Here, 'alone' means without any supplementary power supplied by the reserve energy system.

There is a time gap between the go-around initiation point GA-IP and detection of the operational state of the fuel-based energy system 120 by control system (e.g. including the flight director 210). For example, the time taken for the RES to come online may be e.g., 20-30 seconds, or up to 60 seconds. The detection of operational state of the RES may coincide with the time at which the RES is online (i.e. reaches minimum normal working temperature) but the present disclosure is not limited thereto. During the time gap, the flight director 210 indicates a precautionary attitude for following a precautionary flight path [FP-P] which corresponds to a climb gradient of a second flight path FP-2 that will be adopted if the fuel-based energy system 120 is operating in a failed state. The pilot or autopilot adopts the precautionary attitude in order to follow the precautionary flight path [FP-P] until at least a flight path decision point FP-DP. During the time gap - that is, until the operational status of the RES has been determined - the rechargeable batteries alone power flight.

Figure 7 depicts the aircraft reaching the acceleration altitude AA before the flight path decision point FP-DP. In this case, a climb gradient is adopted up till the acceleration altitude AA and a different climb gradient corresponding to the precautionary attitude is adopted up until the flight path decision point FP-DP. The climb gradient up to the acceleration altitude is typically higher than the second climb gradient. In other implementations the RES status may be determined earlier, and the flight path decision point FP-DP can (but does not necessarily need to) occur before the end of the climb to the acceleration altitude AA. In that case, the precautionary attitude corresponds to the first climb gradient up to the acceleration altitude AA and then corresponds to the second flight path FP-2 thereafter.

Between initiation of operation and detection of the operational state of the reserve energy system at the flight path decision point FP-DP, the control system is arranged to cause the rechargeable battery alone to power the electric motors, wherein 'alone' means without any supplementary power supplied by the reserve energy system.

Following detection of the first operational state of the reserve energy system (i.e. fully operational state or non-failed state), the control system is arranged to cause the reserve energy system alone to power the electric motors, wherein 'alone' means without any supplementary power supplied to the electric motors by the rechargeable battery. The control system may additionally be arranged to cause the reserve energy system to charge the rechargeable battery during this time.

Whereas, following detection of the second operational state of the reserve energy system (i.e. failed state as described herein), the control system is arranged as follows:

- The power supplied to the motor is equal to the required power to fly the minimum climb gradient at the minimum power speed.
- When the aircraft is climbing at lower than a second threshold altitude, to cause the reserve energy system alone to power the electric motors and optionally to charge the rechargeable battery.
- When the aircraft is climbing above the second threshold altitude, to cause the rechargeable battery and the reserve energy system (together) to power the electric motors.

Here, the second threshold altitude is higher than the first threshold altitude (e.g. at which the operation of the reserve energy system is established and/or when the RES comes online) and lower than (or in some cases equal to) a maximum altitude (e.g. cruise altitude) of the second flight path.

If the go-around procedure is initiated below the acceleration altitude, the aircraft climbs to the acceleration altitude at the standard climb rate prescribed by the aviation authorities (e.g. 2.7%). Then, when in clean configuration, at the flight path decision point FP-DP, the aircraft crew (or autopilot) can verify whether the RES is fully operational or operating in failed state. This verification can take place below acceleration altitude or above it. The aircraft crew (or autopilot) can act on the verification to adopt the first flight path FP-1 or second flight path FP-2 at the flight path decision point FP-DP.

Depending on operational status of the RES, either the normal procedure for RES powered flight (the first flight path FP-1) or the abnormal procedure for RES powered flight (the second flight path FP-2) is adopted from the flight path decision point onwards. At the flight path decision point FP-DP the flight director 210 then elects one of a first flight path FP-1 or a second flight path FP-2 to the alternative destination airport 330 depending on the assessment of the operational status of the RES.

The first flight path FP-1 includes a first climb path CL-1 with a first climb gradient, a first cruise path CR-1 for level flight once the aircraft 310 has reached a first cruise height, a first descent path D-1 for descending to the alternative destination airport 330, and, optionally, a first loiter path L-1 for circling overhead at the alternative destination if required before landing. The second flight path FP-2 includes a second climb path CL-2 with a second climb gradient, a second cruise path CR-2 for level flight once the aircraft 310 has reached a first cruise height, a second descent path D-1 for descending to the alternative destination airport 330, and, optionally, a second loiter path L-2 for circling overhead at the alternative destination if required before landing. The first climb gradient is steeper than the second climb gradient and the first cruise height is greater than or the same as the second cruise height. The gradients of the first descent path D-1 and second descent path D-2 may be similar or identical. The first loiter path L-1 and second loiter path L-2 may be similar or identical.

Upon detection of a fully operational state of the RES 120, the flight director 210 indicates an attitude corresponding to the first climb gradient. By contrast, upon detection of a failed state of the RES 120, the flight director 210 indicates an attitude corresponding to the second climb gradient. The aircraft then adopts the respective indicated attitude (via pilot control or autopilot control) and proceeds to follow the respective corresponding flight path to the alternative destination airport.

Once the acceleration altitude has been passed and the aircraft is in clean configuration, the precautionary attitude is the same attitude as that corresponding to the second climb gradient. Before passing the acceleration altitude, the precautionary attitude corresponds to the standard climb gradient (e.g. 2.7%) for climb to the acceleration altitude. In other words, the precautionary flight path FP-P follows the normal flight path up to the acceleration altitude AA and then the second flight path up to the decision point FP-DP. This avoids increasing the workload on the pilot(s) in the case of failed state of the fuel-based energy system 120.

The second flight path FP-2 is flown with the aircraft 310 powered by the fuel-based energy system 120 in failed state. As described herein, the rechargeable batteries 111 can be used supplement the RES power for at least a portion of the second climb path CL-2. The remainder of the second flight path FP-2 may be flown with the aircraft powered by both the rechargeable batteries (for example discharging beyond the critical reserve SoC or even beyond the minimum regular SoC, even down as far as the minimum RES online SoC or minimum useful SoC) and the fuel-based energy system operating in failed state. Alternatively, once cruise altitude is achieved, the remainder of the second flight path may be flown with the aircraft powered by the rechargeable batteries alone or the fuel-based energy system alone.

Table 1 summarises an example of the GAMADA procedure in two cases: normal procedure for RES powered flight (i.e. following the first flight path FP-1 when all engines and generators are operative) and the abnormal procedure for RES powered flight (i.e. following the second flight path FP-1 in the failed state) in accordance with Figure 7.

Table 1

| GA procedure | |
|---|---|
| **Normal procedure for RES powered flight** | **Abnormal procedure for RES powered flight (one engine or generator inoperative)** |
| GO-AROUND INITIATION | GO-AROUND INITIATION |
| • Press GA button. Flight Director switches to GA mode and shows required pitch (and wings level or roll if deviating from runway heading)<br>• Set GA climb power or AutoThrottle sets climb power, at a level that can be maintained during climb in case one | • Press GA button. Flight Director switches to GA mode and shows required pitch (and wings level or roll if deviating from runway heading)<br>• Set GA climb power or AutoThrottle sets climb power, at a level that can be maintained during climb in case one |
| reserve energy system component is inoperative | reserve energy system component is inoperative |
| INITIAL CLIMB TO ACCELERATION ALTITUDE | INITIAL CLIMB TO ACCELERATION ALTITUDE |
| • Select flaps approach<br>• When positive climb is confirmed, select gear up<br>• At acceleration altitude, select flaps up<br>• Verify reserve energy system status | • Select flaps approach<br>• When positive climb is confirmed, select gear up<br><br>• At acceleration altitude, select flaps up<br>• Verify reserve energy system status |
| CLIMB TO DIVERSION CRUISE ALTITUDE BEFORE FP-DP (IF FP-DP IS AFTER REACHING AA) | CLIMB TO DIVERSION CRUISE ALTITUDE BEFORE FP-DP (IF FP-DP IS AFTER REACHING AA) |
| Follow precautionary flight path - maintain minimum climb gradient for obstacle clearance or fly alternative specially developed airport procedures | Follow precautionary flight path - maintain minimum climb gradient for obstacle clearance or fly alternative specially developed airport procedures |
| CLIMB TO DIVERSION CRUISE ALTITUDE AFTER FP-DP | CLIMB TO DIVERSION CRUISE ALTITUDE AFTER FP-DP |
| (In case of fully operational reserve energy system)<br>• Fly published Missed Approach and SID procedures and maintain required climb gradient | (In case of partly in-operational reserve energy system)<br>• Continue to the climb as before FP-DP Fly published procedure profiles and maintain minimum climb gradient for obstacle clearance or fly alternative specially developed airport procedures |
| CRUISE TO ALTERNATE | CRUISE TO ALTERNATE |
| • Cruise at planned diversion altitude | • Cruise at lowest feasible altitude, considering obstacle clearance |
| HOLDING | HOLDING |
| • At speed for lowest power required | • At speed for lowest power required |

That is, in the normal procedure for RES powered flight, at the flight path decision point or shortly after, the pilot sets full (or required) power (e.g. pushes the go-around initiator to second dent to get full (or required) power available from all reserve energy combustion engines and generators), sets climb rate at or beyond minimum required climb rate for missed approach to meet the climb rate for the first climb path and SID to alternate and flies published missed approach/SID.

In the abnormal procedure for RES powered flight: the pilot maintains current attitude and power settings (i.e.

those of the precautionary flight path [FP-P]), flies the Missed Approach/SID procedure according to profile (without considering altitude restrictions) or flies an alternative specially designed procedure to ensure obstacle clearance (similar to specially designed procedures that are common for twin-engine aircraft that do not meet SID-required climb gradients in case of OEI).

The procedures described with reference to Figure 7 allow reduced sizing of the RES because the power requirements for its most critical situation (a GAMADA procedure) are minimised by adopting a different flight path of lower climb gradient and optionally a lower cruise altitude. In the following description, the sizing considerations and designs for reduced sizing are described in more detail, including by use of the batteries to support flight when the RES is operating in failed state.

In terms of communication between the hybrid power system 100 and the control system during the procedures described with reference to Figures 6-9, when operation of the RES is initiated in response to a command from the control system, the RES detects an operational status (for example at the earliest possible time after RES initiation). An operational status of the RES can be detected via sensors recording a power output of each of the engines and/or each of the generators. The RES then sends a signal indicating an operational status of the RES to the control system. Several sensors in the RES detect operational temperature, core RPM, torque and other parameters of the RES engines and/or other components of the RES. When these parameters are all indicating that threshold values have been reached, a signal is sent to the control system. Otherwise, regular sensor readings are sent to the control system and the control system determines when the sensor readings indicate that the RES has reached the threshold operating status.

### *Sizing of the fuel-based energy system and rechargeable battery system*

The RES can be designed such that it has *minimum weight,* while fulfilling the requirements for a worst-case scenario. These reserve requirements include two elements:

- Energy requirements, depending on factors like the distance to the alternate airfield, required loiter time above airfields in case of congestion, etc.
- Power requirements, depending on e.g. speed, climb rate, etc.

Energy requirements determine the weight of fuel and fuel systems, while power requirements determine the weight of the combustion engines, generators and thermal management system. As will be explained herein, fuel and fuel system weight are a small fraction of the total RES weight. This implies that the system weight is predominantly determined by the *power* requirements. The required maximum continuous rated shaft power of the combustion engines, and derived from that the maximum continuous rated generator power and thermal management maximum heat reject, drive system weight. This implies that these required powers must be minimal in order to achieve minimum system weight.

The required maximum power of the RES can be expressed as a fraction of the maximum continuous power provided by all electric motors in normal (battery powered) operations. This is the maximum continuous power provided in climb. Also, the system must be redundant and therefore at least 2 combustion engines and at least 2 generators must be present, where one combustion engine or generator could fail, and the required system still performs according to the design requirements.

A method of calculating a minimum possible RES size (in terms of power) is now provided with reference to Figures 8a and 8b. Figures 8a and 8b are plots of power and state of charge vs aircraft altitude for the climb phase of a flight path illustrated in Figure 7. In particular, Figures 8a and 8b are based on the climb portion CL-2 of the second flight path FP-2 described with reference to Figure 7.

Figures 8a and 8b each show a second model procedure for calculating the size of the RES in terms of maximum continuous power output. A left-hand vertical axis 801 indicating power (increasing from bottom to top of the graph), a right-hand vertical axis 802 indicating battery state of charge (increasing from bottom to top of the graph), and a horizontal axis 803 representing altitude (increasing from left to right of the graph). The second model procedure includes climb from a first threshold altitude TA1 (which can be the first threshold altitude used in the first model procedure described herein), through a second threshold altitude TA2 up to a diversion cruise altitude DCA. The climb is assumed to be uniform from the first threshold altitude TA1 to the cruise diversion altitude DCA.

The second model procedure depicted in Figures 8a and 8b represents a part of a model flight path that can be used to size the RES in terms of maximum continuous power output. The model flight path includes the climb from the first threshold altitude TA1 to the diversion cruise altitude DCA, cruise at the diversion cruise altitude DCA, descent, loiter above the destination alternate for 30 minutes at 1500 ft, and landing and taxi at the destination alternate.

In Figures 8a and 8b, a first power plot 810 represents the power available from the RES in failed state during the climb. As shown, the power available from the RES decreases with increasing altitude. A second power plot 820 represents the power required to maintain the climb gradient. As shown, the power required to maintain the climb gradient increases with increasing altitude. The first power plot and second power plot are derivable from the specifications of the RES and the most critical conditions for which the RES and the aircraft including the RES are certified.

A state of charge plot 830 represents the state of charge of the battery during the climb phase CL-2 described with reference to Figure 7. For the state of charge plot 830, since altitude during the climb phase CL-2 increases in direct proportion to time, the gradient indicates rate of charging (positive gradient) or rate of discharging (negative gradient).

Indicated on the horizontal axis 803 is the diversion cruise altitude DCA of cruise phase CR-2 described with reference to Figure 7, at which the climb phase CL-2 ends, and the first threshold altitude TA1 at which the RES comes online. Also indicated on the horizontal axis 803 is a second threshold altitude TA2, which marks the altitude at which there is a cross-over between the first power plot 810 and second power plot 820. That is, the second threshold altitude TA2 represents the altitude at which the power available from the RES in failed state during the climb phase CL-2 is equal to the power required to maintain the climb gradient of climb phase CL-2. The climb gradient and diversion cruise altitude DCA are the minimum climb to cruise gradient and cruise altitude dictated by the respective air authorities for diversion to a destination alternate in the jurisdiction in which the aircraft is certified to operate (e.g. ANAC (Brazil), EASA (EU), FAA (US), or TCCA (Canada)). That is minimum climb gradient for use in the first and second model procedures is a minimum climb gradient from acceleration altitude to diversion cruise altitude set by certifying authorities for the aircraft. The minimum cruise altitude is determined by local situation (e.g. mountains) at the airports for which the aircraft is designed. Therefore, the first and second model procedures are set by the minimum climb gradients as dictated by the relevant certifying authorities and minimum altitudes as determined by local airport procedures. The local airport procedures are determined by the designer of the RES or aircraft as those relating to the airports for which the aircraft is designed. For example, the designer may determine the minimum cruise altitude as that which covers 90%, 95%, 99% or even all of the airports in the jurisdiction or region for which the aircraft has been designed or is to be certified (and no higher cruise altitude than that). This is an implementational choice that the designer must make to balance the need to minimise the size of the RES and to produce an aircraft that can operate typical procedures most of the time for most of the airports at which the aircraft may be operated. Example minimum climb gradients are 1%, 1.3%, 1.7%, 2%, 2.3%, 2.7%, 3.0%, 3.3%, 3.7%, or 4.0%. Example minimum cruise altitudes are 6000 ft, 7000 ft, 8000 ft, 9000 ft, 10000 ft, 11000 ft, 12000 ft, 13000 ft, 14000 ft, 15000 ft, 16000 ft, 17000 ft or 18000 ft.

According to the second model procedure depicted in Figures 8a and 8b, the battery is used during the climb phase CL-2 as follows. Up to the second threshold altitude, the battery can be charged by the RES as shown in the state of charge plot 830. The rate of charge decreases with increasing altitude as the surplus power available from the RES (total power available from the RES in failed state minus the power required to maintain climb gradient) decreases with increasing altitude. At the second threshold altitude TA2, there is no more surplus power available from the RES and charging of the battery by the RES ceases. Beyond the second threshold altitude TA2, the power from the RES alone is no longer sufficient to maintain the required climb gradient. Therefore, battery power is used to supplement the power available from the RES in failed state. The amount of supplementary power required from the battery to address the RES deficit (i.e. the deficit of power available from the RES in failed state compared with power required for climb) increases with increasing altitude above the second threshold altitude. Therefore, the rate of discharge of the battery to supplement the RES must increase with increasing altitude above the second threshold altitude TA2. The power available from the battery at min RES online SoC, must be at least equal to the RES power deficit at the diversion cruise altitude DCA (shown on Figure 8 as Pdef).

Therefore, in more general terms, the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude

For the purposes of the RES sizing calculations, and as parameters used in the second model procedure, the aircraft is assumed to begin flying the model flight path: (i) with the maximum landing weight; (ii) at a climb speed established in connection with normal landing procedures, but not more than 1.4 VSR; and (iii) with landing gear retracted.

The required RES energy for completing the second model procedure sizes the volume of fuel but does not size the engines and generators, which dominate the mass contribution to the RES. If the model flight path is completed with any supplementary power from the battery, then the stored fuel in the RES can be reduced from that required to complete the second model procedure (i.e. to fly the model flight path). Therefore, the RES can be designed so that the energy deliverable by the reserve energy system (which is e.g. based on the volume of fuel in the fuel supply of the RES) at the beginning of the model flight path is equal to or less than the energy required to complete the diversion procedure.

In implementations, the RES is sized between having a maximum highest power in failed state and having a minimum lowest power in failed state. These maximum highest and lowest boundaries for the RES power minimum both refer to a maximum continuous power output of the RES at sea level at 15 degrees Celsius in standard atmospheric conditions. The actual maximum continuous power output from the RES at any given altitude varies as described with reference to Figures 8a and 8b and this is taken into account in the second model procedure.

The maximum RES sizing power in failed state is set such the RES power deficit Pdef at the diversion cruise altitude DCA is zero such that no supplementary power from the battery is needed during the climb phase CL-2 all the way up to and including the cruise altitude. In this case, the second threshold altitude TA2 is equal to the diversion cruise altitude DCA.

According to the second model procedure depicted in Figure 8a, the minimum RES sizing power in failed state is such that the RES power deficit Pdef at the diversion cruise altitude DCA is equal to the power available from the battery at minimum RES online SoC (which can be as low as min useful SoC) as defined herein. The minimum RES online SoC can be the same as that used to calculate the critical reserve SoC. In this case, the RES power sizing and hence second threshold altitude TA2 is set such that this condition holds. If at the beginning of the climb phase CL-2 the battery SoC is too low to be able to supplement the RES power to the required degree over the climb phase after above the second threshold altitude TA2 and up to diversion cruise altitude, then the RES can charge the battery during climb to the second threshold altitude TA2, though this is not otherwise essential. In the most critical case of lowest battery charge (e.g. min RES online SoC, which can be as low as min useful SoC) at the beginning of climb phase CL-2, then charging of the battery by the RES is performed at the maximum possible charging rate for the duration of the climb phase CL-2 up to the second threshold altitude TA2. The maximum possible charging rate is limited by the lower of the maximum possible charge rate of the battery and the surplus power available from the RES in failed state and the maximum possible charging rate can therefore decrease as power available from the RES in failed state decreases. That is, discharge of the rechargeable batteries 111 during the climb phase CL-2 of the second model procedure described with reference to Figure 7 allows the RES size to be reduced from the maximum highest RES sizing power. Flight during abnormal procedures for RES powered flight can rely on the combined power output levels available from the battery and the fuel-based energy system in failed state.

The inventors have also recognised that RES can be sized such that the power deficit Pdef is greater than zero but less than the Pdef for minimum RES sizing power in failed state. In other words, the RES can be sized between the maximum highest and minimum lowest boundaries as described above. This is achieved by supplementing the RES power during the climb phase CL-2 with at least some battery energy but not so much that the battery is depleted all the way to minimum RES online SoC. In this case, the battery can be charged by the RES before the second threshold altitude is reached or battery may simply have enough charge remaining to achieve charge at the min RES online SoC at the diversion cruise altitude without being charged by the RES during climb.

Thus, by sizing the RES based on the minimum climb rate to cruise and diversion cruise altitude of the second model procedure described with reference to Figure 8a, the power of the RES can be reduced or minimised. This in turn limits the weight of the RES and therefore reduces the overall weight of the aircraft (empty operating mass and maximum take-off mass) allowing increased range and/or increased efficiency.

The second model procedure described with reference to Figures 8a and 8b assumes a most critical scenario in which the battery power available at the first threshold altitude TA1 is equal to the minimum RES online SoC calculated as described with reference to the first model procedure. The difference between Figures 8a and 8b is that Figure 8a assumes that the min RES online SoC is equal to the min useful SoC.

A difference between Figure 8a and Figure 8b is therefore the starting point in relation to SoC of the battery at the beginning of the climb. In Figure 8b this is a higher SoC of the battery than in Figure 8a. The charging and discharging of the battery are shown in a first SoC plot 830a and second SoC plot 830b. Assuming the similar charging of the battery by the RES occurs in Figure 8b as shown in Figure 8a (i.e. charge up to the second threshold altitude TA2 and discharge from there up to the diversion cruise altitude), the RES can be sized to be even smaller than that calculated using the second model procedure shown in Figure 8a. This is because, between the second threshold altitude and the diversion cruise altitude DCA, the residual deep discharge energy (as defined in the Overview) can be used and therefore there can be a lower power requirement from the RES at the most critical point of climb at the diversion cruise altitude.

The SoC plots 830, 830a in Figures 8a and 8b are not limited to those shown. The designer of the RES may utilise a different charge and discharge profile in order to minimise or otherwise adjust the size (power) of the RES. Even though the battery SoC at the beginning of the climb (at the first threshold altitude TA1) is fixed by the certification requirements of the aircraft, the final SoC at the end of the climb can be varied depending on the charging and discharging characteristics of the battery and the design choice of the engineer designing the RES in accordance with the concepts and principles set out in the present disclosure. For example, the second SoC plot 830b in Figure 8b shows that the battery SoC at the first threshold altitude TA1 is the minimum RES online SoC and is charged by the RES to a higher SoC by the time the aircraft climbs to the second threshold altitude TA2. The battery is then discharged (as the aircraft climbs from the second threshold altitude TA2 up to the diversion cruise altitude DCA) to a SoC value lower than the SoC at the first threshold altitude TA1. The state of charge at the diversion cruise altitude DCA can be as low as the min useful SoC and can even be higher than the state of charge at the first threshold altitude, depending on the decision of the designer and/or the discharge profile that realises minimum size of the RES.

A figure of merit for sizing the RES is a ratio of the maximum electric power that the reserve system provides while partially failed, divided by the maximum total power of all electric motors. This ratio is the Reserve Power Ratio (RPR), defined in following way:

•    Reserve Power Ratio (RPR) = Reserve energy system max continuous power in failed state divided by Total electric motor max continuous power.

- Reserve energy system max continuous power in failed state = maximum continuous electric power that the system provides, while one combustion engine or generator is inoperative, at Sea Level and in International Standard Atmosphere (ISA) conditions.
- Total electric motor max continuous power = maximum continuous shaft power that all electric motors together can deliver (at Sea Level and International Standard Atmosphere (ISA) conditions).

By way of non-limiting example, the RPR once sized according to the methods described herein may be below 80%, optionally below 75%, optionally below 70%, optionally below 65%, optionally below 60%, optionally below 55%, optionally below 50%, optionally below 45%, optionally below 40%, optionally below 35%. The RPR may be above 15%, optionally above 20%, optionally above 25%, optionally above 30%, optionally above 35%.

***Overview of relationship between concepts***

The various concepts described in the present application, can be combined in various ways or used in isolation to minimise the weight of the hybrid power system and/or provide other improvements to battery-electric aircraft. Figure 9 depicts the concepts and their relation to one another; whether they relate to the battery and/or RES; and whether they are carried out or determined during manufacturing (which includes original manufacturing of the aircraft, modifying previously manufactured aircraft, or commissioning such aircraft), normal flight, and/or go-around. Concepts which overlap two categories (e.g. battery and RES) relate to both. Concepts joined by a line may depend on or draw parameters from each other (the direction of the arrow indicating the direction in which parameters calculated in one concept are passed on to calculate parameters in another concept). Concepts joined by a dashed line show an optional dependence and/or optional combination.

A first concept S10A is the determination of the min RES online SoC as described throughout the present disclosure and in particular with reference to the definition in the overview section and Figures 6a or 6b. A second concept S10B is the determination of the (e.g. minimum) RES size (for power) described throughout the present disclosure and in particular with reference to Figures 8a and 8b. The first concept S10A and second concept S10B are typically determined at the manufacturing stage.

A third concept S10C is the determination of the critical reserve SoC using the first model procedure as described throughout the present disclosure and in particular with reference to Figures 6a and 6b. The third concept S10C bases the calculation of the critical reserve SoC on the min RES online SoC determined when using the first concept S10A. The third concept S10C is based on a model go-around procedure but it is typically used during or before each flight. If used during the flight, the third concept S10C is used and or reused (for example in response to updated conditions) at any time up until initiation of the go-around procedure.

A fourth concept S10D is the determination, at the point of initiation of the go-around procedure, of whether or not to initiate operation of the RES in response to initiation of the go-around procedure as described throughout the present disclosure and in particular with reference to Figures 6a and 6b. The fourth concept S10D uses the critical reserve SoC determined using the third concept S10C.

A fifth concept S10E is the use of RES power alone up to the second threshold altitude and the combined use of the RES and battery power beyond the second threshold altitude up to the diversion cruise altitude as described throughout the present disclosure and in particular with reference to Figures 8a and 8b. The fifth concept may depend on the fourth concept, but the present disclosure is not limited thereto, and this concept can apply even if the RES is switched on automatically for every GA procedure or even if the RES is used during the GA procedure in any other way.

A sixth concept S10F is the use of a lower climb gradient during diversion to a destination alternate until the RES operational status has been determined as described throughout the present disclosure and in particular with reference to Figure 7. The sixth concept S10F can be used independently of, or together with, any of the other concepts including the second, fourth and fifth concepts S10B, S10D, S10E.

***DETAILED EXAMPLE DESIGNS***

A reserve energy system design optimisation process includes the following general steps:

1. Determine the required reserve specifications (e.g. distance to alternate airport, minimum cruise to diversion altitude, etc.), driven by applicable regulations and operational considerations.
2. Develop procedures to minimize power and energy usage to realize the reserve specifications. These procedures determine speeds and rates of climb in various phases of flight.
3. Size the reserve energy components by optimizing the power split between batteries and combustion engines across all phases of flight and considering abnormal situations like engine failure or generator failure.

The following description provides the theoretical background, including the applicable formulas for required power and energy in various phases of flight; the regulatory and operational requirements and specification (step 1 in the design approach); the flight procedures for normal and abnormal situations; the design optimization process; and details of a parametric design for given requirements and given flight procedures.

### *Theoretical background*

The following abbreviations, symbols and definitions may be useful.

BM = Battery Mass
DEP = Distributed Electric Propulsion
EM = Energy Mass (= BM in case of battery-electric aircraft)
EOM = Empty Operating Mass
MTOM = Maximum Take Off Mass
PLM = Payload Mass
PtL = Power to Liquid
RPK = Revenue Passenger Kilometer
RPR = Reserve Power Ratio
RPR-b = Reserve Power Ratio batteries
SAF = Sustainable Aviation Fuel
eSAF = Sustainable Aviation Fuel produced from electricity
L = Lift (N)
D = Drag (N)
E = Energy (J)
P = Power (Watt = Nm/s)
V = airspeed (m/s)
W = aircraft weight (N)
$\rho$ = air density (kg/m$^3$)
s = distance (m)
$S_{ref}$ = wing planform area (m$^2$)
$C_l$ = lift coefficient (dimensionless)
$C_d$ = drag coefficient (dimensionless)
$C_{d0}$ = 'zero lift' drag coefficient, representing the aircraft drag without drag due to lift
B = wingspan ('tip to tip') (m)
A = aspect ratio = $b^2/S_{ref}$ (dimensionless)
e = Oswald factor (dimensionless)
q = dynamic pressure = $1/2\ \rho V^2$
$\gamma$ = climb gradient (vertical speed divided by horizontal speed)
$\eta$ = efficiency

*Reserve Energy System (RES)* - a fuel-based energy system comprising:

1. Two or more combustion engines
2. Two or more generators
3. Fuel and fuel system
4. Extension of the thermal mgt system to provide cooling

*RES in failed state* = the RES with all except one engine or one generator operational.
*Reserve Power Ratio (RPR)* = Reserve energy system max continuous power in failed state divided by Total electric motor max continuous power.
*Reserve energy system max continuous power in failed state* = maximum continuous electric power that the system provides, while one combustion engine or generator is inoperative, at Sea Level and in International Standard Atmosphere (ISA) conditions.
*Total electric motor max continuous power (P)* = maximum continuous shaft power that *all* electric motors together can deliver (at Sea Level and International Standard Atmosphere (ISA) conditions).

### The basis - lift and drag formulas

Lift is the aerodynamic force working on the aircraft perpendicular to the airspeed. The lift formula is as follows:

$$L = W = C_l \, {}^1\!/_2 \, \rho V^2 S_{ref} \qquad (1)$$

The product $1/2\rho V^2$ is often referred to as 'dynamic pressure' and often replaced with the symbol q. The lift formula can be rewritten as expression of the lift coefficient in lift and dynamic pressure:

$$C_l = \frac{L}{q S_{ref}} \qquad (2)$$

The aircraft drag is the aerodynamic force, working opposite to the direction of airspeed. The drag formula is similarly defined as the lift formula:

$$D = C_d q S_{ref} \qquad (3)$$

Drag includes several components: e.g. skin friction drag (the air streaming along the aircraft skin), pressure drag (pressure difference between front end and back end of parts of the aircraft, wave drag (drag due to supersonic waves on part of the aircraft, etc. As approximation we consider two categories of drag, together representing the total drag:

1) 'zero lift drag': all drag components that the aircraft experiences while flying without generating any lift
2) 'drag due to lift': drag stemming from generating lift

This approximation allows the drag formula to be rewritten in following way:

$$C_d = C_{d0} + \frac{C_l^2}{\pi A e} \qquad (4)$$

The first part of this formula represents the 'zero lift drag', while the second part represents the 'drag due to lift'. Combining equation (3) and (4) results in following drag formula

$$D = C_{d0} q S_{ref} + \frac{C_l^2}{\pi A e} q S_{ref} = C_{d0} q S_{ref} + \frac{(W/_{S_{ref}})^2}{q \pi A e} S_{ref} \qquad (5)$$

This last formula will serve as a basis for deriving the formulas for required energy and power, with following key assumptions:

1. Thrust is parallel to flight direction V
2. Small climb gradient $\gamma \ll 1$, therefore $\sin \gamma \approx \tan \gamma \approx \gamma = (\mathrm{d}h/\mathrm{d}t)/V$, and $\cos \gamma \approx 1$
3. Constant propulsive efficiency, $\eta_p$
4. Constant climb gradient $\gamma \geq 0$
5. Constant aircraft weight, $\Delta W_{fuel}/W_{TO} \ll 1$
6. Symmetric drag polar, $\quad C_D = C_{D0} + C_L^2/\pi A e$

In straight and level flight (horizontal flight, no turns, no accelerations), the lift equals the weight and the engine thrust equals drag. The 'work' provided by the engines generating thrust, is defined as Force x Distance. The power provided by the engines is energy provided per second, equals Force x Speed. From equation (5) and replacing q by $1/2\rho V^2$, the power is expressed as:

$$P = DV = C_{d0} \, {}^1\!/_2 \, \rho V^3 S_{ref} + \frac{(W/_{S_{ref}})^2}{{}^1\!/_2 \rho V \pi A e} S_{ref} \qquad (6)$$

This formula shows that the power required for straight and level flight is a function of speed (V), altitude (air density $\rho$) and several aircraft design parameters which are invariant to speed and altitude (wing planform area $S_{ref}$, wing loading $W/S_{ref}$, zero lift drag coefficient $C_{d0}$, Aspect ratio A and Oswald factor e).

Equation (6) can be used to derive the speed at which the required power is minimal. At this minimum, the differential of P to V must be zero:

$$\frac{dP}{dV} = C_{d0} \, {}^3\!/_2 \, \rho V^2 S_{ref} - \frac{\left(W/_{S_{ref}}\right)^2}{{}^1\!/_2 \rho V^2 \pi A e} S_{ref} = 0 \tag{7}$$

Solving for V results in:

$$V = \sqrt[4]{\frac{4(W/_{S_{ref}})^2}{3\rho^2 C_{d0} \pi A e}} \tag{8}$$

Note that this formula defines the speed at which *the power required from the propulsors* is at a minimum. The power required *from the engines* is higher. The difference is the propulsive efficiency. Normally, according to the actuator disk theory, the propulsive efficiency is a function of the airspeed. However, in low-disk loading designs considered here, the propulsive efficiency does not vary that much. E.g. for the some of the detailed examples provided herein, the propulsive efficiency in climb (at low true airspeed) is ~85%, while in cruise at much higher TAS, this increases to 87%. Therefore, we consider propulsive efficiency as a constant. With this simplification, equation (8) can be used to determine the true airspeed for which the required engine shaft power is at a minimum.

The required energy for straight and level flight is drag times distance: D x S. The airspeed at which the energy is at a minimum is the airspeed at which the Drag is minimized. This is the airspeed at which the derivative of the Drag vs Airspeed equals zero:

$$\frac{dD}{dV} = C_{d0} \rho S_{ref} V - 4 \frac{\left(W/_{S_{ref}}\right)^2}{\rho \pi A e} S_{ref} V^{-3} = 0 \tag{9}$$

$$V = \sqrt[4]{4 \frac{\left(W/_{S_{ref}}\right)^2}{\rho^2 C_{d0} \pi A e}} \tag{10}$$

Comparing equation (10) with equation (8) shows that there is a fixed relationship between the speed for minimum power and the speed for minimum energy. The minimum energy speed is ~30% higher than the minimum power speed.

### Airspeed vs power and energy in climb

In climb at small angles, the 'work' provided by the propulsors is simply the sum of the work from horizontal flight (Thrust (= Drag) x Distance) plus the potential energy gained during climb (weight x height). This simplification is valid for climb angles up to 10 degrees, where cosine(gradient) is still above 0,98. The power required can also be expressed as the sum of the required power for straight and level flight plus the required power for climb. The latter is the derivative of weight x height, which is weight x vertical speed. Vertical speed is the climb gradient times the horizontal speed. Therefore, the required power in climb can be expressed as:

$$P = DV = C_{d0} \, {}^1\!/_2 \, \rho V^3 S_{ref} + \frac{(W/_{S_{ref}})^2}{{}^1\!/_2 \rho V \pi A e} S_{ref} + WV\gamma \tag{11}$$

Similarly, as in the situation of horizontal flight, we can derive the speed for which the power required is at a minimum, by determining the derivative of P to V and solving for zero.

$$\frac{dP}{dV} = C_{d0}\,{}^{3}\!/_{2}\,\rho V^{2} S_{ref} - \frac{\left({}^{W}\!/_{S_{ref}}\right)^{2}}{{}^{1}\!/_{2}\rho V^{2}\pi Ae} S_{ref} + W\gamma = 0 \tag{12}$$

Multiplying by $V^2$ gives following result:

$$C_{d0}\,{}^{3}\!/_{2}\,\rho S_{ref} V^{4} + W\gamma V^{2} - \frac{\left({}^{W}\!/_{S_{ref}}\right)^{2}}{{}^{1}\!/_{2}\rho\pi Ae} S_{ref} = 0 \tag{13}$$

Considering $V^2$ instead of $V$ as the value to solve for, this is a simple second order equation, solvable with the 'abc-formula':

$$a = C_{d0}\,{}^{3}\!/_{2}\,\rho S_{ref}$$

$$b = W\gamma$$

$$c = -\frac{\left({}^{W}\!/_{S_{ref}}\right)^{2}}{{}^{1}\!/_{2}\rho\pi Ae} S_{ref}$$

$$D = \sqrt{b^{2} - 4ac}$$

The airspeed at which the required propulsive power is at a minimum, is:

$$V = \sqrt{\frac{-b+D}{2a}} \tag{14}$$

$$V = \sqrt{\frac{W/S}{3\rho C_{D0}}\left(\sqrt{\gamma^{2} + \frac{12 C_{D0}}{\pi Ae}} - \gamma\right)} \tag{15}$$

Also here, like in the straight and level situation, we consider the propulsive efficiency independent from airspeed. Therefore, equation (15) also provides the airspeed for minimum engine power.

The airspeed for minimal energy can be derived in a similar way as the minimum energy airspeed in straight and level flight. Total energy required is drag (D) times distances plus potential energy at altitude. The latter is the product of weight (in Newton), distance and climb gradient.

$$E_{req} = Ds + Ws\gamma \tag{16}$$

Since in this equation only D is a function of airspeed, the airspeed for minimum energy usage in climb is equal to the airspeed for minimum drag. Therefore, the airspeed for minimum energy in climb equals the airspeed for minimum energy in straight and level flight, as given in equation (10).

### Available energy and power

In general, the power and energy available in the batteries depends on the state of charge and battery chemistry. Battery power tends to go down at low states of charge, however, the exact relationship between SoC and power differs per chemistry.

The turbine reserve energy system energy available depends on the amount of fossil fuel available and the turbine and generator efficiencies. The power available depends on the maximum continuous power of the turbine and generator available at sea level and the generator 'power lapse'; the reduction in power due to lower air density at altitude. This power lapse can be quantified as follows:

$$P_{alt} = P_{sea\ level} \left(\frac{\rho_{alt}}{\rho_{sea\ level}}\right)^{0.75} \tag{17}$$

### Dealing with powertrain efficiency losses

The formulas for required power and energy, derived in previous paragraphs, calculate the net power and energy that must be provided by the propulsors. In order to calculate required power and energy upstream in the power train, several efficiency losses must be considered. In case the propulsors are powered by the battery, there are following efficiency losses:

1. $\eta_{prop}$ Propulsive efficiency: aerodynamic efficiency of the propulsors when generating thrust. In this report estimated at 85%
2. $\eta_{mot}$ Motor & inverter efficiency: efficiency in the motor/inverter combination. In this report estimated at 95%
3. $\eta_{PMAD}$ Power Management and Distribution efficiency: efficiency of wiring, dc/dc converters, circuit breakers, etc. In this report estimated at 100%
4. $\eta_{batdis}$ Battery discharge efficiency. In this report estimated at 95%

For example, with above efficiency assumptions, the required battery energy is:

$$E_{bat} = E_{req} \left(\frac{1}{\eta_{prop}\eta_{mot}\eta_{prop}\eta_{batdis}}\right) = E_{req} \left(\frac{1}{0.85\ x\ 0,95\ x\ 1\ x\ 0.95}\right) = E_{req}\ x\ 1.3 \tag{18}$$

When using the combustion engine and generator, there is a different pathway from propulsors upstream to the combustion engine:

1. $\eta_{prop}$ Propulsive efficiency: aerodynamic efficiency of the propulsors when generating thrust. In this report estimated at 85%
2. $\eta_{mot}$ Motor & inverter efficiency: efficiency in the motor/inverter combination. In this report estimated at 95%
3. $\eta_{PMAD}$ Power Management and Distribution efficiency: efficiency of wiring, dc/dc converters, circuit breakers, etc. In this report estimated at 100%
4. $\eta_{GEN}$ Generator efficiency, including the efficiency of the rectifiers to provide DC current. In this report estimated at 95%

This implies that with these assumed efficiencies and when all power is delivered by the combustion engines, the combustion engine power is a factor of 1.3 higher than the required net power. When calculating the required energy from the fuel, the additional thermodynamic efficiency of the combustion engine must be taken into account, which in this report is estimated at 40%.

In case the combustion engine delivers more than the required power, the batteries will be charged. Later, this energy can be used by the propulsors. However, in this case the pathway involves extra battery charge and discharge losses. The energy pathway from propulsors upstream to the liquid fuel, including battery charge and discharge, must consider following efficiencies:

1. $\eta_{prop}$ Propulsive efficiency: aerodynamic efficiency of the propulsors when generating thrust. In this report estimated at 85%
2. $\eta_{mot}$ Motor & inverter efficiency: efficiency in the motor/inverter combination. In this report estimated at 95%
3. $\eta_{PMAD}$ Power Management and Distribution efficiency: efficiency of wiring, dc/dc converters, circuit breakers, etc. In this report estimated at 100%
4. $\eta_{batdis}$ Battery discharge efficiency. In this report estimated at 95%
5. $\eta_{batcha}$ Battery charge efficiency. In this report estimated at 95%
6. $\eta_{GEN}$ Generator efficiency, including the efficiency of the rectifiers to provide DC current. In this report estimated at 95%
7. $\eta_{therm}$ Combustion engine thermodynamic efficiency. In this report estimated at 40%

In this case, the total efficiency from 'tank to wake' is:

$$E_{fuel} = Ds\left(\frac{1}{\eta_{prop}\eta_{mot}\eta_{prop}\eta_{batdis}\eta_{batcha}\eta_{GEN}\eta_{therm}}\right) = Ds\left(\frac{1}{0.85x0,95x1x0.95x0.95x0.95x0.4}\right) \quad (19)$$

$$E_{fuel} = 3.6Ds \quad (20)$$

**Conclusions from equations**

Several conclusions can be drawn from these equations:

- Power Required depends on air speed, climb gradient, altitude and several aircraft-specific parameters (wing planform area, zero-lift drag coefficient, etc.).
- Energy Required is the integral of Power Required over time. Energy Required is predominantly driven by the required distance that must be covered through reserve energy.
- The speed for lowest power is lower than the speed for lowest energy. Some elements of the RES are sized by power requirements and some by energy requirements. Therefore, we must optimize speeds across the different phases of flight between the 'lowest power speed' and 'lowest energy speed'. Finding the right speeds in each flight phase will optimize the power split (power from batteries vs power from combustion engines) in each flight phase and subsequently minimizes system weight.
- When sizing the RES, we must take into consideration that ρ (air density) decreases with altitude. As a consequence, the minimum *required power increases,* while the *available* combustion engine power *decreases.* Therefore, diversion cruise altitude is an important design requirement.
- The exact power and energy pathways matter. Different pathways have different efficiencies, and these must be considered in designing the RES.

*Design requirements - overview*

There are three types of requirements for this RES:

1. Operator reserve energy requirements, as defined by EASA Rules for Air Operations
2. Certification requirements, as defined by EASA CS-25
3. Operator performance requirements, driven by operational considerations and guidance standards (e.g. ICAO PANS-OPS docs)

Note: this detailed design example focuses on regulations in Europe. In other regions, other regulations apply, however, there is a high similarity between EASA and FAA (USA) regulations and regulations in other countries are often derived from these two leading regulatory frameworks.

*Design requirements - EASA operator energy reserve requirements*

EASA Rules for Air Operations CAT OP MPA 180 and 181 prescribe the required fuel/energy that must be on board of an aircraft, prior to departing on its planned mission. Aircraft are required to carry sufficient fuel/energy for both the trip at hand and to cover diversions or other unplanned situations. The required fuel/energy includes the following elements:

- Taxi energy: amount required for startup and taxi
- Trip energy: amount required for trip from take-off to landing, calculated based on expected route and altitude
- Contingency energy: amount required to cover for unexpected extra trip fuel usage, e.g. due to head winds, less optimal routes, etc. Normally 5% of trip fuel
- Alternate energy: energy required in case of diversion to the alternate airport
- Final reserve energy: amount that covers a stay overhead the airfield at 1500 ft at minimum required power for 30 minutes (turbine engines)

Contingency energy and final reserve energy are clearly specified. However, there are no requirements that specify the amount of energy for the alternate reserve. This is determined by the actual distance between the destination airport and selected alternate airport. This differs for every flight and therefore reserve calculations must be made by the Operator for every flight. In some cases, alternate reserve may not be needed at all. E.g. when the destination has 2 or more runways and weather within 1 hr prior and 1 hr after planned arrival is above certain prescribed criteria, EASA allows flight operations without alternate energy.

In addition, EASA also distinguishes additional fuel, extra fuel and discretionary fuel reserves. These must be added for specific operations (e.g. isolated airfields) or specific circumstances (e.g. due to certain aircraft defects, the 'Minimum Equipment List' could prescribe that the aircraft is still flyable but extra reserves are required). For the purpose of this patent description, we will not take these into consideration. Accounting for these types of reserves when sizing the RES according to this patent can be done simply by increasing the alternate energy reserve (e.g. the amount of fuel stored by the RES).

### *Design requirements* - *EASA certification requirements*

The applicable EASA regulations that are sizing for RES power is the required climb gradient at Go Around. The present disclosure is applicable to all types of tube-and-wing design aircraft, but the concepts, implementations and methods are of particular relevance for CS25 aircraft. Example aircraft that are suitable to include the systems and to carry out the methods described in the present disclosure include any of the following:

Aircraft having: a maximum take-off mass 'MTOM' of at least 8,618 kg; and an electric range factor 'ERF' of at least 6, at least 6.5; at least 7; at least 7.5; at least 8; at least 8.5; or at least 9, wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

And/or aircraft having: an MTOM of at least 20,000, at least 40,000 at least 60,000 at least 80,000, or at least 100,000 kg, and/or a maximum payload mass 'PLM' of at least 3,000, at least 6,000, at least 9,000, at least 12,000, or at least 15,000 kg, and/or at least 50%; at least 60%; at least 70%; at least 80%; at least 90%; or at least 95% of the total mass of the rechargeable battery associated with a wing of the aircraft.

And/or aircraft having two or more combustion engines, optionally three or more, optionally four or more, optionally five or more, optionally six or more combustion engines; and/or two or more generators, optionally three or more, optionally four or more, optionally five or more, optionally six or more generators.

And/or aircraft having a reserve energy system that is a fuel-based energy system, optionally wherein the reserve energy system is a hydrocarbon-based or hydrogen fuel system, and/or wherein each combustion engine is a gas turbine engine.

For CS25 aircraft, two requirements are applicable: 119 and 121.

1. EASA CS25.119 In the landing configuration (All Engines Operating and flaps in landing position and gear down), the steady gradient of climb may not be less than 3.2%, with the engines at the power or thrust that is available 8 seconds after initiation of movement of the power or thrust controls from the minimum flight idle to the go-around power or thrust setting

2. EASA CS25.121(d) In a configuration corresponding to the normal all-engines-operating procedure (e.g. flaps in approach position instead of full down landing position) in which VSR for this configuration does not exceed 110% of the VSR for the related all-engines-operating landing configuration, the steady gradient of climb may not be less than 2.7% for four-engine aeroplanes, with

    a. The critical engine inoperative, the remaining engines at the go-around power or thrust setting
    b. The maximum landing weight
    c. A climb speed established in connection with normal landing procedures, but not more than 1.4 VSR
    d. Landing gear retracted

Note 1: the EASA regulations do not prescribe for how long the climb gradients must be maintained. This is understandable, as these requirements tend to size the power of the (fossil fuel) engines. For battery-electric aircraft, the Go Around power can be provided by a combination of battery power and RES power as described herein. In this situation (batteries at low state of charge), the combined battery and RES turbine power can only be provided for a limited time. AMC EASA CS25.143(b)(4) defines a Go Around maneuver until 1000ft above the go-around initiation altitude. In assessing whether the designed aircraft meets the specifications of EASA25.119 and 121, it is our interpretation that under normal operations, the required climb gradient must be maintained for a climb to 1000 ft above GA initiation altitude. For the abnormal procedure, we assume the initial climb gradient must be maintained up to acceleration altitude (300ft above GA altitude or 400ft above airfield, whichever is higher).

Note 2: EASA requires a climb gradient both for All Engines Operating (AEO) and One Engine Inoperative (OEI). This must be interpreted as 'All Propulsors Operating' and 'One Propulsor Inoperative'. This may also be applicable for 'one RES combustion engine inoperative', which must be clarified with EASA.

Note 3: For a battery-electric aircraft with Distributed Electric Propulsion and at least 6 propulsors, most likely EASA CS25.119 is sizing. We can assume that a 3.2% climb gradient with full flaps and gear down is more stringent than 2.7% gradient with flaps in approach position and gear up and one propulsor feathered.

Apart from specific regulations specifying go-around power, an (infamous) EASA general certification requirement applies: CS25.1309(b)(1) and (b)(3):

The aeroplane systems and associated components, considered separately and in relation to other systems, must be designed so that:

- Any catastrophic failure condition (i) is extremely improbable; and (ii) does not result from a single failure
- Any major failure condition is remote

A failure condition which would prevent continued safe flight and landing should be classified 'catastrophic'. The safety objectives associated with catastrophic failure conditions must be satisfied by demonstrating that: (1) No single failure will result in a catastrophic failure condition; and (2) Each catastrophic failure condition is extremely improbable. 'Extremely improbably' is defined as the chance of happening $< 10^{-9}$ per flight hour.

Next to catastrophic failures, EASA also defines failure states with lower impact and higher acceptable probability. E.g., a major failure is defined as: a failure conditions which would reduce the capability of the airplane or the ability of the crew to cope with adverse operating conditions to the extent that there would be, for example, a significant reduction in safety margins or functional capabilities, a significant increase in crew workload or in conditions impairing crew efficiency, or discomfort to the flight crew, or physical distress to passengers or cabin crew, possibly including injuries. The chance of an occurrence leading to a major failure condition should be 'remote' and remote is defined as $< 10^{-5}$ per flight hour.

Requirement 1309(b) effectively rules out a 'single engine/single generator' RES. There must be component redundancy to satisfy the criteria of 'any catastrophic failure condition does not result from a single failure'. 1309(b) also indicates that any major failure can only be accepted as long as the chance of happening is < 10 minus 5. This latter requirement may be relatively easy to satisfy, since the chance of a Go Around when batteries are at their lowest State of Charge for normal operations, in itself is expected to be at least smaller than 10 minus 3. Therefore, the RES can be designed in a way that component failure would be considered as 'major', reducing the capabilities of the aircraft, reducing safety margins and increase in pilot workload. In this situation, the requirements of CS25.119 do not apply. Note that this interpretation of current rules, including the expected likelihood of a GA as part of this probability assessment, still needs to be validated with EASA, since there are currently no regulations for the proposed RES of the present disclosure.

### Design requirements - other operational performance requirements

Next to EASA reserve energy requirements and EASA certification requirements, there are also other operational requirements that the Operator must meet for every individual flight. EASA Rules for Air Operations prescribe both general principles (e.g. 'verify the aircraft meets climb gradient as published by the airport Authority prior to each flight') and specific rules ('clearance of mountainous terrain must be at least 2000 ft').

Every airport publishes its own departure and arrival procedures, including procedures for Missed Approach. These also determine decision altitudes for Go Around, climb gradients driven by airspace structure, noise abatement or obstacles and safe minimum altitudes. ICAO PANS-OPS doc 8168 suggests that as a standard, an aircraft should have a climb gradient in clean configuration of at least 3.3% for Standard Instrument Departures. If any airport procedure requires a higher gradient, this must be specified on the published airport procedures. Especially in mountainous areas, the required climb gradients can be well above the standard and safe sector altitudes can reach up to several kilometres. EASA Rules for Air Operations CAT.POL.A prescribes that prior to each flight, the Operator should verify that the aircraft can meet the required performance for take-off and landing, given the actual weather, actual aircraft weight, CG, etc.

However, in case of a major failure, prescribed airport procedures will no longer be valid, except for obstacle clearance procedures. EASA CS25.121(c) requires a minimum climb gradient in One Engine Inoperative take off 4th segment climb (clean configuration) for a 4-engined aircraft of 1.7% until cruise altitude. EASA Rules for Air Operations AMC2 CAT.POL.A.225 suggests a climb gradient of at least 2.5% after missed approach, in missed approach configuration and one engine inoperative. If this cannot be achieved, GM1 CAT.POL.A.225 applies:

'Where an airplane cannot achieve the missed approach gradient specified in AMC2 CAT.POL.A.225, when operating at or near maximum certificated landing mass and in engine-out conditions, the operator has the opportunity to propose an alternative means of compliance to the competent authority demonstrating that a missed approach can be executed safely taking into account appropriate mitigating measures. The proposal for an alternative means of compliance may involve the following:

- considerations to mass, altitude and temperature limitations and wind for the missed approach;
- a proposal to increase the DA/H or MDA/H; and
- a contingency procedure ensuring a safe route and avoiding obstacles.'

For a battery-electric aircraft, the Operator has ample flexibility to meet obstacle requirements at relatively low levels (up to e.g. 2000 ft), since in the initial climb, a maximum power climb gradient can be realized by combining battery and RES power, even when one RES turbine is inoperative. This manoeuvre requires relatively little energy, which can be provided by the battery, even at a low state of charge (assuming a battery chemistry where voltage and power stay at healthy levels until ~5% SoC). However, mountainous terrain may require the Operator to take other operational precautions to guard a safe flight execution, e.g. increase the Go Around decision altitude.

***Proposed design requirements***

Following the regulations and operational considerations as discussed in the preceding passages of this disclosure, the following design requirements for a hybrid energy system according to the present disclosure are, in summary form, as follows:

- Energy reserve requirements

  ◦ Contingency reserve = 5% of trip energy = energy required for 40 - 50 km cruise flight at speed for lowest energy consumption per km.
  ◦ Alternate reserve = energy required for flight from Missed Approach Point at destination to landing at alternate airport. Since the distance to alternate depends on actual alternate selection, the design is based on a distance between destination and alternate of 150 km. Contingency and alternate energy combined covers a distance of ~200 km.
  ◦ Final reserve energy = energy required for 30 minutes loiter at destination airport at 1500 ft above the airport at minimum power speed.

- Climb gradient requirements

  ◦ For all engines/generators operative: an initial climb gradient of 3.2% in landing configuration (CS25.119) and 3.3% in clean configuration (ICAO PANS OPS)
  ◦ For one engine/generator inoperative: an initial climb gradient of 2.7% in climb configuration (CS25-121d) and 1.7% in clean configuration (CS25-121c)

- Altitude requirements

  ◦ Airfield elevation of destination and alternate airfield: sea level
  ◦ Decision altitude for go-around: balked landing 0ft
  ◦ For all engines/generators operative: acceleration altitude is 1000 ft (1000 ft above decision altitude) and cruise altitude to alternate 8000ft
  ◦ For one engine/generator inoperative: acceleration altitude: 500ft (500 ft above GA altitude) and cruise altitude to alternate 6500ft

- Battery requirements

  ◦ The battery State of Charge can be reduced by 8 percent points, from minimum SoC for normal operations to minimum SoC for abnormal operations
  ◦ The gross battery power (power provided by the battery to the electric system before battery discharge losses) during discharge is at least 66% of the maximum power of all electric motors in take-off. E.g., the maximum take-off shaft power is 13.6 MW. In the RES with design requirements as given in this paragraph, the batteries must provide a gross power of at least ~9 MW.

- System redundancy requirement

  ◦ A single component failure cannot lead to a catastrophic situation (CS25.1309). Therefore, there will be at least two combustion engines and at least two generators and the system must still be able to provide the required energy and power as specified by the abnormal procedure

- Flight procedure requirements

  ◦ Since aircraft performance differs depending on whether the RES is fully or partly operative, the pilots must operate the aircraft in different ways. This implies that the design must incorporate a flying procedure that allows pilots to operate the aircraft in a safe way under both a fully operational and a partially operational system and switching between these, without creating excessive workload.

Note: Most of these requirements are based on current interpretation of EASA rules. In later discussions with EASA these design requirements may be adapted. Three requirements are fully driven by Operator needs: (1) distance to alternate airport, (2) normal cruise altitude to alternate and (3) cruise to altitude with partially operating reserve system. These must be discussed with operators in a later phase. For this patent application, the above given requirements serve as reference values to illustrate the effect of smart optimization of the system components and operational procedures on total system weight.

***Detailed example design specification***

An example aircraft includes the following elements:

  1. Two or more combustion engines
  2. Two or more generators, either directly coupled one-on-one to the combustion engines or coupled via a coupling mechanism where engine 1 could power generator 2 and where the number of engines could be different from the number of generators
  3. Fuel and fuel system, redundant in piping and valves to avoid that a single component failure leads to trapped fuel
  4. An extension of the Thermal Management System in order to provide cooling to the generator and Power Management and Distribution components of the RES
  5. Usable battery reserve energy of at least 8 percent of State of Charge and providing a power of at least 66% of the maximum continuous power of all electric motors combined
  6. Flying procedures to optimize required power and energy for normally operating RES and for partially failed system (one combustion engine or one generator inoperative), allowing pilots to transition safely between normal and emergency procedures

Note 1: EASA CS 25.1309 explicitly states that a single component failure should not cause a catastrophic failure condition. This prohibits any solution having only 1 turbine and 1 generator. The simplest system that would satisfy CS25.1309 is a dual system: two turbines and two generators, where each turbine is connected to one individual generator. However, variants can also be considered. E.g. each turbine could be connected with both generators, in order to increase system reliability.

Note 2: More than two turbines could be used in a configuration where with n turbines and generators, n-1 should provide the minimum power required in an abnormal situation. This design could be lighter than the dual system, since the total power output of the dual system is twice as high as the minimum required, where the total power output of the multiple system is n/(n-1) higher than the required minimum power.

In order to optimize the design, we must determine the sizing conditions from the design requirements. The design requirements differ between a fully operational system and a partial operational system.

Under the condition that the system includes only 2 engines and 2 generators, the partial operational system requirements are sizing for the required power per engine and generator. For systems having a higher number of engines and generators, the full operational requirements will become sizing. Also, when there is a large difference between cruise altitudes to alternate between the normal and emergency requirements, the normal condition requirements may become sizing, however, this in practice will not happen as the difference in cruise altitudes is expected to be not more than ~4000 ft. A detailed analytical assessment for the cross-over point of which requirements become sizing is not included in this disclosure.

For fuel weight and fuel system sizing, also the partially operational system requirements are sizing, since the procedure for this situation requires you partly to fly at the 'lowest power airspeed', which is less energy efficient than the best energy airspeed.

The climb requirements to acceleration altitude ('initial climb') for both the normal operating system and the partially inoperative system are never sizing for the engine and generator power. The battery system can deliver the performance as specified by normal operating system requirements (the most stringent requirements). The required power and energy for this manoeuvre, in landing configuration and executed at the speed for lowest power consumption, can be calculated with the earlier presented formulas in Section 2. For an aircraft with MTOM of 75000 kg, battery mass of 35000 kg, maximum energy of 35 GJ (~10 MWh) and L/D of 12 in landing configuration at lowest power speed, the required net energy is <3% of total battery capacity and gross power provided by the batteries (accounting for battery discharge loss, engine loss and propulsive loss) should be around 9MW. This is a design requirement for the battery. Since the maximum gross battery energy for this example aircraft is ~15 MW (sized by the maximum power of the engines in take-off), it is expected that the required power can be delivered by the batteries, at a state of charge of around 8%. This assumption sets a clear requirement for battery power at low SoC. If this requirement cannot be met, optionally capacitors could be added to the RES to provide this peak power. Note that in the actual situation, the aircraft will *not* fly this manoeuvre solely on battery power and energy, however, this calculation indicates that it can be done and therefore it is not sizing for the engines and generators. Also, the requirements for loiter/holding will never be sizing for engine or generator power. This manoeuvre will always be executed at minimum power speed at low level without climb gradient, therefore with a lower required power than the climb power. This implies that the requirements for climb from acceleration altitude to cruise altitude and cruise flight to alternate for a partially inoperative system are sizing for the engine and generator.

When sizing the engine and generator power, two 'extreme cases' can be considered:

1. A profile with low cruise level and long distance to alternate. This profile would apply for e.g. operations in relatively flat terrain and weather patterns that can affect landing conditions in a large area. Northwest Europe is a good example of such area.

2. A profile with high cruise level and short distance to alternate. This profile would apply for e.g. operations in the Alpes, where a diversion to alternate requires you to climb above mountainous terrain and fly to a suitable alternate just across the other side of the mountain ridge.

In the first case, the engine and generator power is sized by the required power at cruise level. The power provided by the combustion engine in cruise can be lower than the required power, as some of the power can be provided by the battery. In this scenario, the optimal airspeed is a value between the minimum power speed and minimum energy speed. In the extreme case, the contribution of battery power and battery energy approaches zero as the total required energy becomes much larger than available battery energy.

In the second extreme case, the required engine and generator power is determined by how battery power and engine power can be smartly combined. In this case, the required power increases with altitude, while the power available from the combustion engine, reduces with altitude ('power lapse'). Therefore, batteries must be used in the best possible way to reduce total power required from the RES. The optimum can be reached when a procedure is followed whereby the combustion engine is operating at full power during the climb. At the start of the climb, the aircraft flies at lowest power speed and the combustion engine will deliver more than the required power and charges the battery. At a point in climb, where the power required is larger than the available combustion engine power, the aircraft will fly at the 'lowest energy climb speed' and the battery will discharge, providing energy and power to the electric motors. In this approach, the battery energy is optimized, however, the required battery power is increasing while the battery State of Charge approaches zero. This limitation must be considered and sets an additional design requirement for battery power at low SoC.

For a scenario in between these extreme cases, both optimization approaches must be combined. The calculations supporting this design example follow this combined approach. In these calculations, the use of batteries across the total flight profile is optimized in order to reduce maximum combustion engine power.

For given values of cruise altitude and distance to alternate, the optimization method includes the following steps:

1. Set input data, based on RES design requirements and aircraft data (mass, lift-drag polar, battery power and energy available, powertrain efficiencies, etc.)
2. Calculate minimum power and minimum energy indicated airspeeds in climb and cruise
3. For a given value of combustion engine power and cruise speed, calculate what would be total system weight, including fuel and possibly extra battery weight
4. Vary maximum continuous sea level power for the RES and cruise speed and optimize towards lowest system weight, including fuel and possible extra battery weight

*Parametric design*

An example parametric aircraft design is set out below. This aircraft includes a battery-electric power train, with following characteristics:

- MTOM: 75000 kg
- Electric motor maximum continuous power: 11.2 MW
- Battery mass: 35000 kg
- Battery usable energy density: 0.3 kW/kg
- Battery State of Charge % used for maneuver: 8% (of which 1.5% in initial Go Around, while combustion engines are starting)
- Drag assumptions: Cd0: 0.0135, Oswald factor: 0.79, symmetrical drag polar
- Efficiencies: propulsive = 85%, electric motor = 95%, PMAD = 100%, battery discharge = 95%, battery charge = 95%, generator is 95%, thermal efficiency combustion engine = 40%
- Sref = 150 m$^2$

The system size and weight has been determined for three sets of design requirements:

1. Base Case: design requirements as stated herein
2. Low altitude, long distance: diversion cruise altitude at 2000 ft and distance to alternate at 400 km. All other variables according to base case. This scenario close to the first extreme case as described above
3. High altitude, high climb gradient: diversion cruise altitude at 15000 ft and climb gradient 3.5%. Note that a steeper than EASA-required climb gradient is chosen to stay within the diversion distance of 200 km. All other variables according to base case. This scenario close to the second extreme case as described above

Table 2 below shows the resulting required combustion engine power, total system weight including fuel and RPR for these different design requirements:

Table 2

| | Base case | Low altitude, long distance | High altitude, high climb grade |
|---|---|---|---|
| diversion cruise altitude<br>distance to alternate<br>climb gradient | 6500 ft<br>200 km<br>1.7 degrees | 2000 ft<br>400 km<br>1.7 degrees | 15000 ft<br>200 km<br>3.5 degrees |
| Total Power two turbines (MW, sea level, ISA) | **9.9** | **8.4** | **15.9** |
| Reserve Power Ratio | **44%** | **37%** | **71%** |
| Reserve Power Ratio-batteries | **26%** | **24%** | **46%** |
| TOTAL SYSTEM WEIGHT (kg) | **5059** | **4986** | **7390** |
| TOTAL SYSTEM WEIGHT (kg) when RPR = 100% | 10319 | 10520 | 10320 |

Considering maximum electric motor continuous power as sizing for the RES and take into consideration CS25.1309 (no catastrophic failure caused by a single component failure), the system would be sized with two 11.2 MW turbines (RPR = 100%), leading to a total system weight of > 10.000 kg. The calculations presented in this table prove that combining batteries, combustion engines, generators, fuel and adapted procedures is a far better approach, leading to considerable weight savings in all scenarios.

*Default calculation and modelling criteria*

Unless stated otherwise (including instances referencing current or actual conditions), in the present disclosure all calculations, operations, procedures and models assume that the airfields (including original/target destination and destination alternate) are at sea level, approach assumes a standard Cat 1 ILS approach with 0 ft decision height both at original destination and destination alternate airports and weather according to ICAO standard atmosphere (no wind, 15 degrees C, air pressure 1013 mb). A notable exception is the first and second model procedures for calculating the critical reserve SoC and sizing the RES, respectively. As described with reference to these model procedures, the most critical conditions for which the aircraft is certified are used in those calculations. In the first model procedure, up to date conditions provided by various sources internal and external to the aircraft may replace the most critical conditions. Any ambiguities or missing information other than the assumptions described in this paragraph are to be resolved with reference to minimum EASA regulations for the aircraft (e.g. CS25 regulations for CS25 aircraft).

### *Implementation - general*

Among other things, the present invention may be implemented in whole or in part as a system, as one or more methods, as one or more elements of an aircraft or transportation system, as one or more elements or functional modules of an aircraft (flight) control system or regional aircraft transportation system control system, or as one or more devices. Implementations of the invention may take the form of a hardware implementation, a software implementation, or an implementation combining software and hardware aspects. For example, one or more of the operations, functions, processes, or methods described herein for use in the flight control (or other form of control) of an aircraft or of a transportation system may be implemented by one or more suitable processing elements (such as a processor, microprocessor, CPU, controller, etc.) that is part of a client device, server, or other form of computing or data processing device/platform and that is programmed with a set of executable instructions (e.g., software instructions), where the instructions may be stored in a suitable data storage element. One or more of the operations, functions, processes, or methods described herein may be implemented by a specialized form of hardware, such as a programmable gate array, application specific integrated circuit (ASIC), or the like. The following detailed description is, therefore, not to be taken in a limiting sense. Any of the methods described in the present disclosure may be implemented on or executed on one or more controllers, a control system, one or more processors, a computer system, thereof connected with and configured to control the flight systems and/or reserve energy systems described herein.

There is therefore provided a processor or controller configured to perform any of the methods of control described throughout the present disclosure, or alternatively a processor or controller comprising one or more transitory or non-transitory computer-readable media storing instructions that when executed by the one or more processors cause the one or more processors or controllers to perform operations including any of the methods described throughout the present disclosure.

There is also provided one or more tangible or non-tangible, transitory or non-transitory computer-readable media storing computer-readable instructions that when executed by one or more processors or controllers, cause the one or more processors or controllers to perform operations including any of the methods described throughout the present disclosure.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components, processes or functions described in this application may be implemented as software code to be executed by a processor using any suitable computer language such as, for example, Java, JavaScript, C++ or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network. All references, including publications, patent applications, and patents, cited herein are hereby incorporated by reference to the same extent as if each reference were individually and specifically indicated to be incorporated by reference and/or were set forth in its entirety herein.

The use of the terms "a" and "an" and "the" and similar referents in the specification and in the following claims are to be construed to cover both the singular and the plural, unless otherwise indicated herein or clearly contradicted by context. The terms "having," "including," "containing" and similar referents in the specification and in the following claims are to be construed as openended terms (e.g., meaning "including, but not limited to,") unless otherwise noted.

Recitation of ranges of values herein are merely indented to serve as a shorthand method of referring individually to each separate value inclusively falling within the range, unless otherwise indicated herein, and each separate value is incorporated into the specification as if it were individually recited herein. All methods described herein can be performed in any suitable order unless otherwise indicated herein or clearly contradicted by context. The use of any and all examples, or exemplary language (e.g., "such as") provided herein, is intended merely to better illuminate implementations of the invention and does not pose a limitation to the scope of the invention unless otherwise claimed. No language in the specification should be construed as indicating any non-claimed element as essential to each implementation of the present invention.

Different arrangements of the components depicted in the drawings or described above, as well as components and steps not shown or described are possible. Similarly, some features and subcombinations are useful and may be employed without reference to other features and subcombinations. Implementations have been described for illustrative and not restrictive purposes, and alternative implementations will become apparent to readers of this patent. It will be appreciated by those skilled in the art that various modifications and alterations could be made to disclosure above without departing from the broad inventive concepts thereof. Some of these have been discussed above and others will be apparent to those skilled in the art. It is understood, therefore, that this invention is not limited to the particular implementations disclosed, but it is intended to cover modifications within the spirit and scope of the present disclosure, as set forth in the appended claims.

Also described herein are the following numbered embodiments:

Embodiment 1a. A control system for an aircraft, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
the control system configured to:
initiate operation of the reserve energy system when a go-around procedure has been initiated only if a state of charge determined at the point of initiation of the go-around procedure is lower than an upper threshold SoC.

Embodiment 2a. The control system of embodiment 1a, wherein the control system is further configured to determine the upper threshold SoC by:

determining a first model procedure including a part of the go-around procedure, the first model procedure ending with a final climb from zero altitude to a first threshold altitude at a minimum climb gradient specified by a certifying authority for the aircraft for climb to acceleration altitude;
determining a total state of charge depletion of the battery from the start to the end of the first model procedure;
determining a lower threshold SoC at which the battery power output is sufficient to maintain the climb at the minimum climb gradient at the first threshold altitude; and
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Embodiment 3a. The control system of embodiment 2a, wherein the first model procedure comprises:
an initial climb from sea level to the first threshold altitude at a minimum climb gradient determined by a certifying authority for the aircraft for climb to acceleration altitude followed by the part of the go-around procedure, followed by the final climb from zero altitude to the first threshold altitude.

Embodiment 4a. The control system of embodiment 2a or 3a, wherein the part of the go-around procedure includes either:

a missed approach and reattempt at landing at the original destination; or
a missed approach followed by a diversion to a destination alternate, followed by an attempted landing at the destination alternate.

Embodiment 5a. The control system of embodiment 1a, wherein:

if the determined state of charge is below the upper threshold SoC, the control system is arranged to cause the reserve energy system to at least partially power the propulsors for at least part of the initiated go-around procedure, and
if the state of charge is at or above the upper threshold SoC, the control system is arranged to cause the rechargeable battery alone to power the propulsors for the duration of the go-around procedure.

Embodiment 6a. The control system of any preceding embodiment, wherein the upper threshold SoC is greater than or equal to the minimum state of charge recommended for normal operation of the rechargeable battery.

Embodiment 7a. The control system of any preceding embodiment, wherein the control system includes a user interface, and

following the initiation of operation of the reserve energy system, the control system is arranged to receive an indication of the operational state of the reserve energy system and control the user interface to output:

a first attitude corresponding to a first flight path when the detected operational state of the reserve energy system is a first operational state; and

a second attitude corresponding to a second flight path when the detected operational state of the reserve energy system is a second operational state, wherein the second attitude is different from the first attitude,

wherein the first operational state is a state in which all engines and generators are operational, and the second operational state is a state in which at least one of the engines and/or at least one of the generators is not operational.

Embodiment 8a. The control system of embodiment 7a, wherein the first and second flight paths are each based on climb, cruise, descent, approach, diversion, loiter and/or go-around procedures.

Embodiment 9a. The control system of embodiment 7a or 8a, wherein the second flight path includes a lower climb rate, and/or adjusted descent rate, and/or lower altitude, and/or adjusted speed compared with the first flight path.

Embodiment 10a. The control system of any of embodiments 7a-9a, wherein, between the initiation of operation and the detection of the operational state of the reserve energy system, the control system is arranged to cause the user interface to output an attitude which can be maintained when the electric motors are powered by the reserve energy system alone if the reserve energy system is in the second operational state, optionally wherein the attitude is the second attitude.

Embodiment 11a. The control system of any of embodiments 7a-10a, wherein, before initiation of operation of the reserve energy system, the control system is arranged to cause the rechargeable battery alone to power the electric motors, and/or

wherein between initiation of operation and detection of the operational state of the reserve energy system, the control system is arranged to cause both the reserve energy system and the rechargeable battery to power the electric motors.

Embodiment 12a. The control system of any of embodiments 7a-11a, wherein following detection of the first operational state of the reserve energy system, the control system is arranged to cause the reserve energy system alone to power the electric motors, and optionally to charge the rechargeable battery.

Embodiment 13a. The control system of any of embodiments 7a-12a, wherein following detection of the second operational state of the reserve energy system, the control system is arranged:

when the aircraft is climbing at lower than a second threshold altitude, to cause the reserve energy system alone to power the electric motors and to charge the rechargeable battery; and/or

when the aircraft is climbing at or above the second threshold altitude, to cause the rechargeable battery and the reserve energy system to power the electric motors,

optionally wherein the second threshold altitude is higher than the altitude at which the operation of the reserve energy system is initiated and lower than a maximum altitude of the second flight path.

Embodiment 14a. The control system of any preceding embodiment, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and $P_{maxM}$ is the combined maximum continuous shaft power of all electric motors,

optionally wherein the RPR is 75%, optionally below 70%, optionally below 65%, optionally below 60%, optionally below 55%, optionally below 50%, optionally below 45%, optionally below 40%, optionally below 35%.

Embodiment 15a. The control system of embodiment 14a, wherein the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude.

Embodiment 16a. The control system of embodiment 14a or 15a, wherein the maximum continuous power output of the reserve energy system at a second threshold altitude when all except one of the two or more combustion engines and/or one of the two or more generators are operative is equal to the power required to achieve a non-zero climb gradient for the aircraft at the second threshold altitude, wherein the second threshold altitude is greater than the acceleration altitude and lower than the minimum cruise altitude.

Embodiment 17a. The control system of any of embodiments 14a-16a, wherein the minimum cruise altitude is a minimum cruise altitude for diversion to a destination alternate determined by standard procedures relating to at least one airport for which the aircraft is certified; and/or the climb gradient is a minimum climb gradient from acceleration altitude to diversion cruise altitude for which the aircraft is certified.

Embodiment 18a. The control system of any of embodiments 14a-17a, wherein the aircraft is assumed to begin flying the model flight path:

(i) with the maximum landing weight;
(ii) at a climb speed established in connection with normal landing procedures, but not more than 1·4 VSR; and
(iii) with landing gear retracted.

Embodiment 19a. The control system of any of embodiments 14a-18a, wherein the energy deliverable by the reserve energy system at the beginning of the model flight path is equal to or less than the energy required to complete the diversion procedure.

Embodiment 20a. The control system of any of embodiments 14a-19a, wherein the model flight path includes climb, cruise, descent, and landing and taxi at the destination alternate.

Embodiment 21a. An aircraft comprising the control system of any preceding embodiment, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors.

Embodiment 22a. The aircraft of embodiment 21a, wherein the two or more combustion engines comprise three or more, optionally four or more, optionally five or more, optionally six or more, combustion engines, and/or
wherein the two or more generators comprise three or more, optionally four or more, optionally five or more, optionally six or more, generators.

Embodiment 23a. The control system of any preceding embodiment, wherein the reserve energy system is a fuel-based energy system, optionally wherein the reserve energy system is a hydrocarbon-based or hydrogen fuel system, and/or
wherein each combustion engine is a gas turbine engine.

Embodiment 24a. The control system of any preceding embodiment, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Embodiment 25a. The control system of any preceding embodiment, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Embodiment 1b. A method of controlling an aircraft, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
the method comprising:

determining a state of charge of the rechargeable battery at the point of initiation of a go-around procedure;
initiating operation of the reserve energy system when a go-around procedure has been initiated only if the state of charge determined at the point of initiation of the go-around procedure is lower than an upper threshold SoC.

Embodiment 2b. The method embodiment 1b, further comprising determining the upper threshold SoC by:

determining a first model procedure including a part of the go-around procedure, the first model procedure ending with a final climb from zero altitude to a first threshold altitude at a minimum climb gradient specified by a certifying authority for the aircraft for climb to acceleration altitude;
determining a total state of charge depletion of the battery from the start to the end of the first model procedure;
determining a lower threshold SoC at which the battery power output is sufficient to maintain the climb at the minimum climb gradient at the first threshold altitude; and
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Embodiment 3b. The method of embodiment 2b, wherein the first model procedure comprises:
an initial climb from sea level to the first threshold altitude at a minimum climb gradient determined by a certifying authority for the aircraft for climb to acceleration altitude followed by the part of the go-around procedure, followed by the final climb from zero altitude to the first threshold altitude.

Embodiment 4b. The method of embodiment 2b or 3b, wherein the part of the go-around procedure includes either:

a missed approach and reattempt at landing at the original destination; or
a missed approach followed by a diversion to a destination alternate, followed by an attempted landing at the destination alternate.

Embodiment 5b. The method of embodiment 1b, wherein:

if the determined state of charge is below the upper threshold SoC, the control system is arranged to cause the reserve energy system to at least partially power the propulsors for at least part of the initiated go-around procedure, and
if the state of charge is at or above the upper threshold SoC, the control system is arranged to cause the rechargeable battery alone to power the propulsors for the duration of the go-around procedure.

Embodiment 6b. The method of embodiment 1b, wherein the upper threshold SoC is greater than or equal to the minimum state of charge recommended for normal operation of the rechargeable battery.

Embodiment 7b. The method of any of embodiments 1b-6b, further comprising:

following the initiation of operation of the reserve energy system, receiving an indication of the operational state of the reserve energy system and outputting:

a first attitude corresponding to a first flight path when the detected operational state of the reserve energy system is a first operational state; and
a second attitude corresponding to a second flight path when the detected operational state of the reserve energy system is a second operational state, wherein the second attitude is different from the first attitude,

wherein the first operational state is a state in which all engines and generators are operational, and
the second operational state is a state in which at least one of the engines and/or at least one of the generators is not operational.

Embodiment 8b. The method of embodiment 7b, wherein the first and second flight paths are each based on climb, cruise, descent, approach, diversion, loiter and/or go-around procedures.

Embodiment 9b. The method of embodiment 7b or 8b, wherein the second flight path includes a lower climb rate, and/or adjusted descent rate, and/or lower altitude, and/or adjusted speed compared with the first flight path.

Embodiment 10b. The method of any of embodiments 7b-9b, further comprising, between the initiation of operation and the detection of the operational state of the reserve energy system, outputting an attitude which can be maintained when the electric motors are powered by the reserve energy system alone if the reserve energy system is in the second operational state, optionally wherein the attitude is the second attitude.

Embodiment 11b. The method of any of embodiments 7b-10b, further comprising, before initiation of operation of the reserve energy system, causing the rechargeable battery alone to power the electric motors, and/or
between initiation of operation and detection of the operational state of the reserve energy system, causing both the reserve energy system and the rechargeable battery to power the electric motors.

Embodiment 12b. The method of any of embodiments 7b-11b, further comprising, following detection of the first operational state of the reserve energy system, causing the reserve energy system alone to power the electric motors, and optionally to charge the rechargeable battery.

Embodiment 13b. The method of any of embodiments 7b-12b, further comprising, following detection of the second operational state of the reserve energy system:

when the aircraft is climbing at lower than a second threshold altitude, causing the reserve energy system alone to power the electric motors and to charge the rechargeable battery; and/or
when the aircraft is climbing at or above the second threshold altitude, causing the rechargeable battery and the reserve energy system to power the electric motors,
optionally wherein the second threshold altitude is higher than the altitude at which the operation of the reserve energy system is initiated and lower than a maximum altitude of the second flight path.

Embodiment 14b. The method of any of embodiments 1b-13b, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and $P_{maxM}$ is the combined maximum continuous shaft power of all electric motors, optionally wherein the RPR is 75%, optionally below 70%, optionally below 65%, optionally below 60%, optionally below 55%, optionally below 50%, optionally below 45%, optionally below 40%, optionally below 35%.

Embodiment 15b. The method of embodiment 14b, wherein the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude.

Embodiment 16b. The method of embodiment 14b or 15b, wherein the maximum continuous power output of the reserve energy system at a second threshold altitude when all except one of the two or more combustion engines and/or one of the two or more generators are operative is equal to the power required to achieve a non-zero climb gradient for the aircraft at the second threshold altitude, wherein the second threshold altitude is greater than the acceleration altitude and lower than the minimum cruise altitude.

Embodiment 17b. The method of any of embodiments 14b-16b, wherein the minimum cruise altitude is a minimum cruise altitude for diversion to a destination alternate determined by standard procedures relating to at least one airport for which the aircraft is certified; and/or the climb gradient is a minimum climb gradient from acceleration altitude to diversion cruise altitude for which the aircraft is certified.

Embodiment 18b. The method of any of embodiments 14b-17b, wherein the aircraft is assumed to begin flying the model flight path:

(i) with the maximum landing weight;
(ii) at a climb speed established in connection with normal landing procedures, but not more than 1·4 VSR; and
(iii) with landing gear retracted.

Embodiment 19b. The method of any of embodiments 14b-18b, wherein the energy deliverable by the reserve energy system at the beginning of the model flight path is equal to or less than the energy required to complete the diversion procedure.

Embodiment 20b. The method of any of embodiments 14b-19b, wherein the model flight path includes climb, cruise, descent, and landing and taxi at the destination alternate.

Embodiment 21b. The method of any of embodiments 1b-20b, wherein the two or more combustion engines comprise three or more, optionally four or more, optionally five or more, optionally six or more, combustion engines, and/or wherein the two or more generators comprise three or more, optionally four or more, optionally five or more, optionally six or more, generators.

Embodiment 22b. The method of any of embodiments 1b-21b, wherein the reserve energy system is a fuel-based energy system, optionally wherein the reserve energy system is a hydrocarbon-based or hydrogen fuel system, and/or wherein each combustion engine is a gas turbine engine.

Embodiment 24b. The method of any of embodiments 1b-23b, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Embodiment 25b. The method of any of embodiments 1b-24b, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Also described herein are the following numbered examples:

Example 1. An aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
wherein the maximum continuous power output of the reserve energy system at a minimum cruise altitude of a model flight path defined by a diversion procedure to a destination alternate when all except one of the two or more combustion engines and/or one of the two or more generators are operative is less than or equal to a minimum power required to achieve a non-zero climb gradient at the minimum cruise altitude.

Example 2. The aircraft of example 1, wherein the maximum continuous power output of the reserve energy system at a second threshold altitude when all except one of the two or more combustion engines and/or one of the two or more generators are operative is equal to the power required to achieve a non-zero climb gradient for the aircraft at the second threshold altitude, wherein the second threshold altitude is greater than the acceleration altitude and lower than the minimum cruise altitude.

Example 3. The aircraft of example 1 or 2, wherein the minimum cruise altitude is a minimum cruise altitude determined by standard procedures for the diversion to the destination alternate; and/or the minimum climb gradient is a minimum climb gradient from acceleration altitude to diversion cruise altitude, for which the aircraft is certified, optionally wherein the diversion to the destination alternate relates to at least one airport for which the aircraft is certified.

Example 4. The aircraft of any preceding example, wherein the aircraft is assumed to begin flying the flight path:

(i) with the maximum landing weight;
(ii) at a climb speed established in connection with normal landing procedures, but not more than 1.4 VSR; and
(iii) with landing gear retracted.

Example 5. The aircraft of any preceding example, wherein the energy deliverable by the reserve energy system at the beginning of the flight path is equal to or less than the energy required to complete the diversion procedure.

Example 6. The aircraft of any preceding example, wherein the flight path includes climb, cruise, descent, and landing and taxi at the destination alternate.

Example 7. The aircraft of any preceding example, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and $P_{maxM}$ is the combined maximum continuous shaft power of all electric motors, optionally wherein the RPR is below 75%, optionally below 70%, optionally below 65%, optionally below 60%, optionally below 55%, optionally below 50%, optionally below 45%, optionally below 40%, optionally below 35%.

Example 8. The aircraft of any preceding example, further comprising a control system including a user interface configured to output an attitude required to execute a given flight path;

wherein, following initiation of operation of the reserve energy system, the control system is arranged to receive an indication of an operational state of the reserve energy system and control the user interface to output:

a first attitude corresponding to a first flight path when the detected operational state of the reserve energy system is a first operational state; and

a second attitude corresponding to a second flight path when the detected operational state of the reserve energy system is a second operational state, wherein the second attitude is different from the first attitude,

wherein the first operational state is a state in which all engines and generators are operational, and the second operational state is a state in which one of the engines and/or one of the generators is not operational.

Example 9. The aircraft of example 8, wherein the first and second flight paths are each based on climb, cruise, descent, approach, diversion, loiter and/or go-around procedures.

Example 10. The aircraft of example 8 or 9, wherein the second flight path includes a lower climb rate, and/or adjusted descent rate, and/or lower altitude, and/or adjusted speed compared with the first flight path.

Example 11. The aircraft of any of examples 8-10, wherein, between the initiation of operation and the detection of the operational state of the reserve energy system, the control system is configured to cause the user interface to output an attitude which can be maintained when the electric motors are powered by the reserve energy system alone if the reserve energy system is in the second operational state, optionally wherein the attitude is the second attitude.

Example 12. The aircraft of any of examples 8-11, wherein, before initiation of operation of the reserve energy system, the control system is arranged to cause the rechargeable battery alone to power the electric motors, and/or wherein, between initiation of operation and detection of the operational state of the reserve energy system, the control system is arranged to cause the rechargeable battery alone to power the electric motors.

Example 13. The aircraft of any of examples 8-12, wherein following detection of the first operational state of the reserve energy system, the control system is arranged to cause the reserve energy system alone to power the electric motors, and optionally to charge the rechargeable battery.

Example 14. The aircraft of any of examples 8-13, wherein following detection of the second operational state of the reserve energy system, the control system is arranged:

when the aircraft is climbing at lower than a second threshold altitude, to cause the reserve energy system alone to power the electric motors and optionally to charge the rechargeable battery; and/or

when the aircraft is climbing above the second threshold altitude, to cause the rechargeable battery and the reserve energy system to power the electric motors,

optionally wherein the second threshold altitude is higher than the altitude at which the operation of the reserve energy system is initiated and lower than a maximum altitude of the second flight path.

Example 15. The aircraft of any of examples 1-7, further comprising a control system configured to:

initiate operation of the reserve energy system when a go-around procedure has been initiated only if a state of charge determined at the point of initiation of the go-around procedure is lower than an upper threshold SoC, optionally wherein the control system is configured to determine the upper threshold SoC by:

determining a first model procedure including a part of the go-around procedure, the first model procedure ending with a final climb from zero altitude to a first threshold altitude at a minimum climb gradient determined by a certifying authority for the aircraft for climb to acceleration altitude;

determining a total state of charge depletion of the battery from the start to the end of the first model procedure;

determining a lower threshold SoC at which the battery power output is sufficient to maintain the minimum climb gradient at the first threshold altitude;
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Example 16. The aircraft of example 15, wherein the first model procedure comprises:
an initial climb from sea level to the first threshold altitude at a minimum climb gradient from acceleration altitude to diversion cruise altitude, for which the aircraft is certified; followed by the part of the go-around procedure, followed by the final climb from zero altitude to the first threshold altitude at a minimum climb gradient from acceleration altitude to diversion cruise altitude for which the aircraft is certified,
optionally wherein the part of the go-around procedure includes either:

a missed approach and reattempt at landing at the original destination; or
a missed approach followed by a diversion to a destination alternate, followed by an attempted landing at the destination alternate.

Example 17. The aircraft of any preceding example, wherein the two or more combustion engines comprise three or more, optionally four or more, optionally five or more, optionally six or more, combustion engines, and/or wherein the two or more generators comprise three or more, optionally four or more, optionally five or more, optionally six or more, generators.

Example 18. The aircraft of any preceding example, wherein the reserve energy system is a fuel-based energy system, optionally wherein the reserve energy system is a hydrocarbon-based or hydrogen fuel system, and/or wherein each combustion engine is a gas turbine engine.

Example 19. The aircraft of any preceding example, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Example 20. The aircraft of any preceding example, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Example 21. A method for controlling an aircraft during the climb phase of a go-around procedure including diversion from an original destination to a destination alternate, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,

wherein the method comprises:

during a first portion of the climb, operating the reserve energy system alone to power the two or more electric motors,
during a second portion of the climb, operating the reserve energy system and the rechargeable battery to power the two or more electric motors.

Example 22. The method of example 21, wherein operating the reserve energy system during the first portion and/or second portion of the climb includes operating the reserve energy system in a state in which all except one of the two or more combustion engines and/or one of the two or more generators are operative.

Example 23. The method of example 21 or 22, further comprising, during the first portion of the climb, operating the reserve energy system to charge the rechargeable batteries.

Example 24. The method of example 21, 22 or 23, wherein the first portion of the climb is between a first threshold altitude and a second threshold altitude, and wherein the second portion of the climb is between the second threshold and a minimum cruise altitude.

Example 25. The method of example 24, wherein the maximum continuous power output of the reserve energy system at the minimum cruise altitude when all except one of the two or more combustion engines and/or one of the two or more generators are operative is less than or equal to a minimum power required to achieve a minimum climb gradient at the minimum cruise altitude.

Example 26. The method of example 24 or 25, wherein the maximum continuous power output of the reserve energy system at the second threshold altitude when all except one of the two or more combustion engines and/or one of the two or more generators are operative is equal to a minimum power required to achieve a minimum climb gradient for the aircraft at the second threshold altitude.

Example 27. The method of any of examples 24-26, wherein the minimum cruise altitude is a minimum cruise altitude determined by standard procedures for the diversion to the destination alternate; and/or the minimum climb gradient is a minimum climb gradient from acceleration altitude to diversion cruise altitude, for which the aircraft is certified, optionally wherein the diversion to the destination alternate relates to at least one airport for which the aircraft is certified.

Example 28. The method of any of examples 21-27, comprising flying the first portion of the flight path:

(i) with the maximum landing weight;
(ii) at a climb speed established in connection with normal landing procedures, but not more than 1.4 VSR; and
(iii) with landing gear retracted.

Example 29. The method of any of examples 21-28, wherein the energy deliverable by the reserve energy system at the beginning of the first portion of the climb is equal to or less than the energy required to complete the diversion procedure.

Example 30. The method of any of examples 21-29, further comprising operating the aircraft after the second portion of the climb to cruise, descend, and land and taxi at the destination alternate.

Example 31. The method of any of examples 21-30, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and
$P_{maxM}$ is the combined maximum continuous shaft power of all electric motors, optionally wherein the RPR is below 75%, optionally below 70%, optionally below 65%, optionally below 60%, optionally below 55%, optionally below 50%, optionally below 45%, optionally below 40%, optionally below 35%.

Example 32. The method of any of examples 21-31, further comprising:

initiating operation of the reserve energy system prior to the beginning of the first portion of the climb,
receiving an indication of an operational state of the reserve energy system,
operating the aircraft to adopt a first climb gradient in the first portion of the climb when the detected operational state of the reserve energy system is a first operational state; and
operating the aircraft to adopt a second climb gradient in the first portion of the climb when the detected operational state of the reserve energy system is a second operational state, wherein the second climb gradient is different from the first climb gradient,
wherein the first operational state is a state in which all engines and generators are operational, and
the second operational state is a state in which one of the engines and/or one of the generators is not operational.

Example 33. The method of example 32, wherein the second climb gradient is lower than the first climb gradient.

Example 34. The method of example 32 or 33, wherein the first portion of the climb begins upon or after detection of the second operational state of the reserve energy system.

Example 35. The method of example 34, further comprising, between the initiation of operation and detection of the operational state of the reserve energy system, controlling the aircraft to adopt the second climb gradient.

Example 36. The method of any of examples 32-35, further comprising:

before initiation of operation of the reserve energy system, causing the rechargeable battery alone to power the electric motors, and/or
between initiation of operation and detection of the operational state of the reserve energy system, causing the rechargeable battery alone to power the electric motors.

Example 37. The method of any of examples 32-36, further comprising, initiating operation of the reserve energy system when a go-around procedure has been initiated prior to the first portion of the climb only if a state of charge determined at the point of initiation of the go-around procedure is lower than an upper threshold SoC,
optionally further comprising determining the upper threshold SoC by:

determining a first model procedure including a part of the go-around procedure, the first model procedure ending with a final climb from zero altitude to the first threshold altitude at a reference minimum climb gradient determined by a certifying authority for the aircraft for climb to acceleration altitude;
determining a total state of charge depletion of the battery from the start to the end of the first model procedure;
determining a lower threshold SoC at which the battery power output is sufficient to maintain the reference minimum climb gradient at the first threshold altitude;
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Example 38. The method of example 37, wherein the first model procedure comprises:
an initial climb from zero altitude to the first threshold altitude at the reference minimum climb gradient, followed by the part of the go-around procedure, followed by the final climb from zero altitude to the first threshold altitude at the reference minimum climb gradient,
optionally wherein the part of the go-around procedure includes either:

a missed approach and reattempt at landing at the original destination; or
a missed approach followed by a diversion to a destination alternate, followed by an attempted landing at the destination alternate.

Example 39. The method of any of examples 21-38, wherein the two or more combustion engines comprise three or more, optionally four or more, optionally five or more, optionally six or more, combustion engines, and/or
wherein the two or more generators comprise three or more, optionally four or more, optionally five or more, optionally six or more, generators.

Example 40. The method of any of examples 21-39, wherein the reserve energy system is a fuel-based energy system, optionally wherein the reserve energy system is a hydrocarbon-based or hydrogen fuel system, and/or wherein each combustion engine is a gas turbine engine.

Example 41. The method of any of examples 21-40, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Example 42. The method of any of examples 21-41, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Example 43. A control system for an aircraft as defined in any of examples 21-42, the control system arranged to carry out the method defined in any of examples 21-42.

Example 44. An aircraft as defined in the method of any of examples 21-42 comprising the control system of example 43.

Also described herein are the following items:

Item 1a. A control system for an aircraft, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
the control system comprising:
a user interface configured to output an attitude required to execute a given flight path;
wherein, following initiation of operation of the reserve energy system, the control system is arranged to receive an indication of the operational state of the reserve energy system; and
control the user interface to output:

a first attitude corresponding to a first flight path when the detected operational state of the reserve energy system is a first operational state; and
a second attitude corresponding to a second flight path when the detected operational state of the reserve energy system is a second operational state, wherein the second attitude is different from the first attitude,

wherein the first operational state is a state in which all engines and generators are operational, and
the second operational state is a state in which one of the engines and/or one of the generators is not operational, and
between the initiation of operation and the detection of the operational state of the reserve energy system, the user interface is configured to output a precautionary attitude which can be maintained when the electric motors are powered by the reserve energy system alone if the reserve energy system is in the second operational state.

Item 2a. The control system of item 1a, wherein the first and second flight paths are each based on climb, cruise, descent, approach, diversion, loiter and/or go-around procedures.

Item 3a. The control system of item 1a or 2a, wherein the second flight path includes a lower climb rate, and/or adjusted descent rate, and/or lower altitude, and/or adjusted speed compared with the first flight path.

Item 4a. The control system of any preceding item, wherein the detection of the operational state of the reserve energy system takes place above an acceleration altitude, and/or
wherein the precautionary attitude is the second attitude.

Item 5a. The control system of any preceding item, wherein, before initiation of operation of the reserve energy system, the control system is arranged to cause the rechargeable battery alone to power the electric motors, and/or wherein, between initiation of operation and detection of the operational state of the reserve energy system, the control system is arranged to cause the rechargeable battery alone to power the electric motors.

Item 6a. The control system of any preceding item, wherein following detection of the first operational state of the reserve energy system, the control system is arranged to cause the reserve energy system alone to power the electric motors, and optionally to charge the rechargeable battery.

Item 7a. The control system of any preceding item, wherein following detection of the second operational state of the reserve energy system, the control system is arranged:

when the aircraft is climbing at lower than a second threshold altitude, to cause the reserve energy system alone to power the electric motors and optionally to charge the rechargeable battery; and/or
when the aircraft is climbing above the second threshold altitude, to cause the rechargeable battery and the reserve energy system to power the electric motors,
optionally wherein the second threshold altitude is higher than the altitude at which the operation of the reserve energy system is initiated and lower than a maximum altitude of the second flight path.

Item 8a. The control system of any preceding item, further configured to:

initiate operation of the reserve energy system when a go-around procedure has been initiated only if a state of charge determined at the point of initiation of the go-around procedure is lower than an upper threshold SoC, optionally wherein the control system is configured to determine the upper threshold SoC by:

determining a first model procedure including a part of the go-around procedure, the model procedure ending with a final climb from zero altitude to a first threshold altitude at a minimum climb gradient specified by a certifying authority for the aircraft for climb to acceleration altitude;
determining a total state of charge depletion of the battery from the start to the end of the first model procedure;
determining a lower threshold SoC at which the battery power output is sufficient to maintain the minimum climb gradient at the first threshold altitude;
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Item 9a. The control system of item 8a, wherein the first model procedure comprises:
an initial climb from sea level the first threshold altitude at a minimum climb gradient determined by a certifying authority for the aircraft for climb to acceleration altitude, followed by the part of the go-around procedure, followed by the final climb from zero altitude to the first threshold altitude,
optionally wherein the part of the go-around procedure includes either:

a missed approach and reattempt at landing at the original destination; or
a missed approach followed by a diversion to a destination alternate followed by an attempted landing at the destination alternate.

Item 10a. The control system of any preceding item, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and $P_{maxM}$ is the combined maximum continuous shaft power of all electric motors, optionally wherein the RPR is below 75%, optionally below 70%, optionally below 65%, optionally below 60%, optionally below 55%, optionally below 50%, optionally below 45%, optionally below 40%, optionally below 35%.

Item 11a. The control system of any previous item, wherein the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude.

Item 12a. The control system of item 11a, wherein the maximum continuous power output of the reserve energy system at a second threshold altitude when all except one of the two or more combustion engines and/or one of the two or more generators are operative is equal to the power required to achieve a non-zero climb gradient for the aircraft at the second threshold altitude, wherein the second threshold altitude is greater than the acceleration altitude and lower than the minimum cruise altitude.

Item 13a. The control system of item 11a or 12a, wherein the minimum cruise altitude is a minimum cruise altitude for diversion to a destination alternate determined by standard procedures relating to at least one airport for which the aircraft is certified and/or wherein the climb gradient is a minimum climb gradient from acceleration altitude to diversion cruise altitude for which the aircraft is certified.

Item 14a. The control system of item 11a, 12a or 13a, wherein the aircraft is assumed to begin flying the model flight path:

(i) with the maximum landing weight;
(ii) at a climb speed established in connection with normal landing procedures, but not more than 1.4 VSR; and
(iii) with landing gear retracted.

Item 15a. The control system of any of items 11a-14a, wherein the energy deliverable by the reserve energy system at the beginning of the model flight path is equal to or less than the energy required to complete the diversion procedure.

Item 16a. The control system of any of items 11a-15a, wherein the model flight path includes climb, cruise, descent, and landing and taxi at the destination alternate.

Item 17a. The control system of any preceding item, wherein the two or more combustion engines comprise three or more, optionally four or more, optionally five or more, optionally six or more, combustion engines, and/or
wherein the two or more generators comprise three or more, optionally four or more, optionally five or more, optionally six or more, generators.

Item 18a. The control system of any preceding item, wherein the reserve energy system is a fuel-based energy system, optionally wherein the reserve energy system is a hydrocarbon-based or hydrogen fuel system, and/or wherein each combustion engine is a gas turbine engine.

Item 19a. The control system of any preceding item, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Item 20a. The control system of any preceding item, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Item 21a. An aircraft comprising the control system of any preceding item.

Item 1b. A method for controlling an aircraft, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
the method comprising:

initiating operation of the reserve energy system upon initiation of a go-around procedure,
receiving an indication of the operational state of the reserve energy system; and
adopting a first flight path when the detected operational state of the reserve energy system is a first operational state; and
adopting a second flight path when the detected operational state of the reserve energy system is a second operational state, wherein the second flight path is different from the first flight path;
wherein the first operational state is a state in which all engines and generators are operational, and the second operational state is a state in which one of the engines and/or one of the generators is not operational, and
between the initiation of operation and the detection of the operational state of the reserve energy system, adopting a precautionary flight path which can be maintained when the electric motors are powered by the reserve energy system alone if the reserve energy system is in the second operational state.

Item 2b. The method of item 1b, wherein the first and second flight paths are each based on climb, cruise, descent, approach, diversion, loiter and/or go-around procedures.

Item 3b. The method of item 1b or 2b, wherein the second flight path includes a lower climb rate, and/or adjusted descent rate, and/or lower altitude, and/or adjusted speed compared with the first flight path.

Item 4b. The method of any of items 1b-3b, wherein the detection of the operational state of the reserve energy system takes place above an acceleration altitude, and/or
wherein the precautionary flight path is the second flight path.

Item 5b. The method of any of items 1b-4b, further comprising:

before initiation of operation of the reserve energy system, causing the rechargeable battery alone to power the electric motors, and/or
between initiation of operation and detection of the operational state of the reserve energy system, causing the rechargeable battery alone to power the electric motors.

Item 6b. The method of any of items 1b-5b, further comprising, following detection of the first operational state of the reserve energy system, causing the reserve energy system alone to power the electric motors, and optionally to charge the rechargeable battery.

Item 7b. The method of any of items 1b-6b, further comprising, following detection of the second operational state of the reserve energy system:

when the aircraft is climbing at lower than a second threshold altitude, causing the reserve energy system alone to power the electric motors and optionally to charge the rechargeable battery; and/or
when the aircraft is climbing above the second threshold altitude, causing the rechargeable battery and the reserve energy system to power the electric motors,
optionally wherein the second threshold altitude is higher than the altitude at which the operational state of the reserve energy system is detected and lower than a maximum altitude of the second flight path.

Item 8b. The method of any of items 1b-7b, further comprising:

initiating operation of the reserve energy system when a go-around procedure has been initiated only if a state of charge determined at the point of initiation of the go-around procedure is lower than an upper threshold SoC, optionally determining the upper threshold SoC by:

determining a first model procedure including a part of the go-around procedure, the model procedure ending with a final climb from zero altitude to a first threshold altitude at a minimum climb gradient specified by a certifying authority for the aircraft for climb to acceleration altitude;
determining a total state of charge depletion of the battery from the start to the end of the first model procedure;
determining a lower threshold SoC at which the battery power output is sufficient to maintain the minimum climb gradient at the first threshold altitude;
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

Item 9b. The method of item 8b, wherein the first model procedure comprises:
an initial climb from zero altitude to the first threshold altitude at a minimum climb gradient determined by a certifying authority for the aircraft for climb to acceleration altitude, followed by the part of the go-around procedure, followed by the final climb from zero altitude to the first threshold altitude,
optionally wherein the part of the go-around procedure includes either:

a missed approach and reattempt at landing at the original destination; or
a missed approach followed by a diversion to a destination alternate followed by an attempted landing at the destination alternate.

Item 10b. The method of any of items 1b-9b, wherein the aircraft has a Reserve Power Ratio "RPR" of below 80%, wherein:

$$RPR = \frac{P_{maxR}}{P_{maxM}} \times 100$$

wherein $P_{maxR}$ is the maximum continuous sea-level power output of the reserve energy system when all except one of the two or more combustion engines and/or one of the two or more generators are operative; and $P_{maxM}$ is the combined maximum continuous shaft power of all electric motors, optionally wherein the RPR is below 75%, optionally below 70%, optionally below 65%, optionally below 60%, optionally below 55%, optionally below 50%, optionally below 45%, optionally below 40%, optionally below 35%.

Item 11b. The method of any of items 1b-10b, wherein the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude.

Item 12b. The method of item 11b, wherein the maximum continuous power output of the reserve energy system at a second threshold altitude when all except one of the two or more combustion engines and/or one of the two or more generators are operative is equal to the power required to achieve a non-zero climb gradient for the aircraft at the second threshold altitude, wherein the second threshold altitude is greater than the acceleration altitude and lower than the minimum cruise altitude.

Item 13b. The method of item 11b or 12b, wherein the minimum cruise altitude is a minimum cruise altitude for diversion to a destination alternate determined by standard procedures relating to at least one airport for which the aircraft is certified and/or wherein the climb gradient is a minimum climb gradient from acceleration altitude to diversion cruise altitude for which the aircraft is certified.

Item 14b. The method of item 11b, 12b or 13b, wherein the aircraft is assumed to begin flying the model flight path:

(i) with the maximum landing weight;
(ii) at a climb speed established in connection with normal landing procedures, but not more than 1·4 VSR; and
(iii) with landing gear retracted.

Item 15b. The method of any of items 11b-14b, wherein the energy deliverable by the reserve energy system at the beginning of the model flight path is equal to or less than the energy required to complete the diversion procedure.

Item 16b. The method of any of items 11b-15b, wherein the model flight path includes climb, cruise, descent, and landing and taxi at the destination alternate.

Item 17b. The method of any of items 1b-16b, wherein the two or more combustion engines comprise three or more, optionally four or more, optionally five or more, optionally six or more, combustion engines, and/or
wherein the two or more generators comprise three or more, optionally four or more, optionally five or more, optionally six or more, generators.

Item 18b. The method of any of items 1b-17b, wherein the reserve energy system is a fuel-based energy system, optionally wherein the reserve energy system is a hydrocarbon-based or hydrogen fuel system, and/or
wherein each combustion engine is a gas turbine engine.

Item 19b. The method of any of items 1b-18b, wherein the aircraft has:

a maximum take-off mass 'MTOM' of at least 8,618 kg; and
an electric range factor 'ERF' of at least 6, at least 6.5; at least 7; at least 7.5; at least 8; at least 8.5; or at least 9,

wherein:

$$ERF = \left(\frac{L}{D}\right)\left(\frac{BM}{MTOM}\right)$$

wherein L/D is the lift-to-drag ratio of the aircraft and BM is the mass of the rechargeable batteries.

Item 20b. The method of any of items 1b-19b, wherein the aircraft has:

an MTOM of at least 20,000, at least 40,000 at least 60,000 at least 80,000, or at least 100,000 kg, and/or
a maximum payload mass 'PLM' of at least 3,000, at least 6,000, at least 9,000, at least 12,000, or at least 15,000 kg, and/or
at least 50%; at least 60%; at least 70%; at least 80%; at least 90%; or at least 95% of the total mass of the rechargeable battery associated with a wing of the aircraft.

Item 21b. A control system for an aircraft as defined in the method of any of items 1b-20b, the control system arranged to carry out the method defined in any of items 1b-20b.

Item 22b. An aircraft as defined in the method of any of items 1b-20b comprising the control system of item 21b.

**Claims**

1. A control system for an aircraft, the aircraft comprising:

two or more propulsors;
two or more electric motors, each electric motor configured to drive a corresponding propulsor;
a primary energy system comprising a rechargeable battery arranged to power the two or more electric motors; and
a reserve energy system comprising two or more combustion engines and two or more generators arranged to power the two or more electric motors,
the control system configured to:
initiate operation of the reserve energy system when a go-around procedure has been initiated only if a state of charge determined at the point of initiation of the go-around procedure is lower than an upper threshold SoC.

2. The control system of claim 1, wherein the control system is further configured to determine the upper threshold SoC by:

determining a first model procedure including a part of the go-around procedure, the first model procedure ending with a final climb from zero altitude to a first threshold altitude at a minimum climb gradient specified by a certifying authority for the aircraft for climb to acceleration altitude;
determining a total state of charge depletion of the battery from the start to the end of the first model procedure;
determining a lower threshold SoC at which the battery power output is sufficient to maintain the climb at the minimum climb gradient at the first threshold altitude; and
determining the upper threshold SoC, wherein the upper threshold SoC is the sum of the total state of charge depletion and the lower threshold SoC,
optionally wherein the first threshold altitude is determined based on the time taken for the reserve energy system to reach a threshold operational state following initiation of operation of the reserve energy system.

3. The control system of claim 2, wherein the first model procedure comprises:
an initial climb from sea level to the first threshold altitude at a minimum climb gradient determined by a certifying authority for the aircraft for climb to acceleration altitude followed by the part of the go-around procedure, followed by the final climb from zero altitude to the first threshold altitude.

4. The control system of claim 2 or 3, wherein the part of the go-around procedure includes either:

a missed approach and reattempt at landing at the original destination; or
a missed approach followed by a diversion to a destination alternate, followed by an attempted landing at the destination alternate.

5. The control system of any preceding claim, wherein:

if the determined state of charge is below the upper threshold SoC, the control system is arranged to cause the reserve energy system to at least partially power the propulsors for at least part of the initiated go-around procedure, and
if the state of charge is at or above the upper threshold SoC, the control system is arranged to cause the rechargeable battery alone to power the propulsors for the duration of the go-around procedure.

6. The control system of any preceding claim, wherein the upper threshold SoC is greater than or equal to the minimum state of charge recommended for normal operation of the rechargeable battery.

7. The control system of any preceding claim, wherein the control system includes a user interface, and

following the initiation of operation of the reserve energy system, the control system is arranged to receive an indication of the operational state of the reserve energy system and control the user interface to output:

a first attitude corresponding to a first flight path when the detected operational state of the reserve energy system is a first operational state; and
a second attitude corresponding to a second flight path when the detected operational state of the reserve energy system is a second operational state, wherein the second attitude is different from the first attitude,

wherein the first operational state is a state in which all engines and generators are operational, and the second operational state is a state in which at least one of the engines and/or at least one of the generators is not operational.

8. The control system of claim 7, wherein, between the initiation of operation and the detection of the operational state of the reserve energy system, the control system is arranged to cause the user interface to output an attitude which can be maintained when the electric motors are powered by the reserve energy system alone if the reserve energy system is in the second operational state, optionally wherein the attitude is the second attitude.

9. The control system of claim 7 or 8, wherein following detection of the second operational state of the reserve energy system, the control system is arranged:

    when the aircraft is climbing at lower than a second threshold altitude, to cause the reserve energy system alone to power the electric motors and to charge the rechargeable battery; and/or
    when the aircraft is climbing at or above the second threshold altitude, to cause the rechargeable battery and the reserve energy system to power the electric motors,
    optionally wherein the second threshold altitude is higher than the altitude at which the operation of the reserve energy system is initiated and lower than a maximum altitude of the second flight path.

10. The control system of any preceding claim, wherein the aircraft has a Reserve Power Ratio "RPR" of below 80%, wherein:

$$RPR = \frac{P_{maxR}}{P_{maxM}} \times 100$$

    wherein $P_{maxR}$ is the maximum continuous sea-level power output of the reserve energy system when all except one of the two or more combustion engines and/or one of the two or more generators are operative; and
    $P_{maxM}$ is the combined maximum continuous shaft power of all electric motors,
    optionally wherein the RPR is 75%, optionally below 70%, optionally below 65%, optionally below 60%, optionally below 55%, optionally below 50%, optionally below 45%, optionally below 40%, optionally below 35%.

11. The control system of claim 10, wherein the maximum continuous power output of the reserve energy system at a minimum cruise altitude of a model flight path determined by a diversion procedure to a destination alternate when all except one of the two or more combustion engines and/or one of the two or more generators are operative is less than or equal to a minimum power required to achieve a non-zero climb gradient at the minimum cruise altitude.

12. An aircraft comprising the control system of any preceding claim, the aircraft comprising:

    two or more propulsors;
    two or more electric motors, each electric motor configured to drive a corresponding propulsor;
    a primary energy system comprising a rechargeable battery arranged to power the two or more electric motors; and
    a reserve energy system comprising two or more combustion engines and two or more generators arranged to power the two or more electric motors.

13. A method of controlling an aircraft, the aircraft comprising:

    two or more propulsors;
    two or more electric motors, each electric motor configured to drive a corresponding propulsor;
    a primary energy system comprising a rechargeable battery arranged to power the two or more electric motors; and
    a reserve energy system comprising two or more combustion engines and two or more generators arranged to power the two or more electric motors,
    the method comprising:

determining a state of charge of the rechargeable battery at the point of initiation of a go-around procedure; initiating operation of the reserve energy system when a go-around procedure has been initiated only if the state of charge determined at the point of initiation of the go-around procedure is lower than an upper threshold SoC.

14. A control system for an aircraft as defined in the method of claim 13, the control system arranged to carry out the method of claim 13.

15. An aircraft as defined in the method of claim 13, comprising the control system of claim 14.

Figure 1

Figure 2

EP 4 656 521 A1

Figure 3

Figure 4

Figure 5

Figure 6a

EP 4 656 521 A1

Figure 6b

Figure 7

Figure 8a

TA1    First threshold altitude
TA2    Second threshold altitude
DCA    Diversion cruise altitude
$P_{def}$    Maximum RES deficit (RES deficit at DCA)

Battery state of charge

Power available from RES in failed state

Power required to maintain climb angle

Battery SoC

Min RES online SoC

Min useful SoC

Altitude

Power

$P_{def}$

801
802
803
810
820
830a
830b

TA1    TA2    DCA

Figure 8b

|  | Battery | RES |
|---|---|---|
| **Manufacture** | **S10A** Determine min RES online SoC | **S10B** Determine RES size based on min RES online SoC, min climb rate, and min DCA using 2nd model procedure |
| **Normal flight** | **S10C** Determine critical reserve SoC based on min RES online SoC using first model procedure | |
| **Go-around** | **S10D** During GA switch on RES only if battery below critical reserve SoC | **S10F** Fly diversion path according to failed state and only modify if RES is not in failed state |
| | **S10E** Fly with RES alone to threshold altitude/ Supplement with batteries above threshold altitude | |

Figure 9

EP 4 656 521 A1

Europäisches
Patentamt
European
Patent Office
Office européen
des brevets

## EUROPEAN SEARCH REPORT

**Application Number**

EP 24 17 9448

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 376 208 B1 (GENTRY NICHOLAS KRISTOFER [US]) 28 June 2016 (2016-06-28) * column 4 lines 44-46 column 7 lines 25-57 column 9 lines 60-67; figure 1 * ----- | 1,5,6, 12-15 | INV. B64D25/00 B60L58/12 B64D27/33 B64D31/18 B64D35/022 G05D1/85 |
| X | US 2022/243670 A1 (PARK SEONG IK [KR]) 4 August 2022 (2022-08-04) * paragraphs [0005], [0047], [0055]; figures 5,4 * ----- | 1,13,14 | ADD. B64D45/00 |
| X | US 2019/241274 A1 (HUNKEL PETER [DE]) 8 August 2019 (2019-08-08) * paragraphs [0056], [0059], [0060]; figure 1 * ----- | 1,13,14 | |
| A | CN 112 455 696 B (COMMERCIAL AIRCRAFT CORP CN ET AL.) 7 June 2022 (2022-06-07) * the whole document * ----- | 1 | |

TECHNICAL FIELDS
SEARCHED      (IPC)

B64D
G05D
B60L

The present search report has been drawn up for all claims

| Place of search | Date of completion of the search | Examiner |
|---|---|---|
| Munich | 5 November 2024 | Rippel, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 9448

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | | Publication date | Patent family member(s) | | Publication date |
|---|---|---|---|---|---|
| US 9376208 | B1 | 28-06-2016 | US | 9376208 B1 | 28-06-2016 |
| | | | US | 9771162 B1 | 26-09-2017 |
| US 2022243670 | A1 | 04-08-2022 | CN | 114834642 A | 02-08-2022 |
| | | | EP | 4035928 A1 | 03-08-2022 |
| | | | JP | 2022118694 A | 15-08-2022 |
| | | | KR | 20220111784 A | 10-08-2022 |
| | | | US | 2022243670 A1 | 04-08-2022 |
| | | | US | 2024183316 A1 | 06-06-2024 |
| US 2019241274 | A1 | 08-08-2019 | CN | 110116812 A | 13-08-2019 |
| | | | DE | 102018102525 A1 | 08-08-2019 |
| | | | EP | 3521172 A1 | 07-08-2019 |
| | | | ES | 2842977 T3 | 15-07-2021 |
| | | | IL | 264643 A | 30-05-2019 |
| | | | US | 2019241274 A1 | 08-08-2019 |
| CN 112455696 | B | 07-06-2022 | NONE | | |

EPO FORM P0459

For more details about this annex : see Official Journal of the European Patent Office, No. 12/82